# EUROPÄISCHE PATENTSCHRIFT

(11) **EP 0 657 731 B1**
(45) Veröffentlichungstag und Bekanntmachung des Hinweises auf die Patenterteilung: **14.04.1999**
(21) Anmeldenummer: 93120005.9
(22) Anmeldetag: 10.12.1993
(51) Int. Cl.: G01N 21/39, G01N 21/31

(54) **Verfahren und Vorrichtung zur Auswertung einer charakteristischen Absorption eines Stoffes**
Method & Apparates for determining characteristic absorption of a substance
Procédé et appareil pour déterminer une absorption caractéristique d'une substance

(43) Veröffentlichungstag der Anmeldung: 14.06.1995
(73) Patentinhaber: Riener, Karl Stefan, 4563 Micheldorf (AT)
(72) Erfinder: Riener, Karl Stefan, A-4563 Micheldorf (AT); Dollansky, Erich, D-86438 Kissing (DE)
(74) Vertreter: Turi, Michael, Dipl.-Phys.

(56) Entgegenhaltungen:
- EP-A- 0 197 917
- EP-A- 0 244 721
- EP-A- 0 318 752
- WO-A-89/12222
- WO-A-92/04614
- DE-A- 3 106 331

## Beschreibung

Die vorliegende Erfindung befaßt sich mit Verfahren zur Auswertung einer charakteristischen Absorption nach dem Oberbegriff des Anspruchs 1 mit einer Vorrichtung gemäß Oberbegriff des Anspruchs 11.

Auf vielen Gebieten ist die Schwächung einer Strahlung - Wellen- oder Korpuskularstrahlung - bei Wechselwirkung mit Materie die Grundlage für meßtechnische Anwendungen, wobei ein Teil der Strahlung absorbiert bzw. abgeschwächt wird. Der Rest wird reflektiert oder geht durch die Materie hindurch. Je nach der Beschaffenheit und Zusammensetzung der Materie wird nur Strahlung mit einer bestimmten Energie bzw. Wellenlänge vollständig absorbiert oder abgeschwächt. Die absorbierte Energie ist charakteristisch für die zu untersuchende Materie. Die Auswertung dieser charakteristischen Absorption erlaubt weitreichende Schlüsse auf die Beschaffenheit der beispielsweise durchstrahlten Materie: z.B. lassen sich beliebige Stoffe in einem Stoffgemisch mit hoher Genauigkeit nachweisen. Ferner kann aus der Höhe der Schwächung der charakteristischen Strahlung die Konzentration eines Stoffes in einem Stoffgemisch bestimmt werden.

Bei der elektronischen Auswertung eines durch charakteristische Absorption geschwächten Transmissions- bzw. Reflexionssignals ist insbesondere zwischen den Signalanteilen zu unterscheiden, die durch Störungen der Meßvorrichtung, insbesondere der Strahlungsquelle, oder durch die Absorption der untersuchten Materie verursacht werden. Bei bekannten Verfahren der eingangs genannten Art wird - insbesondere bei geringen Konzentrationnen der zu untersuchenden Materie - das Absorptionssignal häufig durch das Rauschen der Meßvorrichtung überlagert. Ein verbessertes Auflösevermögen kann dann nur unter erheblichem apparativen Aufwand erzielt werden.

Als Beispiel sei ein aus der EP 89 906 096.6 bekanntes Verfahren zur Konzentrationsbestimmung eines Gases in einem Gasgemisch genannt. Dabei wird das gepulste Licht eines Lasers, dessen Wellenlänge nach jedem Puls umgeschaltet wird, durch die Meßstrecke geschickt. Eine Wellenlänge bzw. Absorptionswellenlänge ist charakteristisch für ein Gas, dessen Konzentration zu bestimmen ist, die andere Wellenlänge ist nicht charakteristisch für irgend einen Stoff, der sich auf der Meßstrecke befindet. Der Lichtpuls, dessen Wellenlänge charakteristisch für ein ausgesuchtes Gas ist, wird auf der Meßstrecke durch die charakteristische Absorption leicht geschwächt.

Bei sehr niedriger Konzentration oder kurzen Meßstrecken wird das Nutzsignal jedoch so klein, daß es nicht mehr ausgewertet werden kann. Es geht im Rauschen des Gesamtsystems unter.

Neben den Rauschanteilen aus den Lichtdetektoren und der nachgeschalteten Elektronik, treten signifikante Rauschanteile aus der Laserstrahlung selbst auf. Abhängig vom Lasertyp kann dieser Rauschanteil mit erheblichem apparativen Aufwand minimiert werden, ganz auszuschließen ist er jedoch nie.

Als Rauschquellen im Laser kommen z. B. die Stromversorgung, Einfluß von Druck- bzw. Temperaturänderungen auf die Emission und der Einfluß der eventuell eingesetzten Laserkühlung auf die Emission in Betracht.

Ein Problem bei den bekannten Verfahren z. B. zur Bestimmung der Ammoniakkonzentration in Rauchgasen ist deren Empfindlichkeit - der sogenannten Querempfindlichkeit - gegenüber anderen Rauchgasbestandteilen. Insbesondere beim Einsatz in Müllverbrennungsanlagen besteht das Rauchgas aus vielen verschiedenen Stoffen. Vor allem die vielen verschiedenen Kohlenwasserstoffverbindungen aus der Kunststoffverbrennung führen zu einem breiten Stoffspektrum im Rauchgas.

Ziel der vorliegenden Erfindung ist es, die Störeinflüsse auf den Meßwert zu minimieren.

Dieses Ziel wird erreicht durch ein Verfahren gemäß Anspruch 1.

Eine Idee der Erfindung besteht darin, daß der Meßwert aus der Differenz der Signale zweier Wege, dem Referenzweg und dem Meßweg, gebildet wird (Meßwertbildung). Erfindungsgemäß wird aus dem Differenzsignal die Differenz aus dem Signalpegel zum Zeitpunkt des Maximums des charakteristischen und zum Zeitpunkt des Maximums des uncharakteristischen Signalpulses gebildet und schließlich als Meßwertsignal ausgegeben.

Zur Verbesserung der Meßwertqualität wird vorzugsweise das gewonnene Differenzsignal frequenz- und/oder zeitselektiert bevor es als korrigierter Meßwert ausgegeben wird (Anspruch 2).

Bei einer vorteilhaften Ausgestaltung der Erfindung emittiert eine Strahlungsquelle, insbesondere ein Laser, Strahlung auf mehr als zwei Wellenlängen. Auf elektronischem Wege werden Signale gebildet, die jeweils nur aus den elektrischen Signalen zweier Lichtpulse bestehen. Das Detektorsignal mit mehr als zwei Pulsen wird in mehrere Signale aufgeteilt, wobei jedes Signal aus einem charakteristischen und einem uncharakteristischen Puls besteht (Signalaufteilung) (Anspruch 4).

Nach einer Ausgestaltung der Erfindung wird das Signal des Meßweges und des Referenzweges bewertet und korrigiert bevor es zu einer Meßwertbildung kommt.

Vorzugsweise wird in einem Meßzyklus auch die Konzentration eines Stoffes gemessen, der für Querempfindlichkeiten sorgt und mit diesem Meßergebnis das eigentliche Meßergebnis korrigiert (Querempfindlichkeitskorrektur) (Anspruch 6).

Durch Kombination der beiden og. Aspekte der vorliegenden Erfindung - d.h. Störunterdrückung und Meßwertbildung - wird beispielsweise eine signifikante Verbesserung der bekannten Konzentrationsmeßverfahren mittels Laserstrahlen von einzelnen Gasen in Gasgemischen oder ähnlichen Nachweisverfahren gewährleistet.

Dies erfolgt mit Hilfe dreier Maßnahmen: Vor der eigentlichen Meßwertbildung wird jeder einzelne Puls des elektrischen Signales auf Störungen hin bewertet und bei Bedarf korrigiert. Durch die Bildung der Differenz aus dem Signal der Meßstrecke und dem Anregungssignal wird der Einfluß der Lichtquelle und aller anderen Störquellen im Meßsystem selbst auf den Meßwert minimiert. Dieses Differenzsignal wird anschließend im Frequenzbereich und/oder im Zeitbereich selektiert, nochmals bewertet und eventuell korrigiert bevor es als Meßwert ausgegeben wird.

Treten während der Messung Querempfindlichkeiten zu anderen Stoffen auf, kann das Verfahren erweitert werden. Mittels zusätzlicher Lichtpulse, deren Wellenlänge charakteristisch für die anderen Gase sind, wird eine Signalfolge erzeugt, die aus mehreren Pulsen besteht. Nachdem aus dieser Signalfolge mehrere Signale extrahiert wurden, die jeweils nur noch je zwei Pulse enthalten, erfolgt die weitere Signalverarbeitung nach oben aufgezeigter Art und Weise. Es wird dabei jeweils ein Meßwert für jede charakteristische Lichtwellenlänge gewonnen. Mittels einfacher mathematischer Verfahren kann dann der Einfluß der anderen Stoffe auf den eigentlichen Meßwert - der Konzentration des ausgesuchten Gases - ausgeschlossen werden.

Zur Vereinfachung der Beispiele wird nachfolgend immer nur von einer weiteren Lichtwellenlänge ausgegangen.

Das vorliegende Verfahren kann beispielsweise in Kraftwerken zur Abgasuntersuchung eingesetzt werden. In kalorischen Kraftwerken entstehen die für die Umwelt schädlichen Stickoxide. Zu deren Reduktion wird Ammoniak eingesetzt. Ammoniak selbst ist ebenfalls ein umweltschädlicher Stoff. Mit Hilfe der vorliegenden Meßtechnik kann die Ammoniakeindüsung so genau erfolgen, daß einerseits äußerst wenig Stickoxide mehr den Rauchgaskanal verlassen, andererseits auch nur eine minimale Menge von Ammoniak austritt.

Ferner ist das Verfahren - insbesondere aufgrund des geringen apparativen Aufwands und der hohen Meßgenauigkeit - besonders vorteilhaft beispielsweise für die Fälschungssicherung von Scheckkarten und für Zugangskontrollen einsetzbar. Wird eine Plastikkarte, z. B. Scheck oder Kreditkarte, auf einem Teilbereich mit einem bestimmten Stoff beschichtet, kann mit Hilfe des vorliegenden Verfahrens eine eindeutige Identifikation vorgenommen werden. Erfolgt die Beschichtung so, daß für das menschliche Auge und andere, nicht so empfindliche Meßgeräte keine Identifikation möglich ist, wird ein hohes Maß an Fälschungssicherheit erreicht.

Eine weitere besonders vorteilhafte Anwendung der Erfindung besteht in der Mischungssteuerung in kontinuierlichen Prozessen. Um Stoffgemische mit geringen Konzentrationsschwankungen herstellen zu können, wird ein diskontinuierlicher Mischprozeß eingesetzt. In einen Behälter werden die einzelnen Komponenten zusammengefügt, gemischt und anschließend wird der Behälter geleert.

Mit Hilfe des vorliegenden Meßverfahrens kann die Stoffzusammensetzung während des Mischvorgangs laufend geprüft und die Zufuhrmenge einzelner Stoffe genau auf die aktuellen Bedürfnisse eingestellt werden.

In eine Ausgestaltung der Erfindung wird das Verfahren ergänzt durch ein Verfahren zur Strahlungsquellenstabilisierung gemäß Anspruch 7.

Eine weitere Ausgestaltung der Erfindung besteht in einer zusatzlichen Strahlungsquellenstabilisierung, insbesondere Laserstabilisierung, die sich in erfindungsgemäße Maßnahmen zur automatischen Inbetriebnahme und der Langzeitstabilisierung unterteilt. Die Inbetriebnahme erfolgt zusätzlich mit Hilfe der Gleichrichter im Referenzweg. Zur Langzeitstabilisierung werden nur die Sample & Hold - Vorrichtungen eingesetzt.

Zur Inbetriebnahme insbesondere des Lasers wird dieser mit einem beliebigen Signal angesteuert. Dieser wird solange verändert, bis sich hinter den beiden Gleichrichtern im Referenzweg ein angepaßter Signalpegel ergibt. Nun kann mittels der Sample & Hold - Schaltungen im Referenzweg die Kurvenform und die Phasenlage des Signales überprüft werden (Anspruch 8).

Durch Verschieben der einzelnen Taktsignale kann nun das Signal aus dem Referenzweg geprüft werden. Durch Verschieben der einzelnen Taktpulse kann das Signal vollständig erfaßt werden. Besteht das Signal aus dem Referenzweg nicht aus drei relativen Maxima, so ist die Laseransteuerung zu variieren und die Abtastung ist zu wiederholen.

Besteht das Signal auch aus vier Minima, wird geprüft, ob die Maxima symmetrisch jeweils zwischen zwei Minima eingebettet sind.

Solange diese Bedingungen nicht erfüllt sind, ist die Laseransteuerung weiter zu variieren.

Sobald diese Bedingungen erfüllt sind, wird mittels der Sample & Hold - Vorrichtungen in den Eichwegen überprüft, ob die benötigten Lichtwellenlängen vom Laser emittiert werden und zu welchen Zeitpunkten er Licht mit diesen ausstrahlt.

Ist der insbesondere Laser richtig abgestimmt, wo wird ein Signalpuls - verursacht durch den Lichtpuls mit der uncharakteristischen Lichtwellenlänge - ungeschwächt in beiden Eichwegsignalen auftreten. Die beiden anderen Signalpulse werden jeweils in mindestens einer Küvette geschwächt werden. Der Lichtpuls, dessen Wellenlänge charakteristisch für das Gas ist, dessen Konzentration auf der Meßstrecke ermittelt werden soll, wird auch in der zweiten Eichküvette geschwächt werden. Die Ursache liegt in der Querempfindlichkeit. Der Lichtpuls, dessen Wellenlänge charakteristisch für den Stoff ist, welches die Ursache für die Querempfindlichkeit darstellt, darf nur beim Durchtritt durch die eine Küvette geschwächt werden, die mit diesem Stoff gefüllt ist. Werden die Lichtstrahlen bei beiden charakteristischen Lichtwellenlängen beim Durchtritt durch die Eichküvetten geschwächt, so ist der Laser falsch abgestimmt.

Emissionswellenlänge und Emissionszeitpunkte der Strahlungsquelle werden wiederholt durch Abtasten der Eichwegsignale (32, 42) mittels Sample & Hold-Schaltungen ermittelt und bei Bedarf neu korrigiert wird (Anspruch 9).

Da die Phasenlage der Signale in allen Wegen identisch ist, reicht hierzu eine Abtasten der Eichwegsignale zu den Zeitpunkten aus zu welchen die Maxima im Referenzweg auftreten.

Ist diese Bedingung in den Eichwegen nicht erfüllt, so ist die Laserabstimmung weiter so lange zu variieren, bis dies der Fall ist.

Im Betrieb wird die Ansteuerung des insbesondere Lasers laufend variiert. Die Änderungen sind dabei so klein zu halten, daß eine Auswirkung auf das Meßergebnis unterbleibt oder es muß dies bei der Meßwertbildung berücksichtigt werden.

Die Reihenfolge, in der die verschiedenen Lichtwellenlängen emittiert werden, kann verändert werden. Dies ist allerdings beim Demultiplexen der Signale zu berücksichtigen.

Wird z. B. der Laser mittels eines mechanisch bewegten Abstimmelementes auf die verschiedenen Lichtwellenlängen eingestellt, so ist es günstiger das Abstimmelement eine zyklische Bewegung ohne Sprünge ausführen zu lassen. Wird das Abstimmelement zwischen beiden Endpunkten ohne Sprung mit einer gleichmäßigen Bewegung hin und her bewegt, so wird das Emissionsspektrum einmal von der niedrigen zur hohen und einmal von der hohen zur niedrigen Wellenlänge hin überstrichen.

Dies führt nebenbei zu einem unerwünschten Effekt. Liegen die zu benutzenden Lichtwellenlängen nicht direkt im Emissionsspektrum des Lasers nebeneinander, emittiert der Laser auch auf allen dazwischenliegenden Emissionslinien. Dies führt zu keinen weiteren Schwierigkeiten, muß aber beim Demultiplexen in der Bewertungs- und Korrekturvorrichtung berücksichtigt werden. Die unerwünschten Signalpulse werden einfach beim Demultiplexen - dem Aufteilen in verschiedene Signale aus je zwei Signalpulsen - weggelassen.

Alternativ zum vorstehenden Verfahren zur Strahlungsquellenstabilisierung wird das erfindungsgemäße Ziel auch erreicht durch ein Verfahren gemäß Anspruch 10.

Wie nach dem Stand der Technik, z.B. aus der EP 89 906 096.0, bekannt, kann das elektrische Signal eines Detektors in seine Fourier-Komponenten zerlegt werden.

Ist der insbesondere Laser richtig auf die beiden ausgewählten Wellenlängen abgestimmt, so wird der Lichtstrahl auf der Referenzstrecke, auf der sich nicht das Gas befindet, dessen Konzentration auf der Meßstrecke zu bestimmen ist, nicht gedämpft. Der Lichtstrahl auf der Eichstrecke, auf der sich eine Küvette, gefüllt mit dem ausgewählten Gas befindet, wird bei einem Lichtpuls nicht gedämpft werden und bei dem anderen gedämpft werden.

Das Fourier-Spektrum des elektrischen Signales aus dem Detektor der Referenzstrecke wird deshalb in erster Linie nur Anteile bei der Frequenz enthalten, die aus der Pulswiederholungsfrequenz abgeleitet sind. Die anderen Spektralanteile ergeben sich in erster Linie aus der unterschiedlichen Emission des Lasers bei den beiden benutzten Wellenlängen.

Das Fourier-Spektrum des elektrischen Signales aus dem Detektor der Eichstrecke wird deshalb Signalanteile enthalten, die aus der Pulswiederholungsfrequenz und der halben Pulswiederholungsfrequenz abgeleitet sind.

Der Lasers ist dann nach der Erfindung richtig abgeglichen, wenn im Spektrum aus dem Signal des Referenzweges die Anteile ein Maximum annehmen, die aus der Pulswiederholungsfrequenz abgeleitet wurden und die Anteile ein Minimum annehmen, die aus der halben Pulswiederholungsfrequenz abgeleitet wurden. Mit anderen Worten, die ungeradzahligen Spektralanteile ein Minimum annehmen, während die geradzahligen Anteile ein Maximum annehmen. Gleichzeitig müssen im Spektrum aus dem Signal des Eichweges alle gerad- und ungeradzahligen Anteile ein relatives Maximum annehmen. Befindet sich im Eichweg eine derart hohe Konzentration des ausgesuchten Gases bzw. des Eichstoffes, so wird der charakteristische Strahlungspuls vollständig absorbiert. Im Spektrum des Eichwegsignals treten dann keine geradzahligen Anteile - auch bei richtigem Laserabgleich - mehr auf. Die Überprüfung, ob der Laser richtig abgeglichen ist, ist dann nicht mehr eindeutig möglich.

Bevorzugt findet eine Signalteilung statt, derart, daß wenigstens ein Eichwegsignal und das Referenzsignal der Strahlungsquellenstabilisierung, insbesondere Laserstabilisierung zugeführt und ein Signalpaar aus Referenz- und Meßwegsignalen) der Bewertung und ggf. Korrektur unterzogen wird (Anspruch 5).

Gleichzeitig wird eine Lösung für das Problem der Querempfindlichkeiten aufgezeigt. Tritt bei der Messung grundsätzlich das Problem der Querempfindlichkeit auf, kann der Laser so abgestimmt werden, daß er auf mindestens drei Linien emittiert. Zusätzlich werden weitere Küvetten in je einen eigenen Eichweg gebracht, in der sich jeweils der Stoff befindet, welcher zu Querempfindlichkeiten führt.

In der folgenden Beschreibung wird mit einer weiteren Küvette zum Ausgleich von Querempfindlichkeiten ausgegangen. Grundsätzlich ändert sich nichts am Verfahren, wenn mehr Küvetten zur Querempfindlichkeitskorrektur eingesetzt werden. Je weiterer Küvette wird ein weiterer charakteristischer Lichtpuls erzeugt und jeweils eine weitere Schaltung zur Meßwertbildung und -korrektur eingeführt. Das Signaltiming ist entsprechend anzupassen. Wird keine Korrektur der Querempfindlichkeit gewünscht, kann die Küvette und die damit verbundene Signalverarbeitung ersatzlos entfallen.

Schließlich wird das erfindungsgemäße Ziel erreicht durch eine Vorrichtung gemäß Anspruch 11.

Besonders vorteilhaft ist der einfache Aufbau: die Erfindung geht bei einer Vorrichtung zur Konzentrationsbestimmung von Gasen in einem Gasgemisch aus von einem System, bestehend aus einer Strahlungsquelle, insbesondere einem Laser, einer oder mehrerer Eichküvetten, einem Referenzweg und einem Meßweg. Der insbesondere Laser emittiert Licht mit mindestens zwei verschiedenen Wellenlängen. Eine Wellenlänge ist charakteristisch für einen ausgewählten Stoff, eine andere Wellenlänge ist für alle Stoffe auf der Meßstrecke uncharakteristisch. Die anderen eventuell verwendeten Lichtwellenlängen sind charakteristisch für die anderen Stoffe. Alle benutzten Wellenlängen sind uncharakteristisch für alle anderen Stoffe, die sich auf der Meßstrecke befinden können und deren Konzentration variabel ist.

Der insbesondere Laser wird dabei so angesteuert, daß er abwechselnd Licht der ausgewählten Wellenlängen emittiert. Zwischen den Lichtpulsen werden kleine Emissionspausen bzw. Emissionsabschwächungen eingelegt. Nachdem eine Emissionssequenz beendet ist, wird eine neue gestartet. Zur Vereinfachung der Laseransteuerung kann der Laser dabei so angesteuert werden, daß er die Reihenfolge, in welcher die verschiedenen Lichtwellenlängen emittiert werden, am Ende einer Sequenz jeweils umkehrt. In der nachgeschalteten Elektronik ist dies zu berücksichtigen. So kann z. B. die Pulsreihenfolge in der Bewertungs- und Korrekturvorrichtung 504 umgedreht werden.

Das Licht des Lasers wird in drei oder mehr Strahlen mittels Strahlteiler zerlegt. Je ein Strahl durchläuft zeitgleich den Referenzweg, Meßweg und den bzw. die Referenzweg(e). Die Strahlen sind somit in ihrem Intensitätsverlauf nahezu identisch. Abweichungen ergeben sich in erster Linie nur durch die spektralen Eigenschaften der benutzten Strahlteiler. Die elektrischen Signale variieren noch leicht aufgrund der spektralen Eigenschaften der Detektoren.

Das Licht im Referenzweg wird direkt auf einen Detektor geführt. Auf dem Referenzweg befindet sich nur Luft. Er ist in allen Fällen frei von dem Gas zu halten, dessen Konzentration auf der Meßstrecke zu bestimmen ist und welches auch in einer Eichküvette enthalten ist. Das Licht im Eichweg wird über eine Eichküvette zu einem Detektor geführt. In der Eichküvette befindet sich eine bekannte Menge des Stoffes, dessen Konzentration auf der Meßstrecke zu bestimmen ist. Die Konzentration des ausgesuchten Gases und der absolute Druck in der Küvette werden dabei so ausgewählt, daß der Lichtstrahl mit der charakteristischen Wellenlänge signifikant, möglichst nahe von 100%, geschwächt wird. In eventuell vorhandenen weiteren Eichküvetten befinden sich Stoffe, die sich auf der Meßstrecke befinden können und die einen verfälschenden Einfluß auf das Meßergebnis haben können. Das Licht im Meßweg wird über eine Meßstrecke geführt. In der Meßstrecke befindet sich ein Gasgemisch, in dem das Gas enthalten sein kann, dessen Konzentration zu bestimmen ist.

Bei Lichtwellenlängen um 10µm eignet sich z. B. ein CO2-Isotopen-Laser als Lichtquelle. In diesem Bereich finden sich einige für Ammoniak charakteristische Wellenlängen, die nicht charakteristisch für die anderen typischen Bestandteile von Rauchgasen sind.

In den Detektoren wird aus dem einfallenden Lichtsignal ein elektrisches Signal gewonnen, das der Intensität der auftreffenden Lichtenergie proportional ist. Das Signal des Detektors hinter dem Referenzweg folgt somit direkt der Laseremission. Das Signal hinter dem Eichweg folgt immer dann der Laseremission, wenn der Laser Licht mit der uncharakteristischen Wellenlänge emittiert. Immer wenn der Laser Licht mit der charakteristischen Wellenlänge emittiert, erscheint das Signal an diesem Detektor geschwächt. Da sich die Konzentration in der Eichküvette nicht ändert, bleibt die Schwächung immer gleich. Das Signal hinter dem Meßweg folgt immer dann der Laseremission, wenn der Laser Licht mit der uncharakteristischen Wellenlänge emittiert. Immer wenn der Laser Licht mit einer charakteristischen Wellenlänge emittiert, erscheint das Signal am Detektor geschwächt. Die Schwächung ist jeweils proportional der Konzentration des jeweiligen ausgesuchten Gases - eines Gases, welches sich auch in einer der Eichküvetten befindet - auf der Meßstrecke.

Die Signale der Detektoren werden der erfindungsgemäßen Auswertungseinrichtung bzw. Auswerteelektronik mit einer Meßwertbildungsvorrichtung zur Bildung des Meßwertes aus dem Differenzsignal von Meßwegsignal und Referenzwegsignal zugeführt.

Diese Auswerteelektronik bildet also aus den elektrischen Signalen den Meßwert, ein Maß für die Zuverlässigkeit des Meßwertes und vorzugsweise ein Signal zur Strahlungsquellenstabilisierung. Zur besseren Beurteilung der Signale erhält die Auswerteelektronik vorzugsweise noch Informationen über den aktuellen Prozeßzustand.

Dabei werden die Signale aller Detektoren vorzugsweise zuerst in einer Verstärker- und Filtervorrichtung auf einheitlichen Signalpegel gebracht und von unerwünschten Signalanteilen befreit.

Anschließend werden die Signale vorzugsweise aufgeteilt. Die Signale aus dem Referenzweg und den Eichwegen werden einer Strahlungsquellen, insbesondere Laserstabilisierung zugeführt. Diese bereitet die Signale so auf, daß die Systemsteuerung daraus das Signal zur insbesondere Laseransteuerung bilden kann.

Das Signal aus dem Referenzweg und das Signal aus dem Meßweg werden vorzugsweise einer Bewertungs- und Korrekturvorrichtung zugeführt. Diese bewertet zuerst einen Signalpuls durch Vergleich mit gespeicherten Sollwerten und korrigiert ihn bei Bedarf. Ist mehr als eine Eichküvette im System vorgesehen, so werden aus dem Eingangssignalpaar neue Signalpaare erzeugt, die innerhalb einer Signalperiode jeweils nur noch zwei verschiedene Signalpulse enthalten. Jedes dieser Signalpaare wird anschließend der Schaltung zur Meßwertbildung und -korrektur zugeführt (Anspruch 12).

Die Meßwertbildungsvorrichtung weist vorzugsweise einen Subtrahierer zur Bildung des Differenzsignals auf, dem wenigstens zwei Sample & Holdschaltungen zum Abtasten des Differenzsignales in der Mitte des charakteristischen und des uncharakteristischen Signalpulses nachgeschaltet sind, und einen weiteren Subtrahierer zur Bildung der Pegeldifferenz zwischen dem Differenzsignal zum Zeitpunkt des Maximums des charakteristischen und zum Zeitpunkt des Maximums des uncharakteristischen Signalpulses (Anspruch 13).

Jede diese Meßwertbildungs- und -korrekturvorrichtungen erzeugt aus ihrem Signalpaar ein Signal, das proportional der Konzentration des entsprechenden Gases auf der Meßstrecke ist.

Anschließend bildet die Systemsteuerung aus den Daten der Meßwertbildungs- und -korrekturvorrichtungen und den aktuellen Prozeßdaten den Meßwert und ein Maß für die Zuverlässigkeit des Meßwertes.

Alle Abläufe in der Auswerteelektronik werden mittels eines Taktgenerators koordiniert. Das Ausgabemuster des Taktgenerators wird von der Systemsteuerung vorgegeben.

Ein bevorzugtes Ausführungsbeispiel der erfindungsgemäßen Auswertungseinrichtung weist folgende Vorrichtungen auf:

Verstärker und Filter: Hinter allen Detektoren befindet sich eine Signalaufbereitungsvorrichtung bestehend aus Verstärker und Filter. Der Ausgangspegel der Detektorsignale wird auf einen einheitlichen Pegel verstärkt und die Signale werden anschließend mittels eines Tiefpaßfilters von unerwünschten Signalanteilen befreit. Die Eckfrequenz der Filter wird dabei so eingestellt, daß die Welligkeit des Filters den Informationsgehalt des Signales nicht unbeabsichtigt verfälscht. Bei nur einer Eichküvette heißt das, daß unabhängig von dem ausgesuchten Filtertyp der Filter so abgeglichen werden muß, daß er bei der Pulswiederholungsfrequenz und der halben Pulswiederholungsfrequenz das Signal nicht beeinflußt.

Taktgenerator: Der Taktgenerator versorgt alle Funktiongruppen der Auswerteelektronik mit synchronen Taktsignalen. Der Mustergenerator ist dabei so aufgebaut, daß die Systemsteuerung die Phasenlage eines jeden einzelnen Taktes beeinflussen kann.

Signalbewertung: In der Bewertungs- und Korrekturvorrichtung werden die beiden eingehenden Signale aus Meßweg- und Referenzwegdetektor digitalisiert und der digitalen Bewertungs- und Korrektureinrichtung zugeführt. Nach erfolgter Korrektur gibt diese die Signale mittels Digital-/Analogwandlern an die nachgeschaltete Elektronik aus.

Mittels eines Sollwertspeichers ist die Bewertungs- und Korrekturvorrichtung in der Lage, den Sollkurvenverlauf zu erkennen und das Detektorsignal entsprechend zu ändern. Mittels statistische Methoden erkennt die Bewertungs- & Korrekturvorrichtung selbst die Sollkurvenform und legt diese im Sollwertspeicher ab.

Ist mehr als eine charakteristische Lichtwellenlänge vorgesehen, so erfolgt mit der Signalbewertung auch eine Auftrennung der Eingangssignale in Signalpaare, die nur aus zwei Pulsen innerhalb einer Signalperiode bestehen.

Meßwertbildung und -korrektur: Der Meßwert wird aus der Differenz des korrigierten Meßsignales und des korrigierten Referenzsignales gebildet. Dieses Signal wird verstärkt und gefiltert zweier Sample & Hold - Schaltungen zugeführt. Die Sample & Hold - Vorrichtungen werden von zwei Taktsignalen im Maximum je eines Signalpulses des Eingangssignales aktiviert. Die beiden Ausgangssignale werden jeweils einer weiteren Sample & Hold - Schaltung und einer Schaltung zur Gradientenbeurteilung zugeführt. Diese Gradientenbeurteilung aktiviert die oben erwähnte zweite Sample & Hold - Stufe. Die Gradientenbeurteilung wird durch den Mustergenerator mit dem Eingangssignal der Meßwertbildung synchronisiert. Die Gradientenbeurteilung erhält die Informationen über den zulässigen Gradienten im Eingangssignal von der Systemsteuerung. Die Systemsteuerung leitet den gerade zulässigen Gradienten aus dem Prozeßstatus ab.

Aus dem Ausgangssignal der zweiten Sample & Hold - Stufe wird die Differenz gebildet. Nach einer weiteren Verstärkung und Filterung wird das Signal der Systemsteuerung zur weiteren Verarbeitung zugeleitet.

Ferner weist die Auswertungsvorrichtung vorzugsweise eine Vorrichtung zur Signalaufbereitung für eine Strahlungsquellenstabilisierung auf mit Gleichrichter- und Sample & Hold-schaltungen, die Referenz- und Eichwegsignale zu einem vorgegebenen Zeitpunkt abtasten, um die Kurvenform, die Phasenlage, sowie den Maximalwert und den Durchschnittswert pro Signalperiode zu bestimmen (Anspruch 14).

Ein weiteres bevorzugtes Ausführungsbeispiel besteht in einer Bewertungs- und Korrekturvorrichtung mit Demultiplexer.

In der Bewertungs- und Korrekturvorrichtung werden die Signale aus dem Meßweg und dem Referenzweg digitalisiert und mit einem im Sollwertspeicher abgelegten Sollmuster verglichen und bei Bedarf entsprechend korrigiert.

Die Bewertung erfolgt jeweils über einen vollständigen Kurvenzug. Dazu wird das Signal innerhalb einer Periode vollständig abgetastet und zwischengespeichert.

Das Signal aus dem Referenzweg ist nur mit Störungen behaftet, die ihre Ursache im System selbst haben. Die selben Störungen sind auch im Meßwegsignal enthalten. Im Signal aus dem Meßweg sind zusätzliche Störungen durch die unbeabsichtigten Veränderungen des Lichtstrahles auf der Meßstrecke durch z. B. Turbulenzen oder Staub vorhanden.

Ohne Störungen folgen alle Signalpulse der dargestellten Signalkurve, die auch im Sollwertspeicher für die Signalbewertung abgelegt wird. Unabhängig von der aktuellen Signalamplitude ist die Form immer gleich. Im eingeschwungenen System kann jeder Puls normiert werden. Für die unterschiedlichen Pulse sind entsprechend unterschiedliche Normierungsfaktoren vorzusehen. Die Bewertungs- und Korrektureinrichtung vergleicht die normierten Pulse mit einem abgelegten Sollmuster. Ein Kurvenzug ist dann in Ordnung, wenn er innerhalb der vorgegebenen Toleranzbreite liegt und auch seine erste Ableitung innerhalb der Toleranzbreite für die erste Ableitung bleibt.

Fällt das Signal im Meßweg aus bzw. ist erkennbar gestört, so gibt die Bewertungs- und Korrektureinrichtung das alte Signal solange aus, bis das Eingangssignal wieder ungestört ist. Der Systemsteuerung wird mitgeteilt, daß kein aktuelles, direkt vom Meßweg gewonnenes Signal weitergegeben wird.

Gleichzeitig trennt die Signalbewertung den Signalzug in mehrere Signale zur getrennten Auswertung auf. Die Vorrichtung zur Meßwertbildung und -korrektur kann nur ein Signal auswerten das aus zwei unterschiedlichen Pulsen besteht. Vor der Umwandlung in ein analoges Signal trennt die Bewertungs- und Korrekturvorrichtung den digitalen Datenstrom so auf, daß nur Signalpaare entstehen, die nur aus einem Puls bestehen, der duch die uncharaktersitische Strahlung entstand und einem Puls der durch eine charakteristische Strahlung entstand.

In dem genannten Beispiel besteht die Signalperiode des Eingangssignales aus drei Signalpulsen. Ein Signalpuls wird durch den Lichtpuls hervorgerufen, dessen Lichtwellenlänge für alle Stoffe uncharakteristisch ist. Die beiden anderen Pulse werden durch Lichtpulse hervorgerufen, deren Wellenlänge jeweils für einen Stoff charakteristisch ist.

Die Auftrennung erfolgt nun in der Art, daß die Periode des neuen Signales, bestehend aus zwei Pulsen, der Periode des ursprünglichen Signales entspricht. Ebenso bleibt die Amplitude der Pulse unverändert. Jeder einzelne Puls wird nun so in seinem zeitlichen Ablauf gedehnt, daß seine Dauer genau der halben Periode entspricht. Mit der Ausgabe des ersten Pulses wird am Anfang der Periode begonnen, der zweite Puls wird ab der Mitte der Periode ausgegeben.

Wird der Laser so angesteuert, daß sein Emissionsspektrum einmal von niedrigen zu hohen Wellenlängen und in der folgenden Periode umgekehrt überstrichen wird, so ist dies in der Signalauftrennung entsprechend zu berücksichtigen.

Emittiert der Laser aufgrund spezieller Eigenschaften auf mehr als den vorgesehenen Laserlinien, so können in der Bewertungs- und Korrekturvorrichtung die zusätzlichen Signalpulse elektronisch unterdrückt werden. Voraussetzung dafür ist, daß der Laser immer bei richtiger Abstimmung auf diesen Linien emittiert. Sollen diese unerwünschten Signalpulse elektronisch unterdrückt werden, so ist bei der Auslegung des Eingangsverstärkers und der Laserstabilisierung davon auszugehen, daß der Laser auf diesen Linien emittiert. Diese zusätzlichen Signalpulse sind so zu behandeln, wie die charakteristischen Signalpulse zur Querempfindlichkeitskorrektur. In der Bewertungs- und Korrekturvorrichtung werden diese Signalpulse unterdrückt. D. h. sie werden auch hier behandelt wie die Signale zur Querempfindlichkeitskorrektur, nur erfolgt keine Ausgabe mittels eines existierenden Signalpaares. Damit wird erreicht, daß die eigentlich unerwünschten Signalpulse zur Signalbewertung- und -korrektur eingesetzt werden, bei der eigentlichen Meßwertbildung aber nicht mehr vorhanden sind und somit auch nicht das Meßergebnis stören können.

Meßwertbildung und -korrektur: Aufgrund der Aufteilung des Signales mit drei oder mehr Signalpulsen in mehrere Signale mit nur jeweils zwei Signalpulsen, besteht aus Sicht der Meßwertbildung das System immer nur aus einem Meßweg, einem Referenzweg und einem Eichweg. Die Systemsteuerung verbindet die Informationen der verschiedenen Vorrichtungen zur Meßwertbildung wieder zu einem Signal, dem Maß für die Konzentration des einen ausgesuchten Stoffes auf der Meßstrecke.

Das Maß für die Konzentration des gesuchten Stoffes ergibt sich aus der Differenz des Signales aus dem Referenzweg und aus dem Meßweg.

Wird Licht vom Laser emittiert, dessen Wellenlänge für kein Gas auf der Meßstrecke charakteristisch ist, so wird der Lichtstrahl auf der Meßstrecke auch nicht gedämpft. Der Lichtstrahl wird auf dem Referenzweg grundsätzlich nicht gedämpft. Werden die beiden Signale aus dem Referenzweg und aus dem Meßweg während der Emission der unchrakteristischen Lichtwellenlänge auf gleichen Pegel abgeglichen, so entsteht während der Emission der charakteristischen Lichtwellenlänge eine Differenz zwischen beiden Signalen, da der Lichtstrahl auf der Meßstrecke proportional zur Konzentration des ausgesuchten Gases gedämpft wird. Die Signaldifferenz ist proportional der Dämpfung des Lichtstrahles auf der Meßstrecke.

Die Störungen in beiden Signalen, die durch die Lichtquelle selbst verursacht werden, führen bei diesem Verfahren zu keinen Signalanteilen im Meßwert, da sie mit der selben Amplitude in beiden Detektorsignalen vorhanden sind.

Für die weitere Auswertung wird nun der Signalpegel des Differenzsignales zu zwei Zeitpunkten mittels zweier Sample & Hold - Elemente abgetastet. Die beiden Zeitpunkte werden dabei so gewählt, daß die Pegeldifferenz im Differenzsignal ein Maximum annimt. Dies ist dann der Fall, wenn jeweils ein relatives im Maximum im Referenzsignal am Eingang der Meßwertbildung und -korrektur auftritt.

Die Ausgangssignale dieser beiden Sample & Hold - Elemente werden jeweils einem weiteren Sample & Hold - Element und der Vorrichtung zur Gradientenbeurteilung zugeführt. Die Gradientenbeurteilung gibt die Übernahme der beiden Signalpegel der hier zuerst erwähnten Sample & Hold - Elemente frei. Die Freigabe erfolgt nur, wenn sich die Änderungen im abgetasteten Signal innerhalb vorgegebener Grenzen hält und die Freigabe durch die Systemsteuerung erlaubt ist.

Wird das Meßsignal z. B. durch eine Staubwolke auf der Meßstrecke gestört, ergibt sich ein große Änderung im Signal. Aus der Änderung ergibt sich ein Maximum in der ersten Ableitung des Signales. Die Gradientenbeurteilung erkennt die Änderung und gibt die Übernahme des aktuellen Meßwertes nicht frei. An den Ausgängen der zweiten Stufe der Sample & Hold - Elemente bleibt folglich das alte Meßergebnis erhalten. Die nachgeschalteten Funktionsgruppen erhalten weiter einen Meßwert. Die Systemsteuerung bekommt die Blockade der Weitergabe mitgeteilt.

Da die Dauer dieser Störungen klein ist im Vergleich zur Totzeit im Rauchgaskamin, erfolgt durch diese Methode keine erkennbare Verfälschung des Meßwertes.

Ausgleich der Querempfindlichkeiten: Wird der Laser so abgestimmt, daß er Licht von mehr als zwei Wellenlängen emittiert, kann auch eine Querempfindlichkeit zu anderen Stoffen auf der Meßstrecke erkannt und korrigiert werden. Dazu wird der Laser so abstimmt, daß er auch Licht mit einer Wellenlänge emittiert, die charakteristisch für den anderen Stoff ist. In der Vorrichtung zur Signalbewertung erfolgt die Auftrennung der Eingangssignale in mindestens zwei Signalzweige. Ein Signalzweig enthält dabei die Signale, die durch den gewünschten Stoff verursacht werden, ein weiterer Signalzweig erhält die Signale, die durch den unerwünschten Stoff verursacht werden. In jedem Signalzweig erfolgt nun die getrennte Auswertung. Es wird somit die Konzentration des gewünschten Gases bestimmt. Der gewonnene Meßwert ist allerdings durch die Querempfindlichkeit zu dem anderen Stoff verfälscht. Außerdem wird die Konzentration des unerwünschten Stoffes bestimmt.

Aus der Konzentration des unerwünschten Stoffes kann nun die Signalverfälschung im anderen Zweig bestimmt werden. Nach der Korrektur des Meßwertes kann die Systemsteuerung einen Meßwert ausgeben, der frei ist von Einflüssen der anderen Stoffe auf der Meßstrecke.

Besonders vorteilhaft kann z. B. bei Einsatz in einem Kraftwerk zur Bestimmung der Ammoniakkonzentration im Abgas kann mittels der bekannten Prozeßparameter eine verbesserte Beurteilung der gewonnenen Meßwerte vorgenommen werden (Betriebszustand der Meßstrecke.

Solange sich das Gesamtsystem - bei Einsatz in einem Kraftwerk ist dies das gesamte Kraftwerk - in einem stabilen Zustand befindet, können die Meßwerte auch keinen starken Schwankungen unterworfen sein. Treten trotzdem Schwankungen auf, so ist es besser auf ältere Meßwerte zurückzugreifen. Während der Inbetriebnahme und auch während des Abschaltens können jedoch größere Meßwertschwankungen auftreten, ohne daß deren Ursache in Meßfehlern liegt.

Die Brennstoffzusammensetzung hat einen Einfluß auf die Rauchgaszusammensetzung. Änderungen in der Rauchgaszusammensetzung führen deshalb zu höheren zulässigen Schwankungen in den Meßwerten.

Die Abgastemperatur bestimmt die Umwandlungsrate der Stickoxide und damit den Ammoniak-Schlupf im Abgas. Bei Temperaturschwankungen sind deshalb größere Schwankungen in der Ammoniakkonzentration zulässig.

Änderungen in der eingeschütteten Ammoniakmenge vergrößern ebenso die zulässige Abweichung im Meßwert.

Schwankungen in der Leistungsabgabe des Kraftwerkes führen ebenso so erhöhten zulässigen Schwankungen im Meßwert.

Wenn einer der oben erwähnten Betriebszustände auftritt, erhöht die Systemsteuerung die zulässige Schwankungsbreite des Meßwertes. Wenn das Gesamtsystem wieder einen stabilen Zustand erreicht hat, wird die zulässige Schwankungsbreite im Meßwert von der Systemsteuerung wieder eingeengt.

Ferner ist bevorzugt ein Abgleich der Strahlteiler vorgesehen: Die optischen Eigenschaften der Strahlteiler sind von der Wellenlänge des auftreffenden Lichtstrahles abhängig. Obwohl die Unterschiede in den benutzten Wellenlängen nicht sehr groß sind, ist aufgrund der hohen Empfindlichkeit des vorliegenden Verfahrens ein deutlicher Einfluß erkennbar.

Dieser Effekt kann zur automatischen Einstellung der Strahlteiler benutzt werden.

Zur Einstellung der Strahlteiler wird der Laser fest auf die erforderlichen Lichtwellenlängen eingestellt.

Die Strahlteiler sind so auf einem festen Träger montiert, daß sie einzeln in die drei Raumkoordinaten und die beiden möglichen Winkelkoordinaten mittels elektromechanischer Verstellvorrichungen frei verstellbar sind.

Nach der erfolgten Grobeinstellung der Strahlteiler wird der Eingangsverstärker auf einen festen Ausgangspegel eingestellt. Beginnend mit dem am weitesten von der Lichtquelle entferntesten Strahlteiler werden nun die Strahlteiler einzeln eingestellt.

Ein Strahlteiler ist dann optimal eingestellt, wenn die Amplituden der einzelnen Signalpulse am geringsten voneinander abweichen und der durchschnittliche Pegel aller Pulse einer Signalperiode ein Maximum annimmt.

Schließlich wird darauf hingewiesen, daß hier beschriebenen Methoden der elektrischen Signalauswertung sowie Strahlungsquellenstabilisierung nicht eingeschränkt auf Anregung durch einen Lichtstrahl eines Lasers zu verstehen sind. Es kann grundsätzliche jede Strahlungquelle und Strahlungsart benutzt werden, für die Detektoren und Strahlteiler vorhanden sind, die sich wie die hier beschriebenen Bauelemente verhalten. Auch kann anstelle der monochromatischen Strahlungsquelle eine Strahlungsquelle mit einem breiten Emissionsspektrum eingesetzt werden und mittels Filtern das erforderliche Strahlunsgspektrum herausgefiltert werden.

Weitere Vorteile und Ausgestaltungen der Erfindung ergeben sich aus der nachfolgenden Beschreibung bevorzugter Ausführungsbespiele. In dieser Beschreibung wird auf die beigefügte schematische Zeichnung Bezug genommen. In der Zeichnung zeigen:
- Fig. 1: den Gesamtaufbau eines Ausführungsbeispiels der erfindungsgemäßen Vorrichtung zur Konzentrationsbestimmung von Gasen in einem Gasgemisch;
- Fig. 2: ein Blockschaltbild einer erfindungsgemäßen Auswertungseinrichtung;
- Fig. 3: ein Blockschaltbild der Filter- und Verstärkerschaltung in Fig. 2;
- Fig. 4: ein Blockschaltbild der Signalaufbereitung zur Laserstabilisierung in Fig. 2;
- Fig. 5: ein Blockschaltbild des Taktgenerators in Fig. 2;
- Fig. 6: ein Blockschaltbild der Bewertungs- und Korrekturvorrichtung in Fig. 2;
- Fig. 7: ein Blockschaltbild der Meßwertbildungs- und -korrekturvorrichtung in Fig. 2;
- Fig. 8: die Meßwertbildungs- und -korrekturvorrichtung von Fig. 7 für die Querempfindlichkeitskorrektur;
- Fig. 9-17: Blockschaltbilder von Teilschaltungen der Laserstabilisierung in Fig. 2;
- Fig. 18: ein Blockschaltbild der Gradientenbewertung in Fig. 7;
- Fig. 19: ein Blockschaltbild der Gradientenbewertung in Fig. 8;
- Fig. 20: ein Blockschaltbild einer alternativen Meßwertaufbereitung;
- Fig. 21: ein Blockschaltbild einer alternativen Laserstabilisierung;
- Fig. 22: ein Diagramm, das den Zusammenhang der Takt- und Detektorsignale zeigt;
- Fig. 23: ein Diagramm mit idealisiertem Detektorsignal und seine Aufteilung in 2 Signale; und
- Fig. 24: ein Diagramm, das die zeitlichen Zusammenhänge zwischen den Detektor- und den Taktsignalen zeigt;
- Fig. 25: ein Diagramm, das den idealisierten Kurvenzug der Detektorsignale mit Toleranzgrenzen zeigt;
- Fig. 26: ein Diagramm, das die idealisierten Kurvenform der Meßwertbildung zeigt; und
- Fig. 27: ein Diagramm mit idealisiertem Detektorsignal und dem zugehörigen Fourierspektrum.

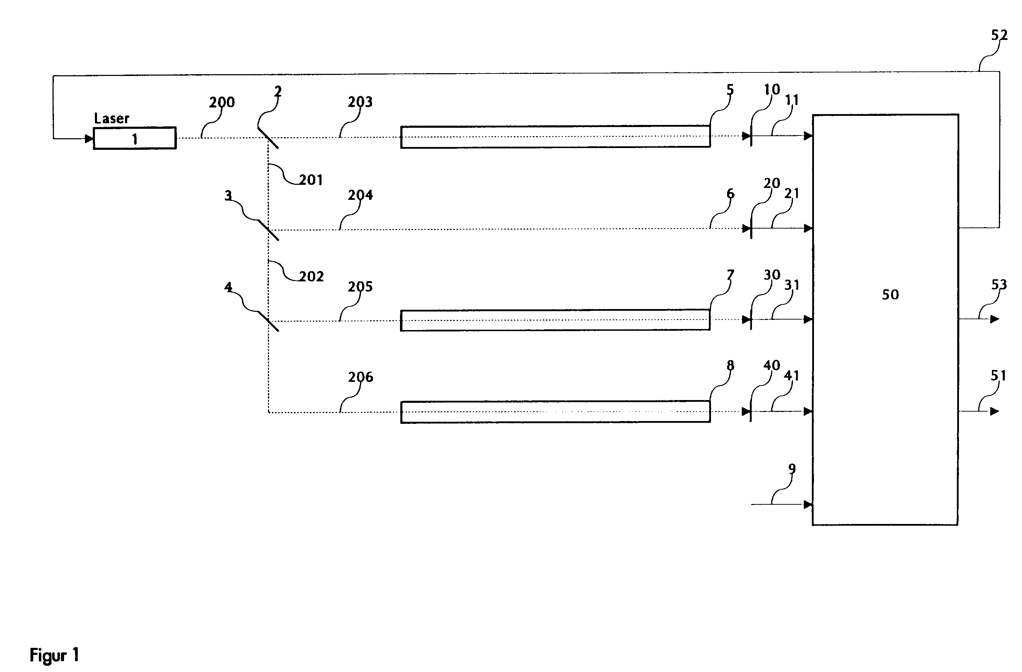

Figur 1 zeigt den Gesamtaufbau einer Vorrichtung zur Konzentrationsbestimmung von Gasen in einem Gasgemisch, an der sämtliche Aspekte der Erfindung verdeutlicht werden sollen. Dieser Anwendungsfall ist lediglich als Beispiel genannt und keinesfalls einschränkend zu verstehen. Wie bereits einleitend erwähnt, ist die Erfindung für alle Nachweis- und Konzentrationsbestimmungsverfahren geeignet, die auf einer charakteristischen Absorption durch den zu messenden festen oder gasförmigen Stoff beruhen.

Mittels eines Lasers 1 wird monochromatisches Licht mindestens dreier Wellenlängen erzeugt. Eine Wellenlänge ist dabei charakteristisch für ein Gas, welches sich in der Eichküvette 7 befindet. Eine andere Wellenlänge ist charakteristisch für ein Gas, welches sich in der Eichküvette 8 befindet. Die dritte Wellenlänge ist uncharakteristisch für alle Stoffe, die sich auf der Meßstrecke 5 befinden können. Der Laser wird dabei so angesteuert, daß er abwechselnd Licht der beschriebenen Wellenlängen emittiert. Zwischen den Emissionen können Pausen bzw. Abschwächungsphasen eingelegt werden.

Der Lichtstrahl 200 des Lasers 1 wird zu dem Strahlteiler 2 geführt. Der Strahlteiler 2 teilt den Lichtstrahl 200 in die Lichtstrahlen 201 und 203 auf. Der Lichtstrahl 203 wird über die Meßstrecke 5 zu dem Detektor 10 geleitet. Wird Licht mit der uncharakteristischen Wellenlänge vom Laser 1 emittiert, erfolgt keine Veränderung des Lichtstrahles auf der Meßstrecke. Wird Licht mit der für den Stoff in der Küvette 7 charakteristischen Wellenlänge vom Laser 1 emittiert, so wird der Lichtstrahl proportional zur Konzentration dieses Stoffes auf der Meßstrecke geschwächt. Wird Licht mit der für den Stoff in der Küvette 8 charakteristischen Wellenlänge vom Laser 1 emittiert, so wird der Lichtstrahl auf der Meßstrecke 5 proportional zur Konzentraion dieses Stoffes auf der Meßstrecke 5 geschwächt. Der Detektor 10 wandelt den auftreffenden Lichtstrahl in ein elektrisches Signal 11 um, dessen Amplitude proportional zur auftrefenden Strahlungsintensität ist. Das elektrische Signal 11 wird der Auswerteelektronik 50 zur weiteren Verarbeitung über eine Leitung zugeführt.

Der Lichtstrahl 201 wird zu dem Strahlteiler 3 geführt. Der Strahlteiler 3 teilt den Lichtstrahl 201 in die Lichtstrahlen 202 und 204 auf. Der Lichtstrahl 204 wird über die Referenzstrecke 6 zu dem Detektor 20 geführt. Auf der Referenzstrecke 6 wird der Lichtstrahl nicht verändert. Der Detektor 20 wandelt den auftrefenden Lichtstrahl 204 in eine elektrisches Signal 21 um, dessen Amplitude proportional der auftreffenden Strahlungsintensität ist. Das elektrische Signal 21 wird der Auswerteelektronik 50 zur weiteren Verarbeitung über eine Leitung zugeführt.

Der Lichtstrahl 202 wird zu dem Strahlteiler 4 geführt. Der Strahlteiler 4 teilt den Lichtstrahl 202 in die Lichtstrahlen 205 und 206 auf. Der Lichtstrahl 205 wird über die Eichküvette 7, die mit einem Stoff gefüllt ist, dessen Konzentration auf der Meßstrecke 5 zu bestimmen ist, zu dem Detektor 30 geleitet. Der Detektor 30 wandelt den auftreffenden Lichtstrahl in ein elektrisches Signal 31 um, dessen Amplitude proportional der auftreffenden Strahlungsintensität ist. Das elektrische Signal 31 wird der Auswerteelektronik 50 zur weiteren Verarbeitung über eine Leitung zugeführt.

Der Lichtstrahl 206 wird über die Eichküvette 8, die mit einem Stoff gefüllt ist, der sich auf der Meßstrecke 5 befinden kann und der die fehlerfreie Konzentrationsbestimmung für den Stoff in Eichküvette 7 verhindert, zu dem Detektor 40 geleitet. Der Detektor 40 wandelt den auftrefenden Lichtstrahl in eine elektrisches Signal 41 um, dessen Amplitude proportional der auftreffenden Strahlungsintensität ist. Das elektrische Signal 41 wird der Auswerteelektronik 50 zur weiteren Verarbeitung über eine Leitung zugeführt.

Die Systemsteuerung 50 steuert den Laser über eine Leitung mit dem Signal 52 so an, daß er abwechselnd Licht der charakteristischen Wellenlänge des Stoffes in der Eichküvette 7, Licht der charakteristischen Wellenlänge des Stoffes in der Eichküvette 8 und für alle Stoffe auf der Meßstrecke 5 uncharakteristisches Licht emittiert.

Mit dem Signal 9 erhält die Systemsteuerung Informationen über den aktuellen Betriebszustand der Meßstrecke. Dies beinhaltet u. a. Informationen über den Druck, die Temperatur, den Sauerstoffgehalt, die Brennstoffzusammensetzung, die aktuelle Ammoniakeindüsungsmenge und die bekannten Analysenwerte der Rauchgaszusammensetzung auf der Meßstrecke 5.

Über das Signal 51 gibt die Systemsteuerung ein Maß für die Konzentration des Stoffes auf der Meßstrecke 5 aus, der sich auch in der Eichküvette 7 befindet.

Über das Signal 53 gibt die Systemsteuerung ein Maß für die Zuverlässigkeit des gewonnen Meßwertes 51 aus.

### Auswerteelektronik:

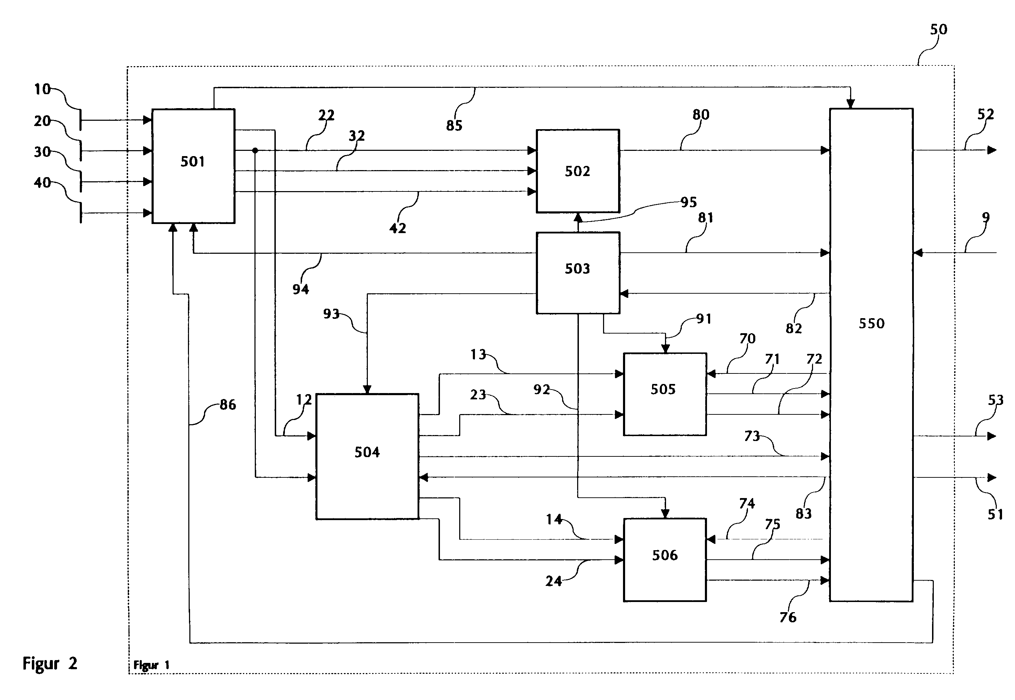

Figur 2 zeigt das Blockschaltbild der Auswerteelektronik 50. Bereits in Figur 1 dargestellt sind die Anschlüsse der Detektoren 10, 20, 30 und 40, die Laseransteuerung 52, das Maß für die Zuverlässigkeit des Meßwertes 53, den Meßwert 51 selbst und der Betriebszustand 9.

Das Signal des Detektors 10, das Signal des Detektors 20, das Signal des Detektors 30 und das Signal des Detektors 40 wird der Filter- und Verstärkerschaltung 501 zugeführt. Die Signale aller Detektoren werden mit Hilfe dieser Schaltung auf einen einheitlichen Signalpegel gebracht und von unerwünschten höherfrequenten Signalanteilen befreit.

Das Signal des Detektors 10 wird in der Verstärker- und Filterschaltung 501 auf den oben beschriebenen Signalpegel gebracht und von unerwünschten Signalanteilen befreit als Signal 12 über eine Leitung an die Einheit zur Berwertungs- und Korrekturvorrichtung 504 weitergeführt. Das Signal des Detektors 20 wird in der Schaltung 501 auf den oben beschriebenen Signalpegel gebracht und von unerwünschten Signalanteilen befreit als Signal 22 über eine Leitung an die Einheit zur Bewertungs und Korrekturvorrichtung 504 und an die Laserstabilisierung 502 weitergeführt. Das Signal des Detektors 30 wird in der Schaltung 501 auf den oben beschriebenen Signalbegel gebracht und von unerwünschten Signalanteilen befreit als Signal 32 über eine Leitung an die Laserstabilisierung 502 weitergeführt. Das Signal des Detektors 40 wird in der Schaltung 501 auf den oben beschriebenen Signalpegel gebracht und von unerwünschten Signalanteilen befreit als Signal 42 über eine Leitung an die Laserstabilisierung 502 weitergeführt.

Die Verstärker- und Filterschaltung 501 gibt die aktuellen Einstellwerte für die Verstärkung mit dem Signal 85 an die Systemsteuerung 550 weiter. Mit dem Signal 86 kann die Systemsteuerung 550 die Einstellparameter der Verstärker- und Filterschaltung 501 beeinflussen.

Die Laserstabilisierung 502 bildet aus den Eingangssignalen 22, 32 und 42 das Signal 80, das alle Informationen zur Laserstabilisierung enthält. Das Signal 80 wird über eine Leitung an die Systemsteuerung 550 geführt. Die Systemsteuerung 550 bildet daraus das Signal 52 zur Ansteuerung des Lasers.

Die Bewertungs- und Korrekturvorrichtung 504 bewertet die Signale 12 und 22 auf deren Richtigkeit und korrigiert sie bei Bedarf. Wird der Laser so abgestimmt, daß er auf mehr als zwei Wellenlängen Licht emittiert, werden in der Bewertungs- und Korrekturvorrichtung 504 die eingehenden Signale 12 und 22, so in mehrere Signalpaare 13 und 23 bzw. 14 und 24 aufgeteilt, daß innerhalb einer Signalperiode der Signale 13, 23, 14 und 24 nur jeweils zwei Signalpulse auftreten.

Von der Systemsteuerung 550 ist über eine Leitung das Signal 83 zur Bewertungs- und Korrekturvorrichtung 504 geführt. Mit dem Signal 83 kann die Systemsteuerung die Bewertungs- und -Korrekturvorrichtung 504 aktivieren und deaktivieren.

Von der Bewertungs- und Korrekturvorrichtung 504 ist über eine Leitung das Signal 73 an die Systemsteuerung 550 geführt. Mit dem Signal 73 teilt die Bewertungs- und Korrekturvorrichtung 504 der Systemsteuerung 550 mit, in welchem Maße die Signale 12 und 22 korrigiert werden mußten.

Je verwendeter charakteristischer Wellenlänge wird ein Signalpaar erzeugt. Im beschriebenen Fall sind dies zwei Paare.

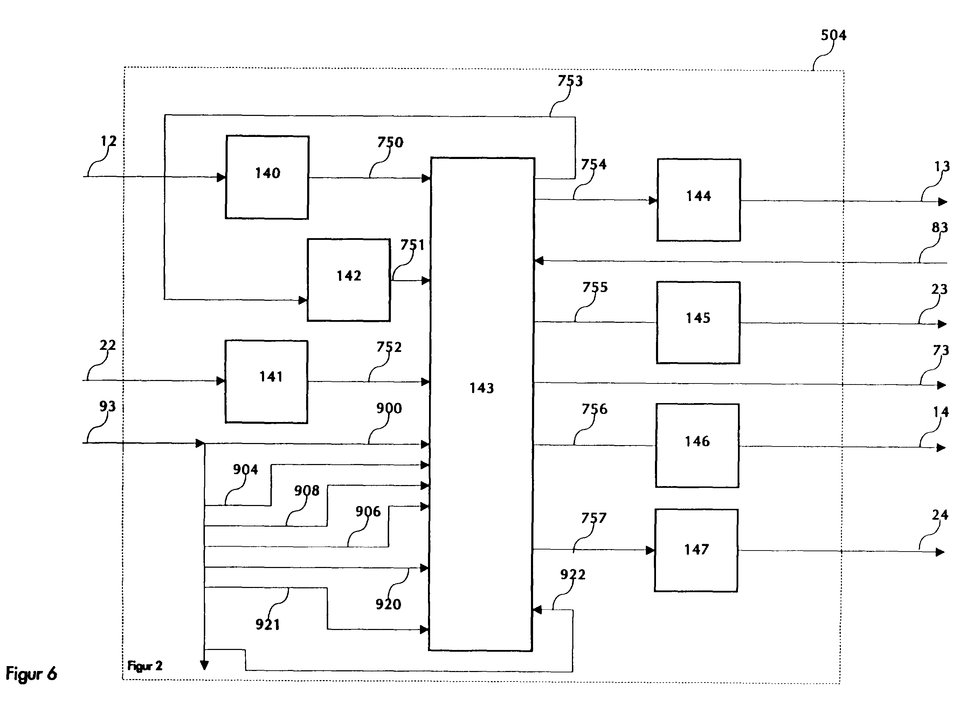

Die Methode für die Signalbewertung wird mit der Figur 6 beschrieben.

Aus dem Signal 12 werden die Signale 13 und 14 abgeleitet. Aus dem Signal 22 werden die Signale 23 und 24 abgeleitet. Das Signal 13 wird in der Bewertungs- und Korrekturvorrichutng 504 so aus dem Signal 12 abgeleitet, daß der Signalpuls, der durch den Lichtpuls mit der uncharakteristische Lichtwellenlänge im Detektor 10 erzeugt wurde und der Signalpuls, der durch den Lichtpuls mit der für den Stoff in der Küvette 7 charakteristischen Lichtwellenlänge erzeugt wurde im Signal 13 enthalten ist. Das Signal 14 wird in der Bewertungs- und Korrekturvorrichtung 504 so aus dem Signal 12 abgeleitet, daß der Signalpuls, der durch die uncharakteristische Lichtwellenlänge im Detektor 10 erzeugt wurde und der Signalpuls, der durch den Lichtpuls mit der für den Stoff in Küvette 8 charakteristischen Lichtwellenlänge im Detektor 10 erzeugte wurde, im Signal 14 enthalten ist. Das Signal 23 wird in der Bewertungs- und Korrekturvorrichtung 504 so aus dem Signal 22 abgeleitet, daß der Signalpuls, der durch den Lichtpuls mit der uncharakteristischen Lichtwellenlänge im Detektor 20 erzeugt wurde und der Signalpuls, der durch den Lichtpuls mit der für den Stoff in der Küvette 7 charakteristischen Lichtwellenlänge im Detektor 20 erzeugt wurde, im Signal 23 enthalten ist. Das Signal 24 wird in der Bewertungs- und Korrekturvorrichtung 504 so aus dem Signal 22 abgeleitet, daß der Signalpuls, der durch die uncharakteristische Lichtwellenlänge im Detektor 20 erzeugt wurde und der Signalpuls, der durch den Lichtpuls mit der für den Stoff in Küvette 8 charakteristischen Lichtwellenlänge im Detektor 20 erzeugt wurde, im Signal 24 enthalten ist.

Mit der Auftrennung in verschiedene Signale werden die einzelnen Signalpulse in ihrem zeitlichen Ablauf gedehnt. Der Signalpuls in den Signalen 13, 23, 14 und 24, der aufgund des Lichtpulses mit der uncharakteristischen Lichtwellenlänge auftritt, wird so gedehnt, daß er genau vom Anfang der Signalperiode bis zu deren Mitte dauert. Der jeweilige Signalpuls in den Signalen 13, 23, 14 und 24, der aufgrund eines Lichtpulses mit einer charakteristischen Lichtwellenlänge auftritt, wird so gedehnt und sein Anfangszeitpunkt wird so verschoben, daß er von der Mitte der Signalperiode bis zum Ende der Signalperiode dauert.

Das Signal 13 wird über eine Leitung von der Bewertungs- und Korrekturvorrichtung 504 zur Meßwertbildung und -korrektur 505 geführt. Das Signal 23 wird über eine Leitung von der Bewertungs- und Korrekturvorrichtung 504 zur Meßwertbildung und -korrketur 505 geführt. Das Signal 14 wird über eine Leitung von der Bewertungs- und Korrekturvorrichtung 504 zur Meßwertbildung und -korrektur 506 geführt. Das Signal 24 wird über eine Leitung von der Bewertungs- und Korrekturvorrichtung 504 zur Meßwertbildung und -korrektur 506 geführt.

Die Meßwertbildung und -korrektur 505 bekommt über das Signal 70 von der Systemsteuerung 550 Informationen zur Meßwertkorrektur. Die Meßwertbildung und -korrketur 506 bekommt über das Signal 74 von der Systemsteuerung 550 Informationen zur Meßwertkorrektur.

Über das Signal 71 teilt die Meßwertbildung und -korrektur 505 der Systemsteuerung 550 mit, in welchem Maße der Meßwert 72 korrigiert wurde. Über das Signal 75 teilt die Meßwertbildung und -korrektur 506 der Systemsteuerung 550 mit, in welchem Maße der Meßwert 76 korrigiert wurde.

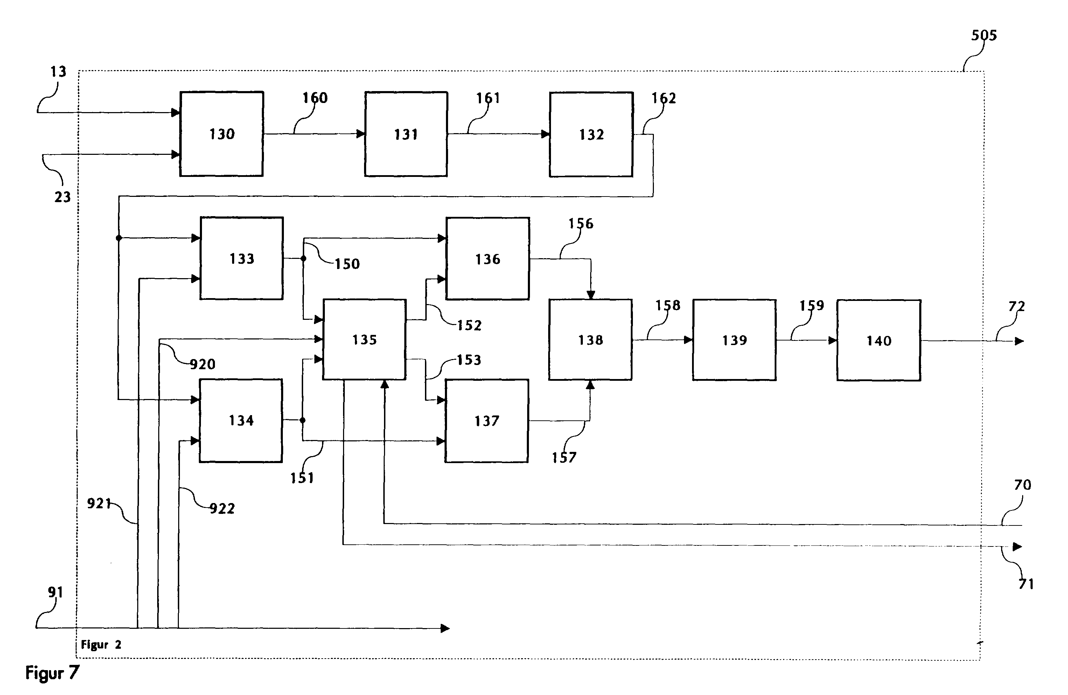

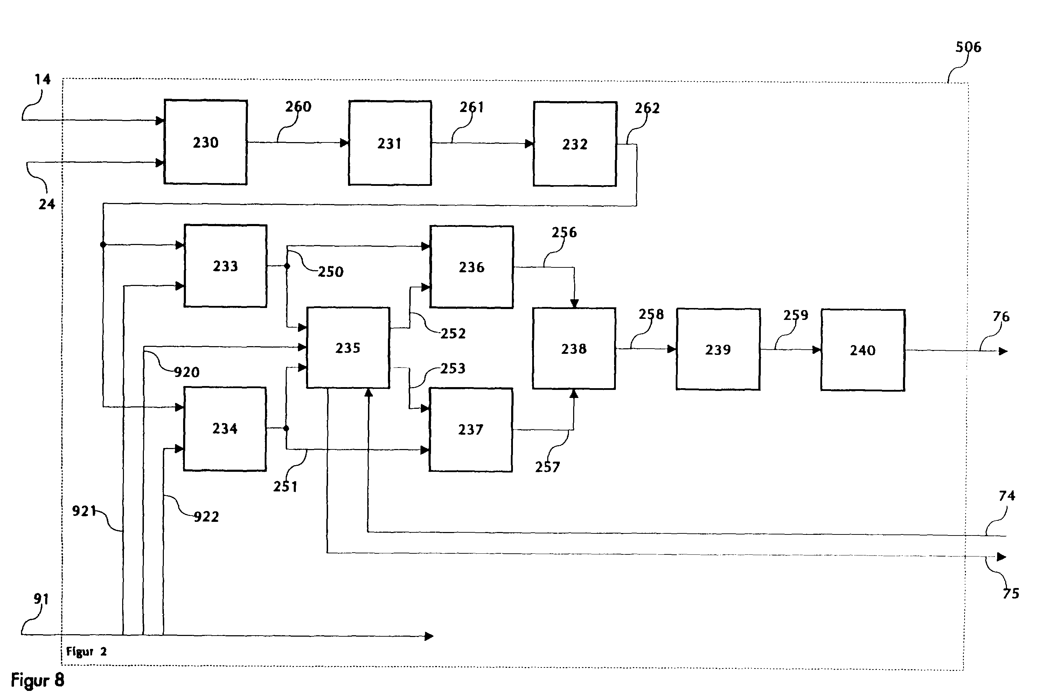

Die Funktionen der Meßwertbildung und -korrektur 505 wird mit der Figur 7, die Funktion der Meßwertbildung und -korrektur 506 wird mit der Figur 8 beschrieben.

Die Systemsteuerung 550 gibt über eine Leitung die Information über den Aufbau der Systemtakte 82 an den Taktgenerator 503 weiter. Der Taktgenerator gibt über eine Leitung alle Systemtakte 81 an die Systemsteuerung zur Synchronisation weiter.

Der Taktgenerator gibt über eine Leitung die Systemtakte 91 an die Meßwertbildung und -korrektur 505 zur Synchronisation weiter. Der Taktgenerator gibt über eine Leitung die Systemtakte 92 an die Meßwertbildung und -korrektur 506 zur Synchronisation weiter. Der Taktgenerator gibt über eine Leitung die Systemtakte 93 an die Bewertungs- und Korrekturvorrichtung 504 weiter. Der Taktgenerator gibt über eine Leitung die Systemtakte 94 an die Verstärkerstufe 501 zur Synchronisation weiter. Der Taktgenerator gibt über eine Leitung die Systemtakte 95 an die Laserstabilisierung 502 zur Synchronisation weiter.

### Verstärker und Filter:

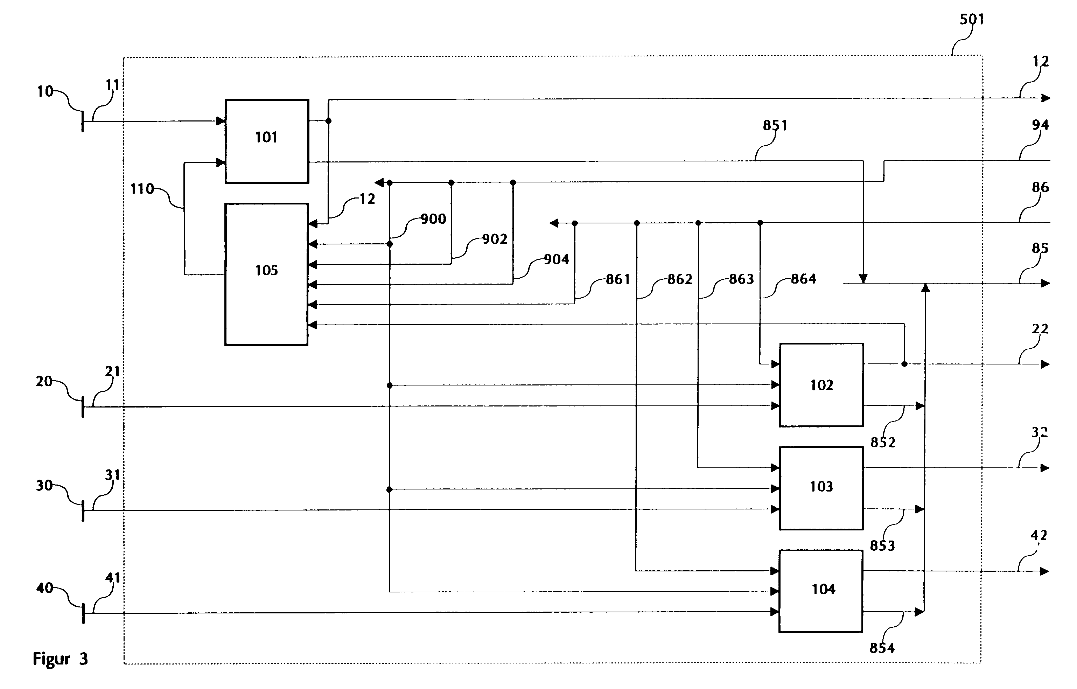

Figur 3 zeigt das Blockschaltbild der Filter- und Verstärkerschaltung 501. Bereits in Figur 1 sind die Anschlüsse an die Detektoren 10, 20, 30 und 40 und die Anschlüsse an die Auswerteelektronik 12, 22, 32, 42, 85, 86 und 94 dargestellt.

Der elektrische Signal 11 des Detektors 10 wird über eine Leitung dem Verstärker und Filter 101 zugeführt. Das elektrische Signal 21 des Detektors 20 wird über eine Leitung dem Verstärker und Filter 102 zugeführt. Das elektrische Signal 31 des Detektors 30 wird über eine Leitung dem Verstärker und Filter 103 zugeführt. Das elektrische Signal 41 des Detektors 40 wird über eine Leitung dem Verstärker und Filter 104 zugeführt.

Das Ausgangssignal 12 des Verstärkers und Filters 101 wird durch Verstärkung und Filterung aus dem Signal 11 gewonnen. Das Ausgangssignal 22 des Verstärkers und Filters 102 wird durch Verstärkung und Filterung aus dem Signal 21 gewonnen. Das Ausgangssignal 32 des Verstärkers und Filters 103 wird durch Verstärkung und Filterung aus dem Signal 31 gewonnen. Das Ausgangssignal 42 des Verstärkers 104 wird durch Verstärkung und Filterung aus dem Signal 41 gewonnen.

Das Taktsignal 900 aus dem Systemtakt 94 wird über eine Leitung an den Verstärker und Filter 102 angeschlossen. Das Taktsignal 900 aus dem Systemtakt 94 wird über eine Leitung an den Verstärker und Filter 103 angeschlossen. Das Taktsignal 900 wird über eine Leitung an Filter und Verstärker 104 angeschlossen.

Alle Filter in den Verstärkern und Filtern 101, 102, 103 und 104 werden auf die selbe Grenzfrequenz eingestellt. Vorzugszweise ist der Filter ein Tiefpaßfilter. Seine Grenzfrequenz ist vorzugsweise so eingestellt, daß ein Signal mit der selben Frequenz, die der Lichtpulswiederholrate entspricht nicht verändert wird. Mit anderen Worten: die Grenzfrequenz der Filter enspricht der Pulswiederholungsfrequenz in den Detektorsignalen 11, 21, 31 und 41.

Die Verstärker in den Verstärkern und Filtern 102, 103 und 104 regeln ihre Verstärkung selbst so, daß die Pegel der Signale 22, 32 und 42 ungefähr gleich groß sind. Die Zeitkonstante der Regelschleifen ist so einzustellen, daß es nicht zu Schwingungen der Regelschleife und somit zu unerwünschten Anteilen in den Signalen 22, 32 und 42 kommen kann. Die Änderung des Verstärkungsfaktors der Verstärker und Filter 102, 103 und 104 erfolgt vorzugsweise synchron zum Signal 900 am Beginn einer jeden neuen Signalperiode. Da die Signalauswertung in der nachgeschalteten Elektronik immer nur innerhalb einer Signalperiode erfolgt, wird damit ein direkter Einfluß auf den Meßwert verhindert.

Der Verstärkungsfaktor des Verstärkers und Filters 101 wird mit dem Signal 110 durch die Verstärkungseinstellung 105 eingestellt. Zur Bestimmung des Verstärkungsfaktors ist die Verstärkungseinstellung 105 über eine Leitung mit dem Ausgangssignal 12 des Verstärkers und Filters 101 verbunden. Aus dem Systemtakt 94 erhält die Verstärkungseinstellung 105 über eine Leitung das Taktsignal 900. Aus dem dem Systemtakt 94 erhält die Verstärkungseinstellung 105 über eine Leitung das Taktsignal 902. Aus dem Systemtakt 94 erhält die Verstärkungseinstellung 105 über eine Leitung das Taktsignal 904. Aus dem Signal 86 zur Einstellung der Verstärker- und Filterparameter erhält die Verstärkungseinstellung 105 über eine Leitung das Signal 861 zugeführt. Über eine Leitung erhält die Verstärkungseinstellung das Ausgangssignal 22 des Verstärkers und Filters 102 zugeführt.

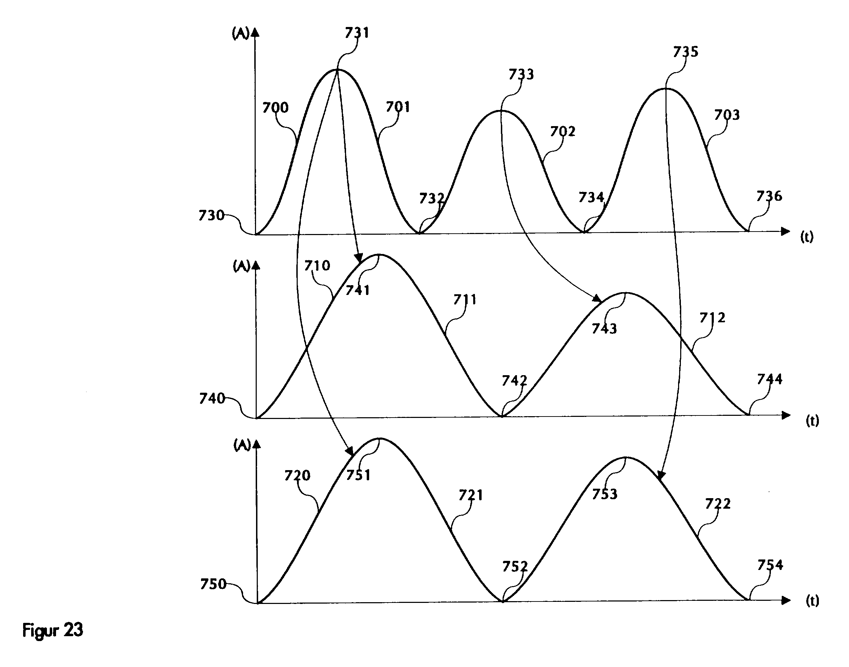

Die Verstärkerungseinstellung 105 stellt den Pegel des Signales 12 so ein, daß der Signalpegel zwischen dem Zeitpunkt 730 und dem Zeitpunkt 732 (Figur 23) der Signale 12 und 22 gleich ist. Tritt ein Pegelunterschied zwischen den Signalen 12 und 22 zwischen den Zeitpunkten 730 und 732 auf, so wird aus der Pegeldifferenz der neue Verstärkungsfaktor berechnet und zum Zeitpunkt 730 gesetzt.

Durch die synchrone Verstärkungseinstellung am Anfang einer Signalperiode wird ein Einfluß auf das Meßergebnis vermieden.

Die Verstärkungseinstellung 105 erhält aus den Verstärker- und Filterparametern 86 das Signal 861 über eine Leitung zugeführt. Mit dem SIgnal 861 kann die automatische Verstärkungsregelung abgeschaltet und der Verstärkunsfaktor manuell eingestellt werden. Der Verstärker und Filter 102 erhält aus den Verstärker- und Filterparametern das Signal 862 über eine Leitung zugeführt. Mit dem Signal 862 kann die automatische Verstärkungsregelung des Verstärkers und Filters 102 abgeschaltet und der Verstärkungsfaktor manuell eingestellt werden. Der Verstärker und Filter 103 erhält aus den Verstärker- und Filterparametern 86 das Signal 863 über eine Leitung zugeführt. Mit dem Signal 863 kann die automatische Verstärkungsregeleung des Verstärkers und Filters 103 abgeschaltet und der Verstärkungsfaktor manuell eingestellt werden. Der Verstärker und Filter 104 erhält aus den Verstärker- und Filterparametern 86 das Signal 864 über eine Leitung zugeführt. Mit dem Signal 864 kann die automatische Verstärkungsregelung des Verstärkers und Filters 104 ausgeschaltet und der Verstärkungsfaktor manuell vorgegeben werden.

### Laserstabilisierung:

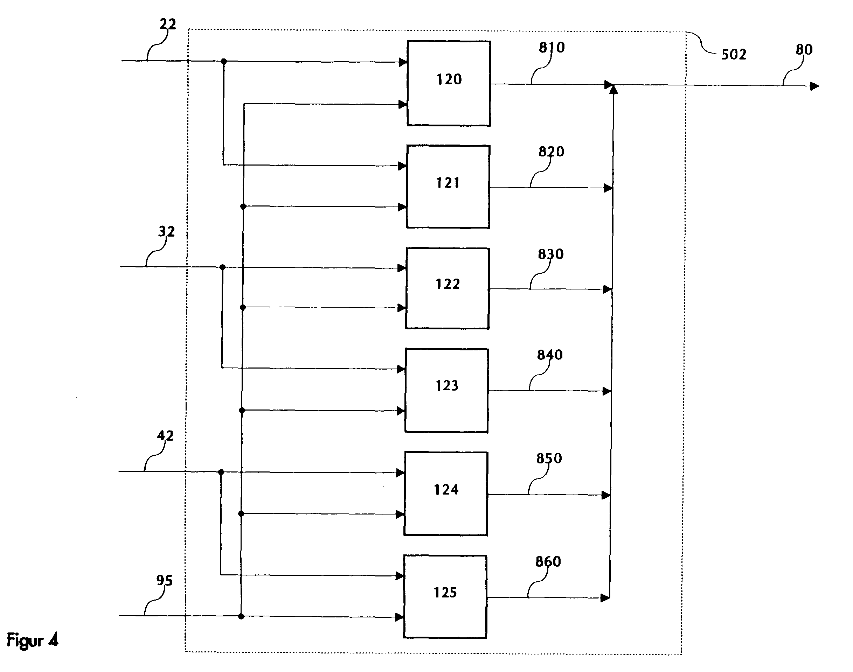

Figur 4 zeigt das Blockschaltbild der Signalaufbereitung zur Laserstabilisierung 502. Die äußeren Anschlüsse sind bereits mit der Figur 2 beschrieben. Das Signal 22 ist das aufbereitete Signal aus dem Detektor 20. Das Signal 32 ist das aufbereitete Signal des Detektors 30. Das Signal 42 ist das aufbereitete Signal des Detektors 40. Das Signal 95 ist der Systemtakt.

Das Signal 22 ist über je eine Leitung mit der Sample & Hold - Schaltung 120 und der Gleichrichterschaltung 121 verbunden. Das Signal 32 ist mit der Sample & Hold - Schaltung 122 und der Gleichrichterschaltung 123 über je eine Leitung verbunden. Das Signal 42 ist mit der Sample & Hold - Schaltung 124 und der Gleichrichterschaltung 125 über je eine Leitung verbunden.

Der Systemtakt 95 ist über eine Leitung mit der Sample & Hold - Schaltung 120 verbunden. Der Systemtakt 95 ist über eine Leitung mit der Gleichrichterschaltung 121 verbunden. Der Systemtakt 95 ist über eine Leitung mit der Sample & Hold - Schaltung 122 verbunden. Der Systemtakt 95 ist über eine Leitung mit der Gleichrichterschaltung 123 verbunden. Der Systemtakt 95 ist über eine Leitung mit der Sample & Hold - Schaltung 124 verbunden. Der Systemtakt 95 ist über eine Leitung mit der Gleichrichterschaltung 125 verbunden.

Das Ausgangssignal 810 der Sample & Hold - Schaltung 120 wird dem Laserstatussignal 80 zugeführt. Das Ausgangssignal 820 der Gleichrichterschaltung 121 wird dem Laserstatussignal 80 zugeführt. Das Ausgangssignal 830 der Sample & Hold - Schaltung 122 wird dem Laserstatussignal 80 zugeführt. Das Ausgangssignal 840 der Gleichrichterschaltung 123 wird dem Laserstatussignal 80 zugeführt. Das Ausgangssignal der Sample & Hold - Schaltung 124 wird dem Laserstatussignal 80 zugeführt. Das Ausgangssignal 860 der Gleichrichterschaltung 125 wird dem Laserstatussignal 80 zugeführt.

Die Sample & Hold - Schaltung 120 tastet das Signal 22 zu durch dem Systemtakt 95 vorgegebenen Zeitpunkten ab. Die Sample & Hold -. Schaltung 122 tastet das Signal 32 zu durch dem Systemtakt 95 vorgegebenen Zeitpunkten ab. Die Sample & Hold - Schaltung 124 tastet das Signal 42 zu durch dem Systemtakt 95 vorgebenen Zeitpunkten ab.

Die Gleichrichterschaltung 121 bestimmt innerhalb eines durch dem Systemtakt 95 vorgebenen Zeitraum den Maximalwert und den Durchschnittswert im Signal 22. Die Gleichrichterschaltung 123 bestimmt innerhalb eines durch dem Systemtakt 95 vorgebenen Zeitraum den Maximalwert und den Durchschnittstwert im Signal 32. Die Gleichrichterschaltung 125 bestimmt innerhalb eines durch dem Systemtakt 95 vorgegebenen Zeitraum den Maximalwert und den Durchschnittswert im Signal 42.

### Taktgenerator:

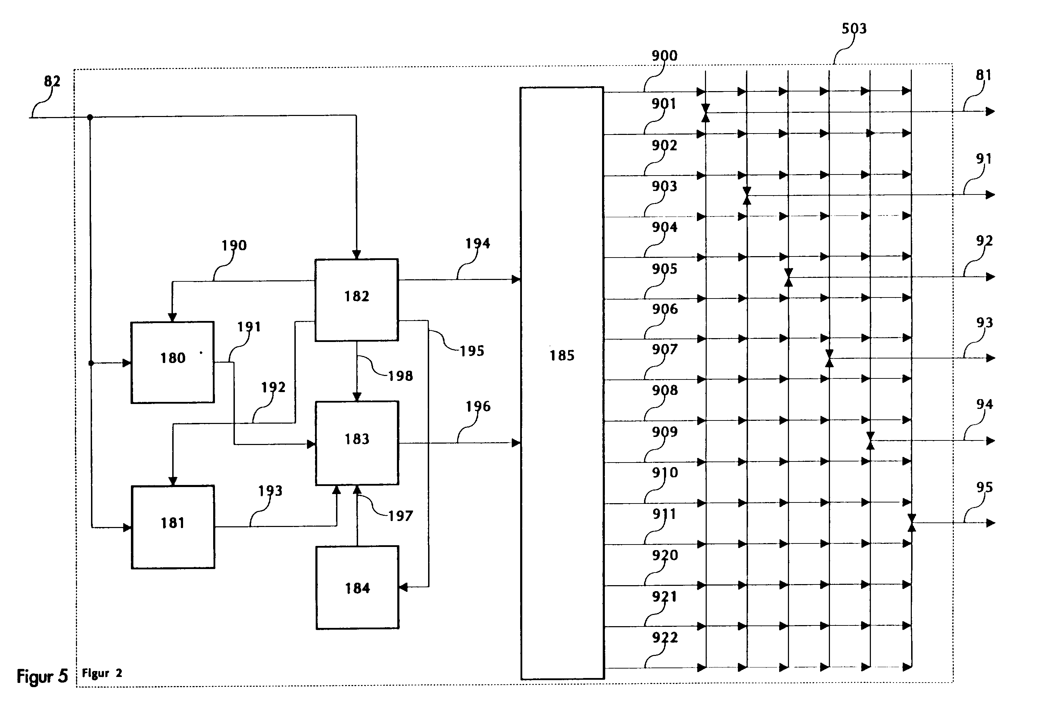

Die Figur 5 zeigt Details des Taktgenerators 503. Bereits in Figur 2 dargestellt sind die externen Anschlüsse 81, 82, 91, 92, 93, 94 und 95 des Taktgenerators 503.

Über eine Leitung ist das Signal 82 an die Ablaufsteuerung 182 angeschlossen. Über eine Leitung ist das Signal 82 an das Datenregister 180 angeschlossen. Über eine Leitung ist das Signal 82 an das Adressenregister 181 angeschlossen. Mit Hilfe des Signales 82 tauscht die Systemsteuerung 550 Daten mit dem Musterspeicher 183 aus.

Die Ablaufsteuerung 182 ist über eine Leitung durch das Signal 190 mit dem Datenregister 180 verbunden. Die Ablaufsteuerung 182 ist über eine Leitung durch das Signal 192 mit dem Adressenregister 181 verbunden. Die Ablaufsteuerung 182 steuert mit den Signalen 190 und 192 das Datenregister 180 und das Adressenregister 181 so an, daß die Systemsteuerung Daten mit dem Musterspeicher 183 austauschen kann, ohne daß die Ausgabe des Taktmusters 196 unterbrochen werden muß.

Die Ablaufsteuerung 182 ist über eine Leitung durch das Signal 198 mit dem Musterspeicher 183 verbunden. Die Ablaufsteuerung 182 ist über eine Leitung durch das Signal 195 mit dem Adressengenerator 184 verbunden. Die Ablaufsteuerung 182 ist über eine Leitung durch das Signal 194 mit dem Ausgaberegister 185 verbunden. Der Musterspeicher ist über eine Leitung durch das Signal 196 mit dem Ausgaberegister 185 verbunden.

Am Ausgaberegister steht der Takt 900 zur Verfügung. Am Ausgaberegister steht der Takt 901 zur Verfügung. Am Ausgaberegister steht der Takt 902 zur Verfügung. Am Ausgaberegister steht der Takt 903 zur Verfügung. Am Ausgaberegister steht der Takt 904 zur Verfügung. Am Ausgaberegister steht der Takt 905 zur Verfügung. Am Ausgaberegister steht der Takt 906 zur Verfügung. Am Ausgaberegister steht der Takt 907 zur Verfügung. Am Ausgaberegister steht der Takt 908 zur Verfügung. Am Ausgaberegister steht der Takt 909 zur Verfügung. Am Ausgaberegister steht der Takt 910 zur Verfügung. Am Ausgaberegister steht der Takt 911 zur Verfügung. Am Ausgaberegister steht der Takt 920 zur Verfügung. Am Ausgaberegister steht der Takt 921 zur Verfügung. Am Ausgaberegister steht der Takt 922 zur Verfügung.

Hinter dem Ausgaberegister 185 werden die Takte 900, 901, 902, 903, 904, 905, 906, 907, 908, 909, 910, 911, 920, 921 und 922 zum Systemtakt 81 zusammengefaßt. Hinter dem Ausgaberegister 185 werden die Takte 900, 901, 902, 903, 904, 905, 906, 907, 908, 909, 910, 911, 920, 921 und 922 zum Systemtakt 91 zusammengefaßt. Hinter dem Ausgaberegister 185 werden die Takte 900, 901, 902, 903, 904, 905, 906, 907, 908, 909, 910, 911, 920, 921 und 922 zum Systemtakt 92 zusammengefaßt. Hinter dem Ausgaberegister 185 werden die Takte 900, 901, 902, 903, 904, 905, 906, 907, 908, 909, 910, 911, 920, 921 und 922 zum Systemtakt 93 zusammengefaßt. Hinter dem Ausgaberegister 185 werden die Takte 900, 901, 902, 903, 904, 905, 906, 907, 908, 909, 910, 911, 920, 921 und 922 zum Systemtakt 94 zusammengefaßt.Hinter dem Ausgaberegister 185 werden die Takte 900, 901, 902, 903, 904, 905, 906, 907, 908, 909, 910, 911, 920, 921 und 922 zum Systemtakt 95 zusammengefaßt.

Die Ablaufsteuerung koordiniert den Ablauf zwischen dem Adressengeneator 184, dem Musterspeicher 183 und dem Ausgaberegister 185 so, daß ein kontinuierlicher Datenstrom 196 das Ausgaberegister erreicht. Das Ausgaberegister übernimmt regelmäßig eine Datum aus dem Datenstrom 196 zur Ausgabe als Taktmuster 900, 901, 902, 903, 904, 905, 906, 907, 908, 909, 910, 911, 920, 921 und 922.

Die Systemsteuerung legt die Taktinformationen über das Signal 82 wie folgt im Musterspeicher 182 ab. Der Takt 900 signalisiert den Beginn einer neuen Signalperiode und das Ende des zweiten charakteristischen Signalpulses in den Signalen 12, 22, 32 und 42, Der Takt 901 signalisiert das Ende des ersten Viertels des uncharakteristischen Signalpulses in den Signalen 12, 22, 32 und 42. Der Takt 902 signalisiert das Ende der ersten Hälfte des uncharakteristischen Signalpulses in den Signalen 12, 22, 32 und 42. Der Takt 903 signalisiert das Ende des dritten Viertels des uncharakteristischen Signalpulses in den Signalen 12, 22, 32 und 42. Der Takt 904 signalisiert das Ende des uncharakteristischen Signalpulses und den Anfang des ersten charakteristischen Signalpulses in den Signalen 12, 22, 32 und 42. Der Takt 905 signalisiert das Ende des ersten Viertels des ersten charakteristischen Signalpulses in den Signalen 12, 22, 32 und 42. Der Takt 906 signalisiert das Ende der ersten Hälfte des ersten charakteristischen Signalpulses in den Signalen 12, 22, 32 und 42. Der Takt 907 signalisiert das Ende des dritten Viertels des ersten charakteristischen Signalpulses in den Signalen 12, 22, 32 und 42. Der Takt 908 signalisiert das Ende des ersten charakteristischen Signalpulses und den Anfang des zweiten charakteristischen Signalpulses in den Signalen 12, 22, 32 und 42. Der Takt 909 signalisiert das Ende des ersten Viertels des zweiten charakteristischen Signalpulses in den Signalen 12, 22, 32 und 42. Der Takt 910 signalisiert das Ende der ersten Hälfte des zweiten charakteristischen Signalpulses in den Signalen 12, 22, 32 und 42. Der Talt 911 signalisiert das Ende des dritten veirtels des zweiten charakteristischen Signalpulses in den Signalen 12, 22, 32 und 42.

Der Takt 920 signalisiert den Beginn der Signalperiode für die Meßwertbildung. Der Takt 921 signalisiert die Mitte des uncharakteristischen Signalpulses für die Meßwertbildung. Der Takt 922 signalisiert die Mitte des charakteristischen Signalpulses für die Meßwertbildung.

### Signalbewertung und -korrektur:

In Figur 6 ist die Bewertungs- und Korrekturvorrichtung 504 als Blockschaltbild dargestellt. Die Signale 93, 12, 22, 13, 23, 73, 14 und 24 sind bereits mit der Figur 2 beschrieben worden.

Das Eingangssignal 12 wird über eine Leitung dem Analog-/-Digitalwandler 140 zugeführt. Das Eingangssignal 22 wird über eine Leitung dem Analog-/Digitalwandler 141 zugeführt.

Der Analog-/Digitalwandler 140 wandelt das analoge Signal 12 in das digitale Signal 750 um. Der Informationsgehalt der Signale 12 und 750 ist gleich. Der Analog-/Digitalwandler 141 wandelt das analoge Signal 22 in das digitale Signal 752 um. Der Informationsgehalt der Signale 22 und 752 ist gleich.

Das Ausgangssignal 750 des Analog-/Digitalwandlers 140 wird über eine Leitung der Bewertungs- und Korrektureinrichtung 143 zugeführt. Das Ausgangssignal 752 des Analog-/Digitalwandlers 141 wird über eine Leitung der Bewertungs- und Korrekturvorrichtung 143 zugeführt.

Der Sollwertspeicher 142 ist über zwei Leitungen mit der Bewertungs- und Korrekturvorrichtung 143 verbunden. Mit dem Signal 753 kann der Sollwertspeicher mit den Sollwerten beschrieben werden. Mit dem Signal 751 kann die Bewertungs- und Korrekturvorrichtung 143 den Sollwert aus dem Sollwertspeicher 142 auslesen.

Das Ausgangssignal 754 der Bewertungs- und Korrekturvorrichtung 143 wird über eine Leitung dem Digital-/Analogwandler 144 zugeführt. Der Digital-/Analogwandler 144 wandelt das digitale Signal 754 in das analoge Signal 13 um. Der Informationsgehalt der Signale 754 und 13 ist gleich. Das Ausgangssignal 755 der Bewertungs- und Korrekturvorrichtung 143 wird über eine Leitung an den Digital-/Analogwandler 145 angeschlossen. Der Digital-/Analogwandler 145 wandelt das digitale Signal 755 in das analoge Signal 23 um. Der Informationsgehalt der Signale 755 und 23 ist gleich. Das Ausgangssignal 756 der Bewertungs- und Korrekturvorrichtung 143 wird über eine Leitung dem Digital-/-Analogwandler 146 zugeführt. Der Digital-/Analogwandler 146 wandelt das digitale Signal 756 in das analoge Signal 14 um. Der Informationsgehalt der Signale 756 und 14 ist gleich. Das Ausgangssignal 757 der Bewertungs- und Korrekturvorrichtung 143 wird über eine Leitung dem Digital-/-Analogwandler 147 zugeführt. Der Digital-/Analogwandler wandelt das digitale Signal 757 in das analoge Signal 24 um. Der Informationsgehalt der Signale 757 und 24 ist gleich.

Aus dem Systemtakt 93 wird der Takt 900 über eine Leitung an die Bewertungs- und Korrekturvorrichtung 143 angeschlossen. Aus dem Systemtakt 93 wird der Takt 904 über eine Leitung an die Bewertungs- und Korrekturvorrichtung 143 angeschlossen. Aus dem Systemtakt 93 wird der Takt 906 an die Bewertungs- und Korrekturvorrichtung 143 über eine Leitung angeschlossen. Aus dem Systemtakt 93 wird der Takt 908 an die Bewertungs- und Korrekturvorrichtung 143 über eine Leitung angeschlossen. Aus dem Systemtakt 93 wird der Takt 920 an die Bewertungs- und Korrekturvorrichtung 143 über eine Leitung angeschlossen. Aus dem Systemtakt 93 wird der Takt 921 an die Bewertungs- und Korrekturvorrichtung 143 über eine Leitung angeschlossen. Aus dem Systemtakt 93 wird der Takt 922 an die Bewertungs- und Korrekturvorrichtung 143 über eine Leitung angeschlossen.

Die Taktsignale 900, 904, 906 und 908 synchronisieren die Bewertungs- und Korrekturvorrichtung 143 mit den beiden Eingangssignalen 12 und 13 bzw. 750 und 752. Die Taktsignale 920, 921 und 922 snchronisieren die Ausgangssignale 754, 755, 756 und 757 der Bewertungs- und Korrekturvorrichtung 143.

Der Takt 900 signalisisert den Anfang einer Signalperiode und das Ende des zweiten charakteristischen Signalpulses in den Signalen 12 und 22. Der Takt 904 signalisiert das Ende des uncharakteristischen Signalpulses in den Signalen 12 und 22. Der Takt 906 signalisiert die Mitte der Signalperiode in den Signalen 12 und 22. Der Takt 908 signalisiert das Ende des ersten charakteristischen Signalpulses in den Signalen 12 und 22. Der Takt 920 signalisiert den Anfang der Signalperiode der Ausgangssignale 754, 755, 756 und 757. Der Takt 921 signalisiert die Mitte des ersten Pulses in den Ausgangssignalen 754, 755, 756 und 757. Der Takt 922 signalisiert die Mitte des zweiten Pulses in den Ausgangssignalen 754, 755, 756 und 757.

Die Bewertungs- und Korrektureinrichtung 143 liest innerhalb einer Signalperiode den Datenstrom 750 und den Datenstrom 752 ein und speichert beide Datenströme zwischen. Nachdem die Daten einer Periode eingelesen sind, werden die Daten der nächsten Signalperiode in einen anderen Speicher eingelesen.

Gleichzeitig mit dem Einlesen der Daten der nächsten Signalperiode werden die Daten der vorhergegangenen Signalperiode bewertet. Für die Bewertung können alle sechs zwischengespeicherten Signalpulse normiert werden. Die sechs Normierungsfaktoren werden zwischengespeichert. Anschließend werden die drei Signalpulse des Signales 22 mit den Sollwerten aus dem Sollwertspeicher 142 verglichen. Weichen die Pulse von den abgelegten Pulsen ab, so werden die Pulse entsprechend korrigiert. Die drei Signalpulse im Signal 22 müssen immer den abgelegten Werten im Sollwertspeicher 142 entsprechen. Zur weiteren Bewertung der zwischengespeicherten Signalpulse wird deren erste Ableitung gebildet und ebenfalls mit der abgelegten Kurve für die ersten Ableitungen aus dem Sollwertspeicher verglichen und bei Bedarf korrigiert. Da der Lichtstrahl 200 des Lasers 1 direkt über die Strahlteiler 2 und 3 zum Detektor 20 gelangt, können in dem Signal 22 nur Störungen enthalten sein, die durch das System selbst verursacht wurden. Die selben Störungen sind deshalb auch in den Signalpulsen des Signales 12 enthalten. Die Signalpulse des Signales 12 werden nun mit den selben Korrekturen versehen, wie die Signalpulse des Signales 22. Nach der Korrektur werden die Signalpulse des Signales 12 mit den Sollwerten aus dem Sollwertspeicher 142 verglichen. Da die einzelnen Pulse normiert wurden, der Effekt der Absoprtion des Lichtstrahles auf der Meßstrecke aber zu keiner Verformung der einzelnen Lichtpulse führt, sind die Ursachen von Pulsveränderungen andere. Der normierte Puls kann also ohne negative Auswirkung auf die Meßwertbildung korrigiert werden. Nach der Bewertung und Korrektur werden die einzelnen Pulse mit den zwischengespeicherten Normierungsfaktoren auf ihre ursprüngliche Amplitude zurückgerechnet. Alternativ kann die abgespeicherte Kurvenform auf die aktuelle Amplitude umgerechnet werden.

Im nächsten Schritt werden die beiden Datenströme 750 und 752 in die Datenströme 754, 755, 756 und 757 aufgeteilt. Jeder der beiden Datenströme 750 und 752 besteht aus den Daten des uncharaktersitischen Lichtpulses und zweier charakteristischer Lichtpulse. Der Datenstrom 750 wird nun so aufgeteilt, daß aus diesem die Datenströme 754 und 756 entstehen. Der Datenstrom 754 enthält die Daten des uncharakteristischen Signalpulses und die Daten des ersten charakteristischen Signalpulses. Der Datenstrom 756 enthält die Daten des uncharakterstischen Signalpulses und die Daten des zweiten charakteristischen Signalpulses. Der Datenstrom 752 wird nun so aufgeteilt, daß aus ihm die Datenströme 755 und 757 entstehen. Der Datenstrom 755 enthält die Daten des uncharakteristischen Signalpulses und die Daten des ersten charakteristischen Signalpulses. Der Datenstrom 757 enthält die Daten des uncharakteristischen Signalpulses und die Daten des zweiten charakteristischen Signalpulses.

Mit der Aufteilung der Datenströme 750 und 752 werden gleichzeitig die einzelnen Pulse gedehnt und die Phasenlage der einzelnen Pulse verschoben. Der uncharakteristische Signalpuls wird dabei so verschoben, daß er am Anfang der Signalperiode beginnt und in der Mitte der Signalperiode endet. Der charakteristische Signalpuls wird dabei so verschoben, daß er in der Mitte der Signalperiode beginnt und am Ende der Signalperiode endet.

Die Ausgabe der Datenströme 754, 755, 756 und 757 wird mit den Taktsignalen 920, 921 und 922 synchronisiert.

### Meßwertbildung:

Die Meßwertbildung und -korrektur 505 ist in Figur 7 dargestellt. Die externen Anschlüsse 13, 23, 91, 70, 71 und 72 sind bereits mit Figur 2 beschrieben.

Das Signal 13 ist über eine Leitung an den Subtrahierer 130 angeschlossen. Das Signal 23 ist über eine Leitung an den Subtrahierer 130 angeschlossen. Der Subtrahierer 130 bildet die Differenz zwischen den Signalen 13 und 23.

Grundsätzlich spielt die gewählte Polarität des Ausgangssignales 160 des Subtrahierers 130 keine Rolle, zur Vereinfachung der Darstellung wird im folgenden Text von einem positiven Signal 160 ausgegangen, wenn sich auf der Meßstrecke 5 das ausgesuchte Gas befindet und die Auswerteelektronik richtig abgeglichen ist.

Das Ausgangssignal 160 des Subtrahierers 130 wird über eine Leitung an den Verstärker 131 angeschlossen. Das Ausgangssignal 161 des Verstärkers 131 wird über eine Leitung an den Filter 132 angeschlossen. Der Filter ist vorzugsweise ein Tiefpaßfilter, der das Signal von unerwünschten Signalanteilen befreit. Seine Grenzfrequenz entspricht mindestens der halben Pulswiederholungsfrequenz der Signale 13 bzw. 23. Die Verstärkungsfaktoren des Verstärkers 131 können durch die Systemsteuerung 550 einstellbar gemacht werden. Zwischen dem Subtrahierer 138 und dem Verstärker 139 kann ein weiteres Sample & Hold-Glied geschaltet werden. Es übernimmt das Ausgangsignal des Subtrahierers erst, nachdem dieses eingeschwungen ist.

Das Signal 13 ist aus dem elektrischen Signal des Detektors 10 hinter der Meßstrecke 5 abgeleitet. Das Signal 23 ist aus dem elektrischen Signal des Detektors 20 hinter der Referenzstrecke 6 abgeleitet. Die beiden Signale 13 und 23 sind so abgeglichen, daß ihre Amplitude während der Emission des uncharaktersitischen Lichtpulses durch den Laser 1 gleich ist. Das Ausgangssignal des Subtrahierers 130 ist deshalb während dieser Emissionsphase null. Da die beiden Signale 13 und 23 aus dem selben Lichtstrahl 200 abgeleitet sind, führen Änderungen, z. B. in der Intensität des Lichtstrahles, zu keinem von null verschiedenem Signal 160 am Ausgang des Subtrahierers 130. Es werden also keine Störungen, des Lichtstrahles 200, die durch den Laser und seiner Ansteuerung verursacht werden, in dem Signal 160 vorhanden sein. Emittiert der Laser 1 nun Licht mit einer charakteristischen Lichtwellenlänge, so wird das Signal 13 abhängig von der Konzentration des ausgesuchten Gases eine geringere Amplitude als das Signal 23 aufweisen. Das ausgesuchte Gas wird den Lichtstrahl 203 auf der Meßstrecke 5 bei der charakteristischen Wellenlänge proportional seiner Konzentration dämpfen. Da sich auf der Referenzstrecke 6 nicht das ausgesuchte Gas befindet, wird der Lichtrahl 204 nicht gedämpft. Die Amplitude des Ausgangssignales 160 des Subtrahierers 130 wird während der Aussendung des Lichtstrahles 200 mit der charakteristischen Lichtwellenlänge folglich proportional zur Konzentration des ausgesuchten Gases auf der Meßstrecke ansteigen.

Das Ausgangssignal 162 des Filters 132 wird den Sample & Hold - Schaltungen 133 und 134 über je eine Leitung zugeführt. Aus dem Systemtakt 91 wird über eine Leitung das Taktsignal 921 der Sample & Hold - Schaltung 133 zugeführt. Das Taktsignal 921 signalisiert die Mitte des uncharakteristischen Signalpulses. Die Sample & Hold - Schaltung 133 tastet somit das Signal 162 genau in der Mitte des uncharakteristischen Signalpulses ab. Aus dem Systemtakt 91 wird über eine Leitung das Taktsignal 922 der Sample & Hold - Schaltung 134 zugeführt. Das Taktsignal 922 signalisiert die Mitte des charakteristischen Lichtpulses. Die Sampel & Hold - Schaltung 134 tastet somit das Signal 162 genau in der Mitte des charakteristischen Pulses ab.

Das Ausgangssignal 150 der Sample & Hold - Schaltung 133 wird über je eine Leitung der Sample & Hold - Schaltung 136 und der Gradientenbeurteilung 135 zugeführt. Das Ausgangssignal 151 der Sample & Hold - Schaltung 134 wird über je eine Leitung der Sample & Hold - Schaltung 137 und der Gradientenbeurteilung 135 zugeführt. Aus dem Systemtakt 91 wird über eine Leitung das Taktsignal 920 der Gradientenbeurteilung 135 zugeführt. Über eine Leitung wird der Gradientenbeurteilung 135 das Signal 70 der Systemsteuerung 550 zugeführt. Über eine Leitung wird der Systemsteuerung 550 das Signal 71 der Gradientenbeurteilung 135 zugeführt.

Über das Signal 70 teilt die Systemsteuerung 550 der Gradientenbeurteilung 135 die zulässigen Absolutwerte der Signale 150 und 151 sowie die zulässigen Änderungen in den Signalen 150 und 151 mit. Über das Signal 71 teilt die Gradientenbewertung 135 der Systemsteuerung 550 mit, in welchem Maße sie die Weitergabe der Signal 150 und 151 blockieren mußte.

Mit dem Signal 152 gibt die Gradientenbeurteilung die Übernahme des Signales 150 durch die Sample & Hold - Schaltung 135 am Ende einer Signalperiode frei. Mit dem Signal 153 gibt die Gradientenbeurteilung 135 die Übernahme des Signales 151 durch die Sample & Hold - Schaltung 137 am Ende einer Signalperiode frei.

Das Ausgangssignal 156 der Sample & Hold - Schaltung 136 wird über eine Leitung zum Subtrahierer 138 geführt. Das Ausgangssignal 157 der Sample & Hold - Schaltung 137 wird über eine Leitung zum Subtrahierer 138 geführt. Der Subtrahierer bildet die Differenz aus den Signalen 136 und 137. Der Subtrahierer bildet folglich die Differenz in der Signalamplitude des Signales 162 während der Mitte des charakteristischen Signalpulses und der Mitte des uncharakteristischen Signalpulses. Sein Ausgangssignal 158 ist somit ein Maß für die Konzentration des ausgesuchten Gases auf der Meßstrecke 5.

Das Ausgangssignal 158 des Subtrahierers 138 wird über eine Leitung dem Verstärker 139 zugeführt. Das Ausgangssignal 159 des Verstärkers 139 wird über eine Leitung dem Filter 140 zugeführt. Die Aufgabe des Filters 140 ist in erster Linie die Glättung des Signales 159. Bei Änderungen der Konzentration des ausgesuchten Gases auf der Meßstrecke 5 ändert sich das Signal 159 stufenartig aufgrund des Verhaltens der Sample & Hold - Schaltungen 133, 134, 136 und 137. Das Ausgangssignal 72 des Filters 140 wird über eine Leitung der Systemsteuerung zur weiteren Verarbeitung zugeführt.

### Meßwertbildung für die Querempfindlichkeitskorrektur:

Die Meßwertbildungs- und Korrektur 505 ist in Figur 8 dargestellt. Die externen Anschlüsse 14, 24, 91, 74, 75 und 76 sind bereits mit Figur 2 beschrieben.

Das Signal 14 ist über eine Leitung an den Subtrahierer 230 angeschlossen. Das Signal 24 ist über eine Leitung an den Subtrahierer 230 angeschlossen. Der Subtrahierer 230 bildet die Differenz zwischen den Signalen 14 und 24.

Grundsätzlich spielt die gewählte Polarität des Ausgangssignales 260 des Subtrahierers 230 keine Rolle, zur Vereinfachung der Darstellung wird im folgenden Text von einem positiven Signal 260 ausgegangen, wenn sich auf der Meßstrecke 5 das ausgesuchte Gas befindet, welches die Querempfindlichkeit verursacht und die Auswerteelektronik richtig abgeglichen ist.

Das Ausgangssignal 260 des Subtrahierers 230 wird über eine Leitung an den Verstärker 231 angeschlossen. Das Ausgangssignal 261 des Verstärkers 231 wird über eine Leitung an den Filter 232 angeschlossen. Der Filter ist vorzugsweise ein Tiefpaßfilter, der das Signal von unerwünschten Signalanteilen befreit. Seine Grenzfrequenz ist an die Dynamik des Gesamtsystems anzupassen. Seine Grenzfrequenz entspricht mindestens der halben Pulswiederholungsfrequenz der Signale 14 bzw. 24. Die Verstärkungsfaktoren des Verstärkers 231 können durch die Systemsteuerung 550 einstellbar gemacht werden. Zwischen dem Subtrahierer 238 und dem Verstärker 239 kann ein weiteres Sample & Hold-Glied geschaltet werden. Es übernimmt das Ausgangsignal des Subtrahierers erst, nachdem dieses eingeschwungen ist.

Das Signal 14 ist aus dem elektrischen Signal des Detektors 10 hinter der Meßstrecke 5 abgeleitet. Das Signal 24 ist aus dem elektrischen Signal des Detektors 20 hinter der Referenzstrecke 6 abgeleitet. Die beiden Signale 14 und 24 sind so abgeglichen, daß ihre Amplitude während der Emission des uncharaktersitischen Lichtpulses durch den Laser 1 gleich ist. Das Ausgangssignal des Subtrahierers 230 ist deshalb während dieser Emissionsphase null. Da die beiden Signale 14 und 24 aus dem selben Lichtstrahl 200 abgeleitet sind, führen Änderungen, z. B. in der Intensität des Lichtstrahles, zu keinem von null verschiedenem Signal 260 am Ausgang des Subtrahierers 230. Es werden also keine Störungen, des Lichtstrahles 200, die durch den Laser und seiner Ansteuerung verursacht werden, in dem Signal 260 vorhanden sein. Emittiert der Laser 1 nun Licht mit einer charakteristischen Lichtwellenlänge, so wird das Signal 14 abhängig von der Konzentration des ausgesuchten Gases, das die Ursache für die Querempfindlichkeit ist, eine geringere Amplitude als das Signal 24 aufweisen. Das ausgesuchte Gas, welches die Ursache für die Querempfindlichkeit ist, wird den Lichtstrahl 203 auf der Meßstrecke 5 bei der charakteristischen Wellenlänge proportional seiner Konzentration dämpfen. Da sich auf der Referenzstrecke 6 nicht das ausgesuchte Gas befindet, welches die Ursache für die Querempfindlichkeit ist, wird der Lichtrahl 204 nicht gedämpft. Die Amplitude des Ausgangssignales 260 des Subtrahierers 230 wird während der Aussendung des Lichtstrahles 200 mit der charakteristischen Lichtwellenlänge folglich proportional zur Konzentration des ausgesuchten Gases, welches die Ursache für die Queempfindlichkeit ist, auf der Meßstrecke ansteigen.

Das Ausgangssignal 262 des Filters 232 wird den Sample & Hold - Schaltungen 233 und 234 über je eine Leitung zugeführt. Aus dem Systemtakt 91 wird über eine Leitung das Taktsignal 921 der Sample & Hold - Schaltung 233 zugeführt. Das Taktsignal 921 signalisiert die Mitte des uncharakteristischen Signalpulses. Die Sample & Hold - Schaltung 233 tastet somit das Signal 262 genau in der Mitte des uncharakteristischen Signalpulses ab. Aus dem Systemtakt 91 wird über eine Leitung das Taktsignal 922 der Sample & Hold - Schaltung 234 zugeführt. Das Taktsignal 922 signalisiert die Mitte des charakteristischen Lichtpulses. Die Sampel & Hold - Schaltung 234 tastet somit das Signal 262 genau in der Mitte des charakteristischen Pulses ab.

Das Ausgangssignal 250 der Sample & Hold - Schaltung 233 wird über je eine Leitung der Sample & Hold - Schaltung 236 und der Gradientenbeurteilung 235 zugeführt. Das Ausgangssignal 251 der Sample & Hold - Schaltung 234 wird über je eine Leitung der Sample & Hold - Schaltung 237 und der Gradientenbeurteilung 235 zugeführt. Aus dem Systemtakt 91 wird über eine Leitung das Taktsignal 920 der Gradientenbeurteilung 235 zugeführt. Über eine Leitung wird der Gradientenbeurteilung 235 das Signal 70 der Systemsteuerung 550 zugeführt. Über eine Leitung wird der Systemsteuerung 550 das Signal 75 der Gradientenbeurteilung 135 zugeführt.

Über das Signal 74 teilt die Systemsteuerung 550 der Gradientenbeurteilung 235 die zulässigen Absolutwerte der Signale 250 und 251 sowie die zulässigen Änderungen in den Signalen 250 und 251 mit. Über das Signal 75 teilt die Gradientenbewertung 235 der Systemsteuerung 550 mit, in welchem Maße sie die Weitergabe der Signal 250 und 251 blockieren mußte.

Mit dem Signal 252 gibt die Gradientenbeurteilung die Übernahme des Signales 250 durch die Sample & Hold - Schaltung 235 am Ende einer Signalperiode frei. Mit dem Signal 253 gibt die Gradientenbeurteilung 235 die Übernahme des Signales 251 durch die Sample & Hold - Schaltung 237 am Ende einer Signalperiode frei.

Das Ausgangssignal 256 der Sample & Hold - Schaltung 236 wird über eine Leitung zum Subtrahierer 238 geführt. Das Ausgangssignal 257 der Sample & Hold - Schaltung 237 wird über eine Leitung zum Subtrahierer 238 geführt. Der Subtrahierer bildet die Differenz aus den Signalen 236 und 237. Der Subtrahierer bildet folglich die Differenz in der Signalamplutude des Signales 262 während der Mitte des charakteristischen Signalpulses und der Mitte des uncharakteristischen Signalpulses. Sein Ausgangssignal 258 ist somit ein Maß für die Konzentration des ausgesuchten Gases, welches die Ursache für die Querempfindlichkeit ist, auf der Meßstrecke 5.

Das Ausgangssignal 258 des Subtrahierers 238 wird über eine Leitung dem Verstärker 239 zugeführt. Das Ausgangssignal 259 des Verstärkers 239 wird über eine Leitung dem Filter 240 zugeführt. Die Aufgabe des Filters 240 ist in erster Linie die Glättung des Signales 259. Bei Änderungen der Konzentration des ausgesuchten Gases, welches die Ursache für die Querempfindlichkeit ist, auf der Meßstrecke 5 ändert sich das Signal 259 stufenartig aufgrund des Verhaltens der Sample & Hold - Schaltungen 233, 234, 236 und 237. Das Ausgangssignal 72 des Filters 240 wird über eine Leitung der Systemsteuerung zur weiteren Verarbeitung zugeführt.

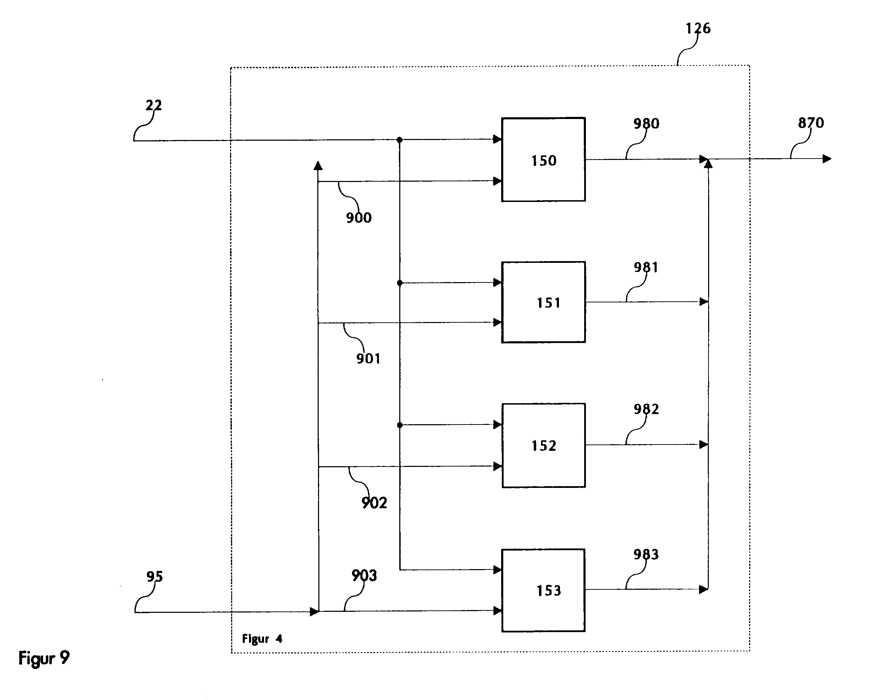

Nachfolgend wird die erfindungsgemäße Laserstabilisierung anhand der Teilschaltungen der Fig. 9 bis 17 erläutert.

### Laserstabilisierung, Teil 1:

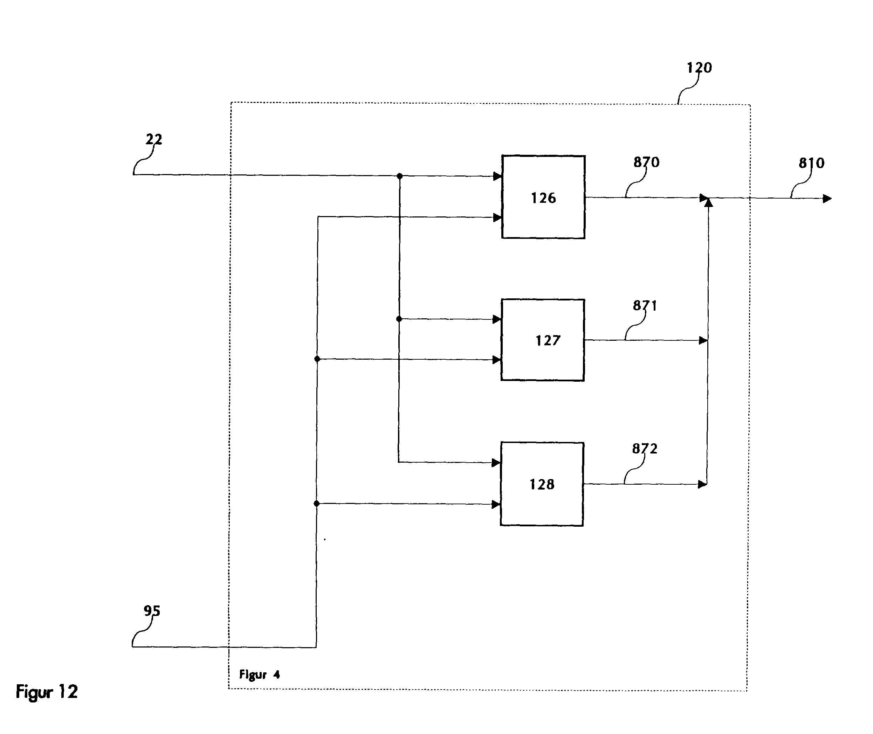

Figur 9 zeigt den Teil der Laserstabilisierung, die die nötigen Daten des uncharakteristischen Signalpulses ermittelt. Die externen Anschlüsse 22, 95 und 870 wurden bereits mit der Figur 12 beschrieben.

Das Signal 22 wird über je eine Leitung an die Sample & Hold - Schaltungen 150, 151, 152 und 153 geführt. Aus dem Systemtakt 95 wird über eine Leitung das Taktsignal 900 an die Sample & Hold - Schaltung 150 geführt. Das Taktsignal 900 signalisiert den Beginn einer Signalperiode und den Beginn des uncharakteristischen Signalpulses. Aus dem Systemtakt 95 wird das Taktsignal 901 über eine Leitung an die Sample & Hold - Schaltung 151 geführt. Das Taktsignal 901 signalisiert das Ende des ersten Viertels des uncharakteristischen Signalpulses. Aus dem Systemtakt 95 wird über eine Leitung das Taktsignal 902 zu der Sample & Hold - Schaltung 152 geführt. Das Taktsignal 902 signalisiert die Mitte des uncharakteristischen Signalpulses. Aus dem Systemtakt 95 wird über eine Leitung das Taktsignal 903 an die Sampel & Hold - Schaltung 153 geführt. Das Taktsignal 903 signalisiert das Ende des dritten Viertels des uncharakteristischen Signalpulses.

Die Sample & Hold - Schaltung 150 tastet das Signal 22 zum durch das Signal 900 vorgegebenen Zeitpunkt ab. Die Sample & Hold - Schaltung 151 tastet das Signal 22 zum durch das Signal 901 vorgebenen Zeitpunkt ab. Die Sample & Hold - Schaltung 152 tastet das Signal zum durch das Signal 902 vorgebenen Zeitpunkt ab. Die Sample & Hold - Schaltung 153 tastet das Signal 22 zum durch das Signal 903 vorgebenen Zeitpunkt ab.

Das Ausgangssignal 980 der Sample & Hold - Schaltung 150 und das Ausgangssignal 981 der Sample & Hold - Schaltung 151 und das Ausgangssignal 982 der Sample & Hold - Schaltung 152 und das Ausgangssignal 983 der Sample & Hold - Schaltung 153 werden zum Signal 870 zusammengefaßt.

### Die Laserstabilisierung, Teil 2:

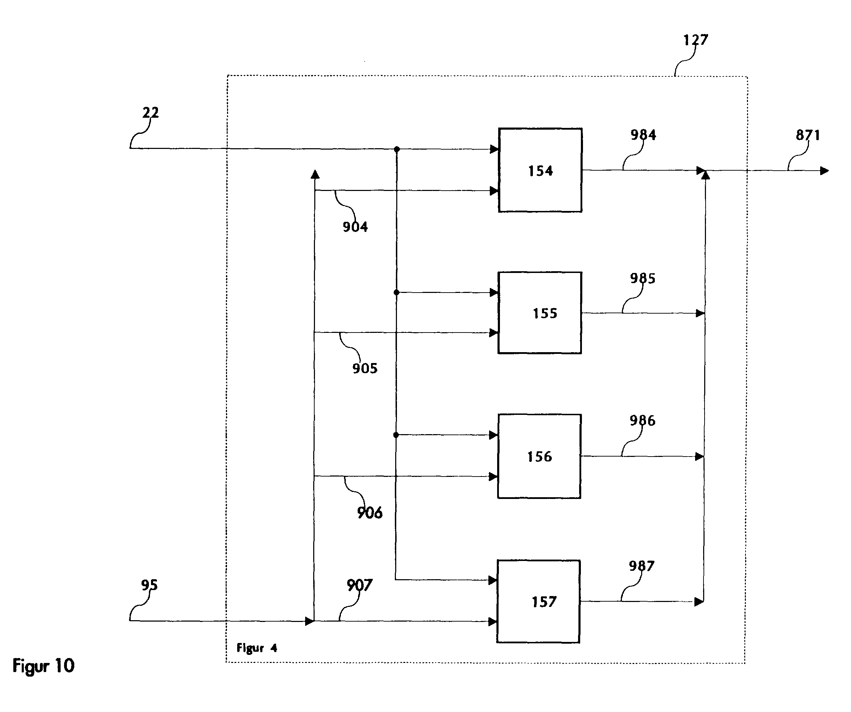

Figur 10 zeigt den Teil der Laserstabilisierung, die die nötigen Daten des ersten charakteristischen Signalpulses ermittelt. Die externen Anschlüsse 22, 95 und 871 wurden bereits mit der Figur 12 beschrieben.

Das Signal 22 wird über je eine Leitung an die Sample & Hold - Schaltungen 154, 155, 156 und 157 geführt. Aus dem Systemtakt 95 wird über eine Leitung das Taktsignal 904 an die Sample & Hold - Schaltung 154 geführt. Das Taktsignal 904 signalisiert den Beginn des ersten charakteristischen Signalpulses. Aus dem Systemtakt 95 wird das Taktsignal 905 über eine Leitung an die Sample & Hold - Schaltung 155 geführt. Das Taktsignal 905 signalisiert das Ende des ersten Viertels des ersten charakteristischen Signalpulses. Aus dem Systemtakt 95 wird über eine Leitung das Taktsignal 906 zu der Sample & Hold - Schaltung 156 geführt. Das Taktsignal 906 signalisiert die Mitte des ersten charakteristischen Signalpulses. Aus dem Systemtakt 95 wird über eine Leitung das Taktsignal 907 an die Sampel & Hold - Schaltung 157 geführt. Das Taktsignal 907 signalisiert das Ende des dritten Viertels des ersten charakteristischen Signalpulses.

Die Sample & Hold - Schaltung 154 tastet das Signal 22 zum durch das Signal 904 vorgegebenen Zeitpunkt ab. Die Sample & Hold - Schaltung 155 tastet das Signal 22 zum durch das Signal 905 vorgebenen Zeitpunkt ab. Die Sample & Hold - Schaltung 156 tastet das Signal zum durch das Signal 906 vorgebenen Zeitpunkt ab. Die Sample & Hold - Schaltung 157 tastet das Signal 22 zum durch das Signal 907 vorgebenen Zeitpunkt ab.

Das Ausgangssignal 984 der Sample & Hold - Schaltung 154 und das Ausgangssignal 985 der Sample & Hold - Schaltung 155 und das Ausgangssignal 986 der Sample & Hold - Schaltung 156 und das Ausgangssignal 987 der Sample & Hold - Schaltung 157 werden zum Signal 871 zusammengefaßt.

### Die Laserstabilisierung, Teil 3:

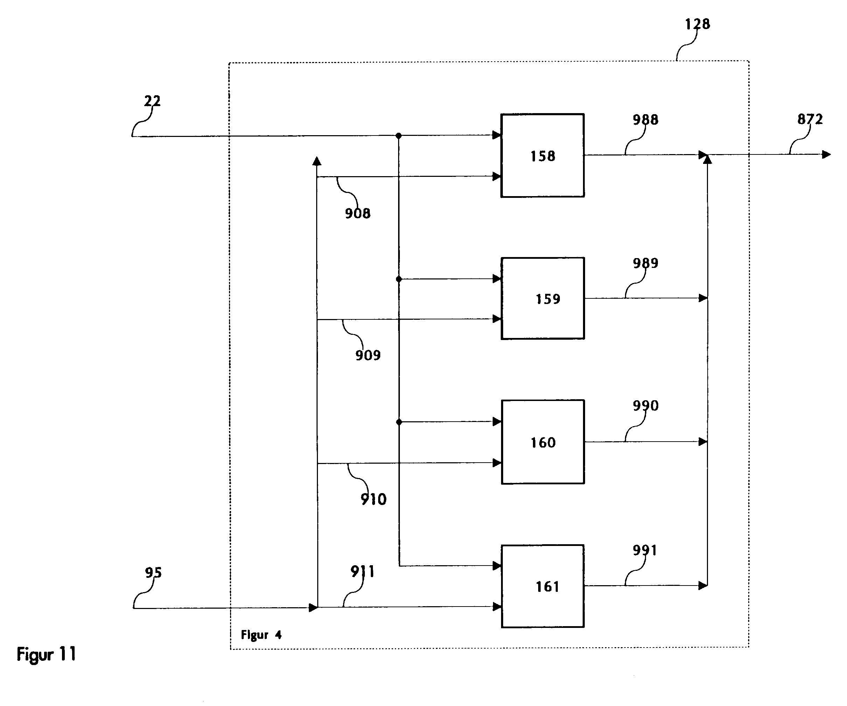

Figur 11 zeigt den Teil der Laserstabilisierung, die die nötigen Daten des zweiten charakteristischen Signalpulses ermittelt. Die externen Anschlüsse 22, 95 und 872 wurden bereits mit der Figur 12 beschrieben.

Das Signal 22 wird über je eine Leitung an die Sample & Hold - Schaltungen 158, 159, 160 und 161 geführt. Aus dem Systemtakt 95 wird über eine Leitung das Taktsignal 908 an die Sample & Hold - Schaltung 158 geführt. Das Taktsignal 908 signalisiert den Beginn des zweiten charakteristischen Signalpulses. Aus dem Systemtakt 95 wird das Taktsignal 909 über eine Leitung an die Sample & Hold - Schaltung 159 geführt. Das Taktsignal 909 signalisiert das Ende des ersten Viertels des zweiten charakteristischen Signalpulses. Aus dem Systemtakt 95 wird über eine Leitung das Taktsignal 910 zu der Sample & Hold - Schaltung 160 geführt. Das Taktsignal 910 signalisiert die Mitte des zweiten charakteristischen Signalpulses. Aus dem Systemtakt 95 wird über eine Leitung das Taktsignal 911 an die Sampel & Hold - Schaltung 161 geführt. Das Taktsignal 91 signalisiert das Ende des dritten Viertels des zweiten charakteristischen Signalpulses.

Die Sample & Hold - Schaltung 158 tastet das Signal 22 zum durch das Signal 908 vorgegebenen Zeitpunkt ab. Die Sample & Hold - Schaltung 159 tastet das Signal 22 zum durch das Signal 909 vorgebenen Zeitpunkt ab. Die Sample & Hold - Schaltung 160 tastet das Signal zum durch das Signal 910 vorgebenen Zeitpunkt ab. Die Sample & Hold - Schaltung 161 tastet das Signal 22 zum durch das Signal 911 vorgebenen Zeitpunkt ab.

Das Ausgangssignal 988 der Sample & Hold - Schaltung 158 und das Ausgangssignal 989 der Sample & Hold - Schaltung 159 und das Ausgangssignal 990 der Sample & Hold - Schaltung 160 und das Ausgangssignal 991 der Sample & Hold - Schaltung 161 werden zum Signal 872 zusammengefaßt.

### Die Laserstabilisierung, Teil 4:

Die Figur 12 zeigt die Sample & Hold - Schaltung 120 zur Erfassung des Referenzsignales 22. Die Signale 22, 95 und 810 sind mit der Figur 4 beschrieben.

Das Signal 22 wird über je eine Leitung an die Sample & Hold - Schaltungen 126, 127 und 128 angeschlossen. Der Systemtakt 95 wird über eine Leitung an die Sample & Hold - Schaltungen 126, 127 und 128 angeschlossen. Das Anusgangssignal 870 der Sample & Hold - Schaltung 126 und das Ausgangssignal 871 der Sample & Hold - Schaltung 127 und das Ausgangssignal 872 der Sample & Hold - Schaltung 128 werden zu dem Signal 810 zusammengefaßt.

Die Sample & Hold - Schaltung 126 tastet das Signal 22 während des uncharakteristischen Signalpulses ab. Die Sample & Hold - Schaltung 127 tastet das Signal 22 während des ersten charakteristischen Signalpulses ab. Die Sample & Hold - Schaltung 128 tastet das Signal während des zweiten charakteristischen Signalpulses ab.

### Die Laserstabilisierung, Teil 5:

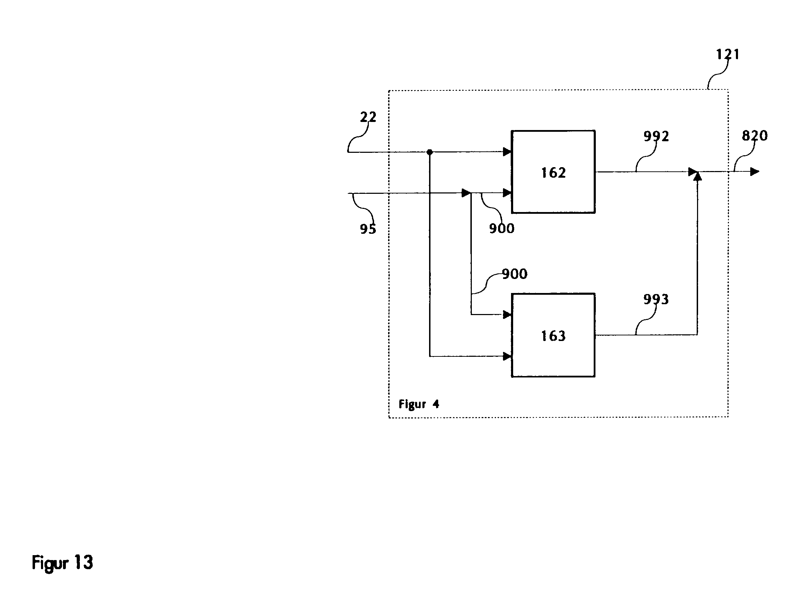

Figur 13 zeigt die Gleichrichterschaltung 121 der Laserstabilisierung. Die Signale 22, 95 und 820 sind mit der Figur 4 beschrieben.

Das Signal 22 wird über je eine Leitung an den Gleichrichter 162 und an den Spitzenwertdetektor 163 geführt. Aus dem Systemtakt 95 wird über je eine Leitung das Taktsignal 900 an den Gleichrichter 162 und an den Spitzenwertdetektor 163 geführt. Das Ausgangssignal 992 des Gleichrichters 162 und das Ausgangssignal 993 des Spitzenwertdetektors werden zu dem Signal 820 zusammengefaßt.

Der Gleichrichter 162 richtet das Eingangssignal 22 gleich und bestimmt den Mittelwert der Signalamplitude innerhalb einer Signalperiode, die durch das Signal 900 vorgegeben wird.

Der Spitzenwertdetektor 163 bestimmt den spitzenwert im Signal 22, der innerhalb einer Signalperiode auftritt.

### Die Laserstabilisierung, Teil 6:

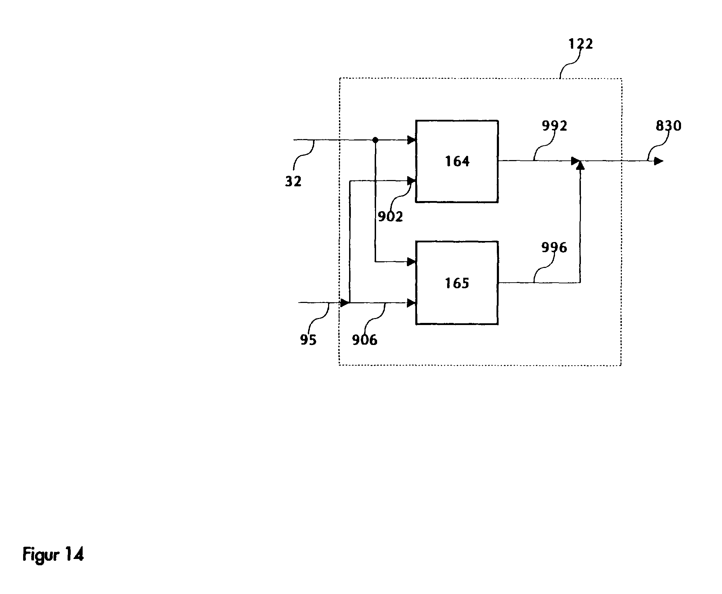

Die Figur 14 zeigt die Sample & Hold - Schaltung für das Signal 32 des Eichweges 7. Die Signale 32, 95 und 830 sind mit Figur 4 beschrieben.

Das Signal 32 ist über je eine Leitung an die Sample & Hold - Schaltungen 164 und 165 angeschlossen. Aus dem Systemtakt 95 wird über je eine Leitung das Taktsignal 902 an die Sample & Hold - Schaltung 164 und das Taktsignal 906 an die Sample & Hold - Schaltung 165 angeschlossen.

Das Ausgangssignal 992 der Sample & Hold - Schaltung 164 und das Ausgangssignal 996 der Sample & Hold - Schaltung 165 werden zum Signal 830 zusammengefaßt.

### Die Laserstabilisierung, Teil 7:

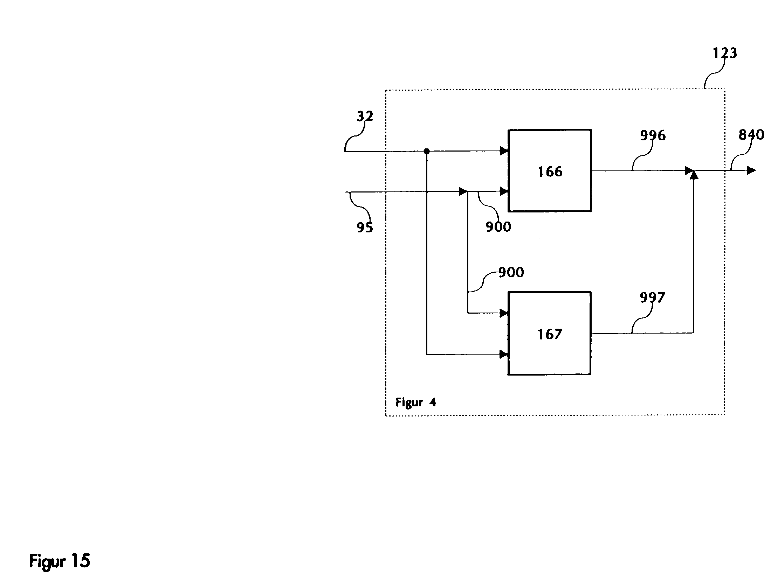

Die Figur 15 zeigt die Gleicherichterschaltung 123 der Laserstabilisierung. Die Signale 32, 95 und 840 sind mit der Figur 4 beschrieben.

Das Signal 32 wird über je eine Leitung an den Gleichrichter 166 und an den Spitzenwertdetektor 167 geführt. Aus dem Systemtakt 95 wird über je eine Leitung das Taktsignal 900 an den Gleichrichter 166 und an den Spitzenwertdetektor 167 geführt. Das Ausgangssignal 996 des Gleichrichters 166 und das Ausgangssignal 997 des Spitzenwertdetektors werden zu dem Signal 840 zusammengefaßt.

Der Gleichrichter 166 richtet das Eingangssignal 32 gleich und bestimmt den Mittelwert der Signalamplutude innerhalb einer Signalperiode, die durch das Signal 900 vorgegeben wird.

Der Spitzenwertdetektor 167 bestimmt den Spitzenwert im Signal 32, der innerhalb einer Signalperiode auftritt.

### Die Laserstabilisierung, Teil 8:

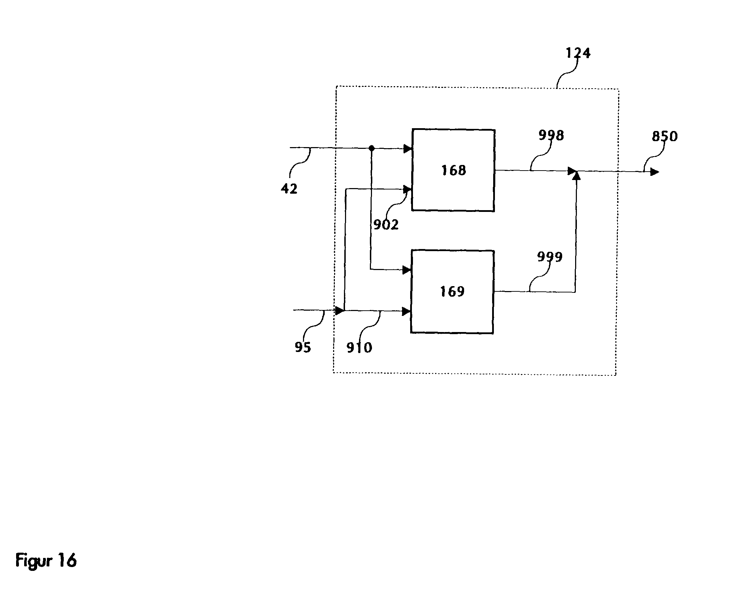

Die Figur 16 zeigt die Sample & Hold - Schaltung für das Signal 42 des Eichweges 8. Die Signale 42, 95 und 850 sind mit Figur 4 beschrieben.

Das Signal 23 ist über je eine Leitung an die Sample & Hold - Schaltungen 168 und 169 angeschlossen. Aus dem Systemtakt 95 wird über je eine Leitung das Taktsignal 902 an die Sample & Hold - Schaltung 168 und das Taktsignal 906 an die Sample & Hold - Schaltung 169 angeschlossen.

Das Ausgangssignal 998 der Sample & Hold - Schaltung 168 und das Ausgangssignal 999 der Sample & Hold - Schaltung 169 werden zum Signal 850 zusammengefaßt.

### Die Laserstabilisierung, Teil 9:

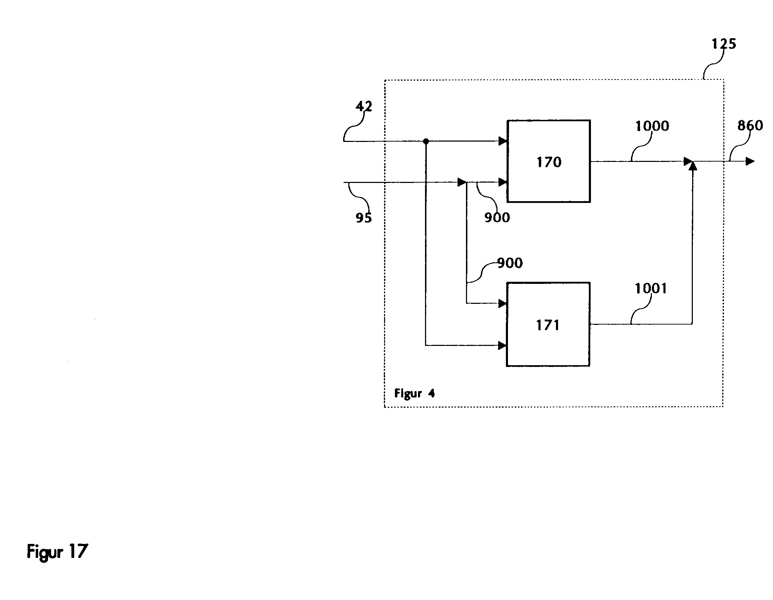

Die Figur 17 zeigt die Gleicherichterschaltung 125 der Laserstabilisierung. Die Signale 42, 95 und 860 sind mit der Figur 4 beschrieben.

Das Signal 42 wird über je eine Leitung an den Gleichrichter 170 und an den Spitzenwertdetektor 171 geführt. Aus dem Systemtakt 95 wird über je eine Leitung das Taktsignal 900 an den Gleichrichter 170 und an den Spitzenwertdetektor 171 geführt. Das Ausgangssignal 1000 des Gleichrichters 170 und das Ausgangssignal 1001 des Spitzenwertdetektors werden zu dem Signal 860 zusammengefaßt.

Der Gleichrichter 170 richtet das Eingangssignal 42 gleich und bestimmt den Mittelwert der Signalamplitude innerhalb einer Signalperiode, die durch das Signal 900 vorgegeben wird.

Der Spitzenwertdetektor 171 bestimmt den Spitzenwert im Signal 42, der innerhalb einer Signalperiode auftritt.

### Die Laserstabilsierung, Zusammenfassung:

Die gesamte Laserstabilisierung setzt sicht aus den Figuren 9, 10, 11, 12, 13, 14, 15, 16 und 17 zusammen. Die Gesamtfunktion aller Baugruppen wird im folgenen erläutert.

Der eingesetzte Laser wird mittels einens Schwinggitters abgestimmt. Das Schwingitter bestimmt die effektive Resonatorlänge des Lasers und somit die Lichtwellenlänge, mit der der Laser emittieren kann. Auf welchen Wellenlängen wirklich emittiert wird, bestimmt die benutzte Füllung das Lasers. Das Schwinggitter kann einmal so in seiner Lage verändert werden, daß sich sein Abstand zum anderen Ende des Resonanzkörpers ändert und es kann in eine Schwingung versetzt werden. Durch die Schwingung des Gitters wird die effektive Länge des Laserresonators und damit seine Abstimmung verändert. Während das Gitter schwingt, können seine beiden Endlagen eingestellt werden. Die Aufgabe der Laserstabilisierung ist nun, diese drei genannten Einstellparameter des Schwingitters so zu bestimmen, daß der Laser genau die gewünschte Emission erzeugt.

Die Einstellung des Lasers erfolgt in einem mehrstufigen Prozeß. Zuerst werden die nötigen drei Laserlinien gesucht. Anschließend wird der Laser auf diese gefundenen Linien stabilisiert.

Der Laser wird von der Systemsteuerung 550 mit einem beliebigen Signal 52 angesteuert. Der Taktgenerator wird mit einem Defaultmuster geladen. Das Defaultmuster entspricht dem zuerwartenden Taktmuster, allerdings ohne die unbekannte Phasenverschiebung. Anschließend werden die Signale 992 und 993 von der Systemsteuerung eingelesen. Die Signale 992 und 993 zeigen an, mit welcher Energie der Laser 1 Licht emittiert. Ist er auch keine Laserlinie abgestimmt, sind diese Signale auch dementsprechend null. Die Systemsteuerung 550 variiert nun die Laseransteuerung solange bis die Signale 992 und 993 einen wieder kleiner werdenden Pegel bekommen. Mit anderen Worten: die Systemsteuerung verändert die Laseransteuerung solange bis der Laser emittiert und die Emission wieder kleiner wird.

Nun wird die Phasenlage der Signale 900, 901, 902, 903, 904, 905, 906, 907, 908, 909, 910 und 911 so verändert, daß das Signal 982, das Signal 986 und das Signal 990 ein relatives Maximum annehmen und das Signal 980, das Signal 984 und das Signal 988 ein relatives Minimum annehmen und das Signal 981 und gefähr den selben Pegel aufweist wie das Signal 983 und das Signal 985 ungefähr den selben Pegel aufweist wie das Signal 987 und das Signal 989 ungefähr den selben Pegel aufweist wie das Signal 991. Ist diese Bedingung erfüllt und haben die Taktsignale 900, 901, 902, 903, 904, 905, 906, 907, 908, 909, 910 und 911 einen gleichmäßigen Abstand von etwas einem Zwölftel der Taktperiode, so emittiert der Laser Licht auf drei Linien.

Gleichzeitig wird mit den beiden Sample & Hold - Schaltungen 164 und 165 das Signal 32 zu den durch die Signale 902 und 906 vorgegebenen Zeitpunkten abgetastet, Das Signal 992 entspricht folglich dem Signalpegel des Signales 32 im Maximum des ersten Signalpulses. Das Signal 996 entspricht folglich dem Signalpegel des Signales 32 im Maximum des zweiten Signalpulses. Das Signal 32 ist aus dem Detektor 30 abgeleitet, der hinter der Eichstrecke 7 positioniert ist, abgeleitet. Somit wird der Signalpegel des Signales 992 in etwa dem Signalpegel des Signales 982 entsprechen, während, bei richtiger Laserabstimmung, der Signalpegel des Signales 996 deutlich unter dem Signalpegel des Signales 986 liegen wird. Gleichzeitig wird mit den beiden Sample & Hold - Schaltungen 168 und 169 das Signal 42 zu den durch die Signale 902 und 910 vorgegebenen Zeitpunkten abgetastet. Das Signal 998 entspricht folglich dem Signalpegel des Signales 42 im Maximum des ersten Signalpulses. Das Signal 999 entspricht folglich dem Signalpegel des Signales 42 im Maximum des dritten Signalpulses. Das Signal 42 aus dem Detektor 40 abgeleitet, der hinter der Eichstrecke 8 positioniert ist. Somit wird der Signalpegel des Signales 998 in etwa dem Signalpegel des Signales 982 entsprechen, während, bei richtiger Laserabstimmung, der Signalpegel des Signales 999 deutlich unter dem Signalpegel des Signales 990 liegen wird.

Nur wenn all diese Begingungen erfüllt sind, ist der Laser richtig abgestimmt. In allen anderen Fällen ist weiter das Signal 52 zu variieren.

Nachdem die drei Laserlinien gefunden wurden wird der Laser mit der selben Vorrichtung stabilisiert. Mittels kleiner Variationen des Signales 52 wird der Laser verstimmt. Sobald sich eine der obigen Bedingungen verschlechtert, wird die Richtung der Verstimmung umgekehrt. Der Laser driftet somit immer um seinen optimalen Betriebspunkt, ohne ihn jemals ganz zu verlassen. Wird der Einfluß der Laserverstimmung so groß, daß der Meßwert verfälscht wird, so ist eine entsprechende Korrektur des Meßwertes vorzunehmen. Da der Zeitpunkt der Variation bekannt ist, kann nach einer erfolgten Verstellung der alte Meßwert solange ausgegeben werden, bis der Laser wieder auf seine vorhergehende Einstellung gebracht ist.

### Die Gradientenbewertung:

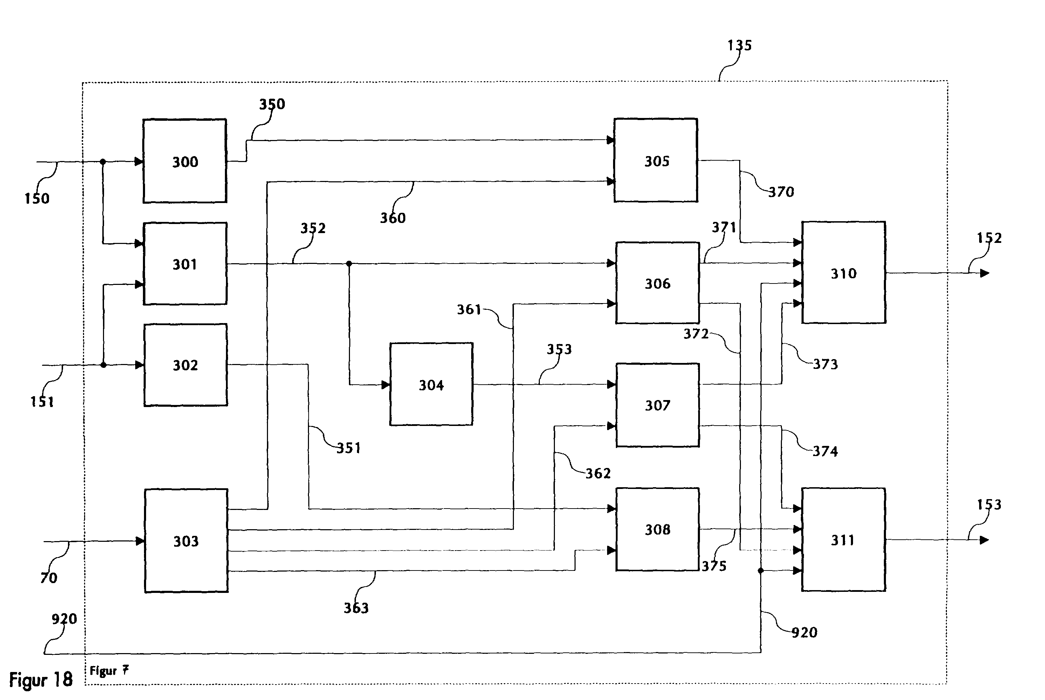

Die Figur 18 beschreibt die Gradientenbewertung 135. Die externen Signale 150, 151, 70, 920, 152 und 153 sind zusammen mit Figur 7 beschrieben.

Das Signal 150 wird über je eine Leitung dem Differenzierglied 300 und dem Subtrahierer 301 zugeführt. Das Signal 151 wird über je eine Leitung dem Differenzier 302 und dem Subtrahierer 301 zugeführt.

Das Signal 150 ist aus dem Signal des Detektors 10 hinter der Meßstrecke 5 abgeleitet. Das Signal 151 ist aus dem Signal des Detektors 20 hinter der Referenzstrecke 6 abgeleitet.

Der Differenzierer 300 bildet aus dem Signal 150 die erste Ableitung. Der Differenzierer 302 bildet aus dem Signal 151 die erste Ableitung. Der Subtrahierer 301 bildet aus den Signalen 150 und 151 die Differenz.

Das Ausgangssignal 350 des Differenzierers 300 wird über eine Leitung zum Fensterdiskriminator 305 geführt. Das Ausgangssignal 353 des Subtrahieers 301 wird über je eine Leitung zum Differenzierer 304 und zum Fensterdiskriminator 306 geführt. Das Ausgangssignal des Differenzierers 302 wird über eine Leitung zum Fenstersdiskriminator 308 geführt.

Der Differenzerier 304 bildet die erste Ableitung des Signals 352.

Das Ausgangssignal 353 des Diffenzierers 304 wird über eine Leitung zum Fensterdiskriminator 307 geführt.

Das Signal 70 wird über eine Leitung zum Grenzwertspeicher 303 geführt. Mit dem Signal 70 teilt die Systemsteuerung 550 der Gradientenbewertung 135 die aktuellen Grenzwerte der Signale 350, 351, 352 und 353 mit.

Das Ausgangssignal 360 des Grenzwertspeichers 303 wird über eine Leitung zum Fensterdiskiminator 305 geführt. Das Ausgangssignal 361 des Grenzwertspeichers 303 wird über eine Leitung 361 zum Fensterdiskriminator 306 geführt. Das Ausgangssignal 362 des Grenzwertspeichers 303 wird über eine Leitung zum Fensterdiskriminator 307 geführt. Das Ausgangssignal 363 des Grenzwertspeichers 303 wird über eine Leitung zum Fensterdiskriminator 308 geführt.

Das Signal 360 stellt den Signalbereich dar, innerhalb dessen das Signal 350 als gut bewertet wird. Das Signal 361 stellt den Signalbereich dar, innerhalb dessen das Signal 352 als gut bewertet wird. Das Signal 362 stellt den Signalbereich dar, innerhalb dessen das Signal 353 als gut bewertet wird. Das Signal 363 stellt den Signalbereich dar, innerhalb dessen das Signal 351 als gut bewertet wird.

Das Ausgangssignal 370 des Fensterdiskriminators 305 wird über eine Leitung mit der Verknüpfungsschaltung 310 zugeführt. Das Ausgangsignal 371 des Fensterdiskriminators 306 wird über eine Leitung der Verknüpfungsschaltung 310 zugeführt. Das Ausgangssignal 372 des Fensterdiskriminators 306 wird über eine Leitung der Verknüpfungsschaltung 311 zugeführt. Das Ausgangssignal 373 des Fensterdisktriminators 307 wird über eine Leitung der Verknüpfungsschaltung 310 zugeführt. Das Ausgangssignal 374 des Fensterdiskrimnators 307 wird über eine Leitung der Verknüpfungsschaltung 311 zugeführt. Das Ausgangssignal 375 des Fensterdiskrimnators 308 wird über eine Leitung der Verknüpfungsschaltung 311 zugeführt. Das Taktsignal 920 wird über je eine Leitung der Verknüpfungsschaltung 310 und der Verknüpfungsschaltung 311 zugeführt.

Das Taktsignal 920 signalisiert das Ende einer Auswertesignalperiode. Wird der aktuelle Signalpegel der Signal 150 und 151 als gut befunden, so wird am Ende der Auswertesignalperiode mit den Signalen 152 und 153 übernommen und ausgegeben.

Die Verknüpfungsschaltung gibt das Signal 920 unverändert als Ausgangssignal 152 aus, wenn das Signal 370, das Signal 371 und das Signal 373 die Eingangssignale 150 und 151 als gut bewerten. Die Verknüpfungsschaltung 311 gibt das Signal 920 unverändert als Ausgangssignal 153 aus, wenn das Signal 374, das Signal 375 und das Signal 372 die Eingangssignale 150 und 151 als gut bewerten. Bewertet einer der Fensterdiskriminatoren 305, 306, 307 und 308 nur einen Parameter der Eingangssignale 150 und 151 nicht als gut, erfolgt keine Weitergabe des Taktsignales 920.

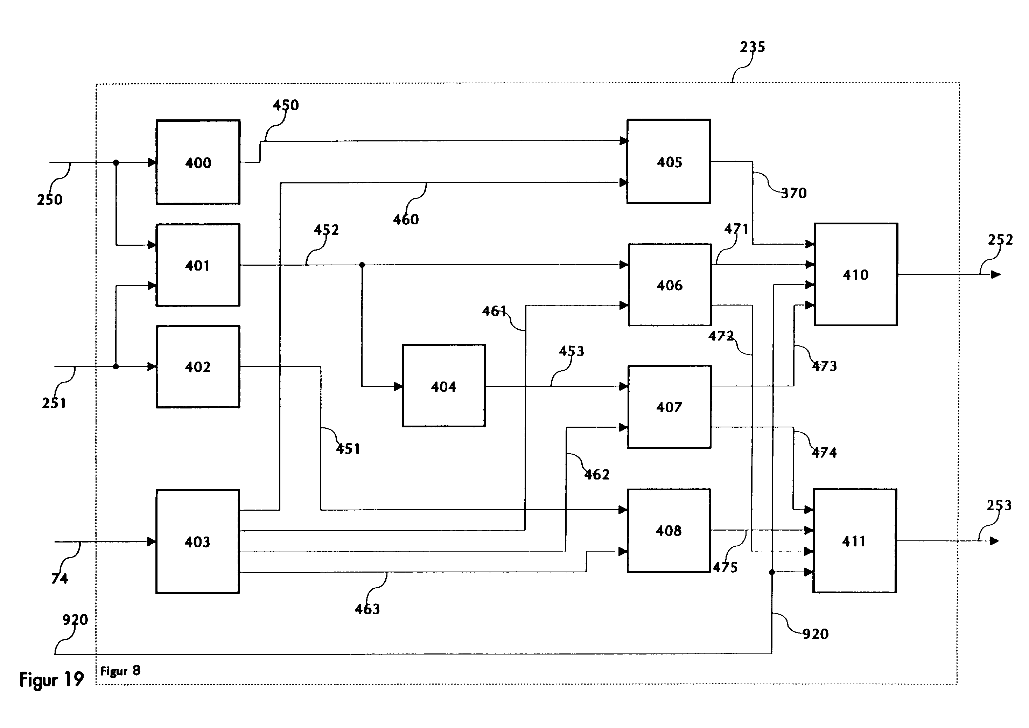

Die Figur 19 beschreibt die Gradientenbewertung 235. Die externen Signale 250, 251, 74, 920, 252 und 253 sind zusammen mit Figur 7 beschrieben.

Das Signal 250 wird über je eine Leitung dem Differenzierglied 400 und dem Subtrahierer 401 zugeführt. Das Signal 251 wird über je eine Leitung dem Differenzier 402 und dem Subtrahierer 401 zugeführt.

Das Signal 250 ist aus dem Signal des Detektors 10 hinter der Meßstrecke 5 abgeleitet. Das Signal 251 ist aus dem Signal des Detektors 20 hinter der Referenzstrecke 6 abgeleitet.

Der Differenzierer 400 bildet aus dem Signal 250 die erste Ableitung. Der Differenzierer 402 bildet aus dem Signal 251 die erste Ableitung. Der Subtrahierer 401 bildet aus den Signalen 250 und 251 die Differenz.

Das Ausgangssignal 450 des Differenzierers 400 wird über eine Leitung zum Fensterdiskriminator 405 geführt. Das Ausgangssignal 453 des Subtrahieers 401 wird über je eine Leitung zum Differenzierer 404 und zum Fensterdiskriminator 406 geführt. Das Ausgangssignal des Differenzierers 402 wird über eine Leitung zum Fenstersdisktriminator 408 geführt.

Der Differenzerer 404 bildet die erste Ableitung des Signals 452.

Das Ausgangssignal 453 des Diffenzierers 404 wird über eine Leitung zum Fensterdiskriminator 407 geführt.

Das Signal 70 wird über eine Leitung zum Grenzwertspeicher 403 geführt. Mit dem Signal 70 teilt die Systemsteuerung 550 der Gradientenbewertung 235 die aktuellen Grenzwerte der Signale 450, 451, 452 und 453 mit.

Das Ausgangssignal 460 des Grenzwertspeichers 403 wird über eine Leitung zum Fensterdiskiminator 405 geführt. Das Ausgangssignal 461 des Grenzwertspeichers 403 wird über eine Leitung 461 zum Fensterdiskriminator 406 geführt. Das Ausgangssignal 462 des Grenzwertspeichers 403 wird über eine Leitung zum Fensterdiskriminator 407 geführt. Das Ausgangssignal 463 des Grenzwertspeichers 403 wird über eine Leitung zum Fensterdiskriminator 408 geführt.

Das Signal 460 stellt den Signalbereich dar, innerhalb dessen das Signal 450 als gut bewertet wird. Das Signal 461 stellt den Signalbereich dar, innerhalb dessen das Signal 452 als gut bewertet wird. Das Signal 462 stellt den Signalbereich dar, innerhalb dessen das Signal 453 als gut bewertet wird. Das Signal 463 stellt den Signalbereich dar, innerhalb dessen das Signal 451 als gut bewertet wird.

Das Ausgangssignal 470 des Fensterdiskriminators 405 wird über eine Leitung mit der Verknüpfungsschaltung 410 zugeführt. Das Ausgangsignal 471 des Fensterdiskriminators 406 wird über eine Leitung der Verknüpfungsschaltung 410 zugeführt. Das Ausgangssignal 472 des Fensterdiskriminators 406 wird über eine Leitung der Verknüpfungsschaltung 411 zugeführt. Das Ausgangssignal 473 des Fensterdisktriminators 407 wird über eine Leitung der Verknüpfungsschaltung 410 zugeführt. Das Ausgangssignal 474 des Fensterdiskrimnators 407 wird über eine Leitung der Verknüpfungsschaltung 411 zugeführt. Das Ausgangssignal 475 des Fensterdiskrimnators 408 wird über eine Leitung der Verknüpfungsschaltung 411 zugeführt. Das Taktsignal 920 wird über je eine Leitung der Verknüpfungsschaltung 410 und der Verknüpfungsschaltung 411 zugeführt.

Das Taktsignal 920 signalisiert das Ende einer Auswertesignalperiode. Wird der aktuelle Signalpegel der Signal 250 und 251 als gut befunden, so wird am Ende der Auswertesignalperiode mit den Signalen 252 und 253 übernommen und ausgegeben.

Die Verknüpfungsschaltung gibt das Signal 920 unverändert als Ausgangssignal 252 aus, wenn das Signal 470, das Signal 471 und das Signal 473 die Eingangssignale 250 und 251 als gut bewerten. Die Verknüpfungsschaltung 411 gibt das Signal 920 unverändert als Ausgangssignal 253 aus, wenn das Signal 474, das Signal 475 und das Signal 472 die Eingangssignale 250 und 251 als gut bewerten. Bewertet einer der Fensterdiskriminatoren 405, 406, 407 und 408 nur einen Parameter der Eingangssignale 250 und 251 nicht als gut, erfolgt keine Weitergabe des Taktsignales 920.

### Alternative Meßwertaufbereitung:

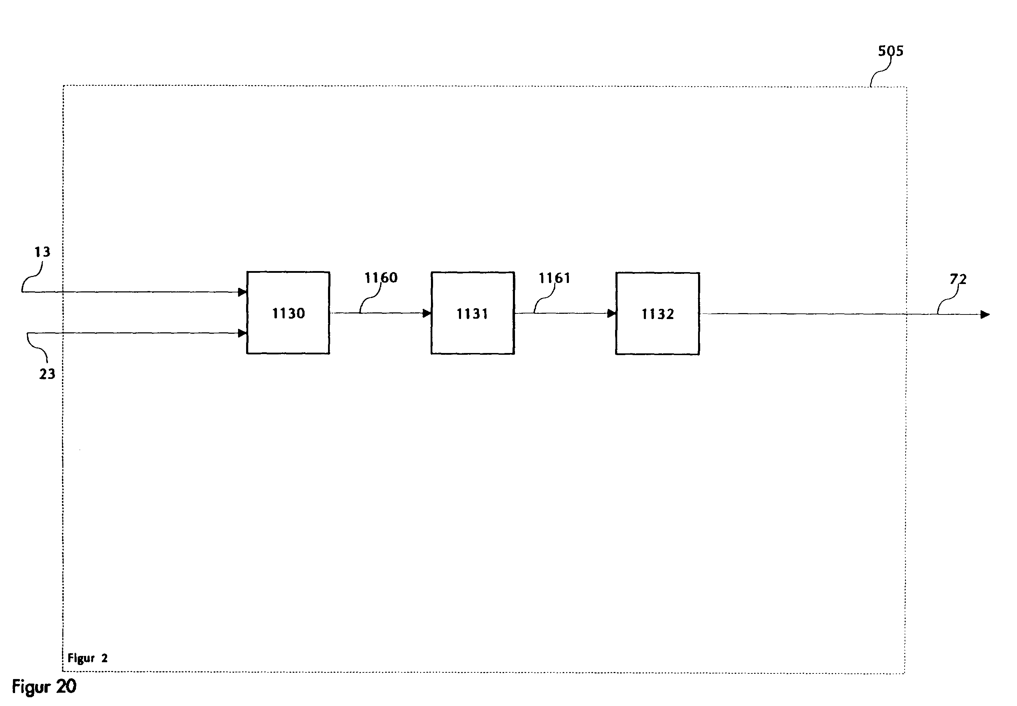

Die Figur 20 zeigt eine bevorzugte Alternative zur Meßwertaufbereitung in Figur 7 bzw. 8.

Der Subtrahierer 1130 wird über eine Leitung mit dem Signal 13 verbunden. Der Subtrahierer 1130 wird über eine Leitung mit dem Signal 23 verbunden. Der Subtrahierer 1130 bildet die Differenz aus den beiden Eingangssignalen 13 und 23.

Das Ausgangssignal 1160 des Subtrahierers wird über eine Leitung dem FFT-Analysator 1131 zugeführt. Das Ausgangssignal 1161 des FFT-Analysators 1131 wird dem Verstärker 1132 zugeführt.

Der FFT-Analysator 1131 wird so eingestellt, daß an seinem Ausgangs nur ein Signal mit der halben Pulswiederholungsfrequenz erscheint, wie sie in den beiden Eingangssignalen 13 und 23 des Subtrahierer 1130 vorkommen. Die Amplitude dieses Signales ist proportional der Konzentration des ausgesuchten Gases auf der Meßstrecke 5.

### Alternative Laserstabilisierung:

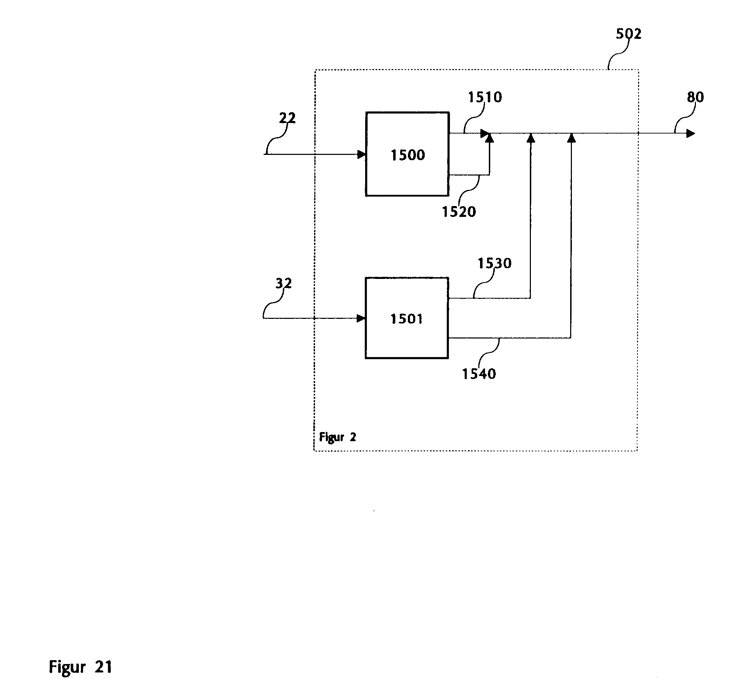

Die Figur 21 zeigt eine bevorzugte alternative Form der Laserstabilsierung. Die Signale 22, 32 und 80 sind mit Figur 2 beschrieben.

Das Signal 22 wird über eine Leitung zum FFT-Analysator 1500 geführt. Das Signal 32 wird über eine Leitung an den FFT-Analysator 1501 geführt. Das Ausgangssignal 1510 und das Ausgangssignal 1520 des FFT-Analysators 1500 sowie das Ausgangssignal 1530 und das Ausgangssignal 1540 des FFT--Analysators 1501 werden zu dem Signal 80 zusammengefaßt.

Der FFT-Analysator 1500 führt eine Fourieranalyse des Signales 22 durch. Als Ergebnis gibt er mit dem Signal 1510 den Fourier-Faktor bei der Frequenz aus, die der halben Pulswiederholungsfrequenz entspricht. Als Ergebnis gibt er mit dem Signal 1520 den Fourier-Faktor bei der Frequenz aus, die der Puslwiederholungsfrequenz entspricht.

Der FFT-Analysator 1501 führt eine Fourier-Analyse des Signales 32 durch. Als Ergebnis gibt er mit dem Signal 1530 den Fourier-Faktor bei der Frequenz aus, die der halben Pulswiederholungsfrequenz entspricht. Als Ergebnis gibt er mit dem Signal 1540 den Fourier-Faktor bei der Frequenz aus, die der Pulswiederholungsfrequenz entspricht.

Für diesen Falle der Laserstabilisierung kann der Laser nur auf zwei Lichtwellenlängen Energie emittieren oder vor der Laserabstimmung 502 werden die Signale 22, 32 und 42 nach der selben Methode in Signalpaare aufgeteilt, wie es mittels der Vorrichtung 504 geschieht, um aus den Signalen 12 und 22 die Signale 13 und 23 bzw. 14 und 24 zu gewinnen. Alle Komponenten zur Verarbeitung des Signales 42 entfallen bei der Beschränkung auf zwei Signalpulse.

Das Signal 22 wird aus dem Lichtstrahl abgeleitet, der durch die Referenzstrecke 6 strahlt. Das Signal 32 wird aus dem Lichtstrahl abgeleitet, der durch die Eichstrecke 7 strahlt. Das Signal 22 ist folglich ein direktes Abbild der Laseremission. Das Signal 32 ist während der Aussendung des uncharakteristischen Lichtstrahles ebenfalls ein Abbild der Laseremission, während der Aussendung des charakteristischen Lichtstrahles wird dieser auf der Eichstrecke stark bedämpft. Der charakteristische Lichtpuls ist folglich stark abgeschwächt im Signal 32 enthalten.

Wird das Signal 22 des richtig abgeglichenen Lasers in seine spektralen Bestandteile zerlegt, so zeigt sich, daß im wesentlichen nur Anteile bei der selben Frequenz vorhanden sind, die der Pulswiederholfrequenz im Signal 22 entspricht. Alle anderen Anteile sind nur in Abhängigkeit von der Pulskurvenform vorhanden. Wird das Signal 32 des richtig abgeglichenen Lasers in seine spektralen Bestandteile zerlegt, so zeigt sich, daß im wesentlichen nur Anteile bei der halben und bei der ganzen Frequenz vorhanden sind, die der Puslwiederholfrequenz in Signal 32 entspricht. Wird der Laser falsch abgeglichen, ändert sich auch die spektrale Zusammensetzung der Signale 22 und 32.

Für die Inbetriebnahme wird der Laser 1 mit einem beliebigen Signal 52 angesteuert, daß solange variiert wird, bis das Signal 1520 ein Maximum und das Signal 1510 ein Minimum annimmt während das Signal 1530 ein Maximum annimmt und das Signal 1540 ein Maximum annimt. Dies ist immer dann der Fall, wenn die Signalpulse im Signal 32 bei mit maximaler Amplitude auftreten und ein Signalpuls im Signal mit maximaler Amplitude auftritt während der zweite Signalpuls im Signal 32 mit minimaler Amplitude auftritt.

Dies ist dann der Fall, wenn der Laser einmal mit der charakteristischen Lichtwellenlänge und einmal mit der uncharakteristischen Lichtwellenlänge emittiert. Der charakteristische Lichtpuls wird dann auf der Eichstrecke bedämpft, während die anderen Lichtpulse unbedämpft zu den Detektoren 20 und 30 gelangen.

Zur Langzeitstabilisierung wird auch hier der Laser im Betrieb laufend leicht verstimmt. Die Verstimmungsrichtung wird immer dann umgedreht, wenn sich die Signale 1510, 1520, 1530 und 1540 entsprechend obiger bedingung verschlechtern.

Nachfolgend werden die Chakteristika, wie Phasenlage und Kurvenform der hier verwendeten Signale beschrieben.

### Detektorsignal und Timing:

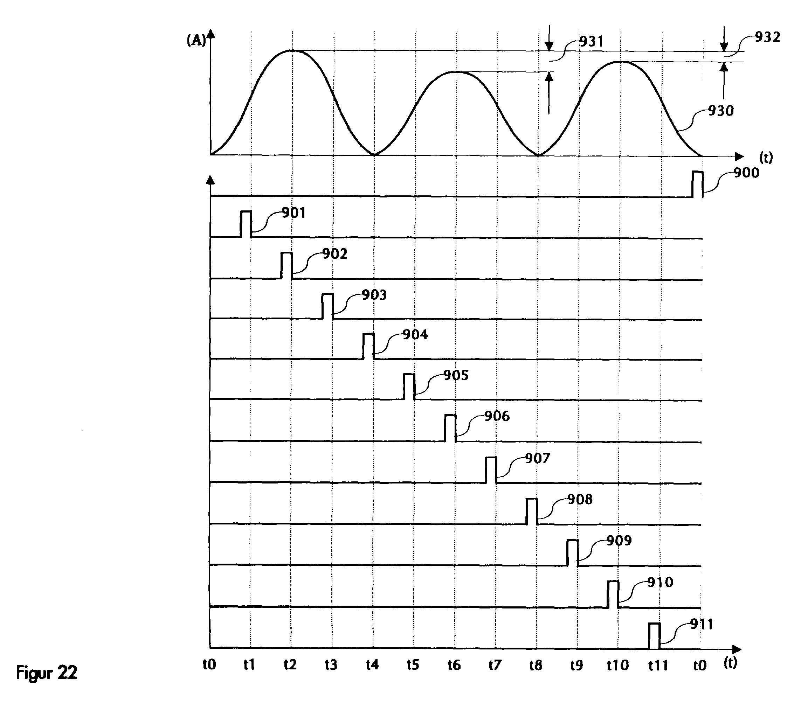

Die Figur 22 zeigt den idealisierten Zusammenhang der Taktsignale 900, 901, 902, 903, 904, 905, 906, 907, 908, 909, 910 und 911 und den Detektorsignalen 11, 21, 31 und 42 sowie den, aus den Detektorsignalen abgeleiteten Signalen 12, 22, 32 und 42.

Das Signal 930 entspricht den zu erwartenden Kurvenzügen der Signale 11, 21, 31, 41, 12, 22, 32 und 42.

Das Signal 930 stellt drei Pulszüge dar. Zur Vereinfachung der Darstellung sei der erste Puls, der uncharakteristische Puls. Der uncharakteristische Puls wird durch den Lichtpuls hervorgerufen, dessen Lichtwellenlänge uncharakteristisch für alle Stoffe auf der Meßstrecke 5 ist. Der zweite Puls sein der erste charakteristische Puls. Der erste charakteristische Puls wird durch den Lichtpuls hervorgerufen, dessen Lichtwellenlänge charakteristisch ist für das Gas, welches sich in der Küvette auf der Eichstrecke 7 befindet. Der dritte Puls sei der zweite charakteristische Puls. Der zweite charakteristische Puls wird durch den Lichtpuls hervorgerufen, dessen Lichtwellenlänge charakteristisch ist für das Gas, welches sich in der Küvette auf der Eichstrecke 8 befindet.

Der erste Puls ist direkt proportional der Emission des Lasers während dieser Licht der uncharakteristischen Lichtwellenlänge emittiert. Während des Durchtritts des Lichtstrahles mit der uncharakteristischen Lichtwellenlänge durch die Meßstrecke wird der Strahl - wenn überhaupt - nur mit einem konstanten Faktor geschwächt. Der zweite Puls ist proportional der Laseremission während dieser Licht der ersten charakteristischen Lichtwellenlänge emittiert, geschwächt um die Absorption des Lichtstrahles auf der Meßstrecke 5. Die Absorption ist abhängig von der Konzentration des ausgesuchten Gases, welches sich in der Küvette auf der Eichstrecke 7 befindet, auf der Meßstrecke 5 und, falls eine Querempfindlichkeit vorliegt, von der Konzentration des ausgesuchten Gases, welches sind in der Küvette auf der Eichstrecke 8 befindet. Der dritte Puls ist proportional der Laseremission während dieser Licht der zweiten charakteristischen Lichtwellenlänge emittiert, geschwächt um die Absorption des Lichtstrahles auf der Meßstrecke 5. Die Absorption ist abhängig von der Konzentration des ausgesuchten Gases, welches sich in der Küvette auf der Eichstrecke 8 befindet.

Die Differenz in der Amplitude zwischen dem ersten und dem zweiten Puls 931 ist folglich ein Maß für die Konzentration der beiden Gase auf der Meßstrecke 5. Die Differenz in der Amplitude zwischen dem ersten und dem dritten Puls 932 ist folglich ein Maß für die Konzentration des zweiten Gases auf der Meßstrecke 5.

Die in der unteren Hälfte von Figur 22 dargestellten Taktsignale dienen zur Synchronisation der Auswerteelektronik mit den Detektorsignalen. Das Taktsignal 900 signalisiert mit seiner fallenden Flanke den Anfang einer neuen Signalperiode und das Ende der letzten Signalperiode. Das Tatsignal 901 signalisiert mit seiner fallenden Signalflanke das Ende des ersten Viertels des uncharakteristischen Signalpulses. Das Taktsignal 902 signalisiert die Mitte des uncharakteristischen Signalpulses. Das Taktsignal 903 signalisiert das Ende des dritten Viertels des uncharakteristischen Signalpulses. Das Taktsignal 904 signalisiert das Ende des uncharakteristischen Signalpulses und den Anfang des charakteristischen Signalpulses. Das Taktsignal 905 signalisiert mit seiner fallenden Flanke das Ende des ersten Viertels des ersten charakteristischen Signalpulses. Das Taktsignal 906 signalisiert mit seiner fallenden Flanke die Mitte des charakteristischen Signalpulses. Das Taktsignal 907 signalisiert mit seiner fallenden Flanke das Ende des dritten Viertels des ersten charakteristischen Signalpulses. Das Taktsignal 908 signalisiert mit seiner fallenden Flanke das Ende des ersten charakteristischen Signalpulses und den Anfang des zweiten charakteristischen Signalpulses. Das Taktsignal 909 signalisiert mit seiner fallenden Flanke das Ende des ersten Viertels des zweiten charakteristischen Signalpulses. Das Taktsignal 910 signalisiert mit seiner fallenden Flanke die Mitte des zweiten charakteristischen Signalpulses. Das Taktsignal 911 signalisiert mit seiner fallenden Flanke das Ende des dritten Viertels des zweiten charakteristischen Signalpulses.

Die Taktsignale 900, 901, 902, 903, 904, 905, 906, 907, 908, 909, 910 und 911 werden von der Systemsteuerung so eingestellt, daß obige Phasenbeziehung zutrifft.

### Signalaufteilung:

Die Figur 23 zeigt ein idealisiertes Detektorsignal und seine Aufteilung in zwei Signale. Der Kurvenzug 700 entspricht dem Kurvenzug der Signale 11, 21, 31, 41, 12, 22, 32 und 42. Der Kurvenzug 710 entspricht dem Kurvenzug der Signale 13 und 23. Der Kurvenzug 720 entspricht dem Kurvenzug der Signale 14 und 24.

Der obere Kurvenzug 700 stellt eine Periode eines idealisierten Detektorsignales dar. Der Kurvenzug 700 beginnt zum Zeitpunkt 730 bei einem relativen Minimum. Bis zum Zeitpunkt 731 steigt der Signalpegel auf ein relatives Maximum an. Zwischen dem Zeitpunkt 731 und dem Zeitpunkt 732 fällt der Signalpegel auf ein relatives Minimum ab. Zwischen den Zeitpunkten 730 und 732 liegt der Signalpuls 731. Zwischen dem Zeitpunkt 732 und dem Zeitpunkt 733 steigt der Signalpegel wieder auf ein relatives Maximum an. Zwischen dem Zeitpunkt 733 und dem Zeitpunkt 734 fällt der Signalpegel auf ein relatives Minimum ab. Zwischen den Zeitpunkten 732 und 734 liegt der Signalpuls 702. Zwischen den Zeitpunkten 734 und 735 steigt der Signalpegel auf ein relatives Maximum an. Zwischen den Zeitpunkten 735 und 736 fällt der Signalpegel auf ein relatives Minimum ab. Zwischen den Zeitpunkten 734 und 736 liegt der Signalpuls 703. Die Signalperiode des Signales 700 beginnt am Zeitpunkt 730 und endet am Zeitpunkt 736.

Die Signalpegel zu den Zeitpunkten 730, 732, 734 und 736 müssen nicht gleich sein. Die Signalpegel zu den Zeitpunkten 731, 733 und 735 müssen nicht gleich sein.

Der erste Signalpuls 701 enstand aufgrund der Emission von Licht durch den Laser 1 mit der uncharakteristischen Lichtwellenlänge. Der zweite Signalpuls 702 entstand aufgund der Emission durch den Laser 1 mit der ersten charakteristischen Lichtwellenlänge. Der dritte Signalpuls entstand aufgrund der Emission durch den Laser 1 mit der zweiten charakteristischen Lichtwellenlänge. Die Amplitude des Signalpulses 701 entspricht bei allen vier gezeigten Signalen 11, 21, 31 und 41 der Laseremission. Die Amplitude des Signalpulses 702 entspricht bei dem Signal 21 der Laseremission. Die Amplitude des Signalpulses 702 entspricht bei dem Signal 31 der Laseremission geschwächt um die Absoprtion des Lichtstrahles auf der Eichstrecke 7, in der sich eine Küvette mit einem Gas befindet, für das die Lichtwellenlänge des zugeordneten Lichtpulses charakteristisch ist. Die Amplitude des Signalpulses 702 entspricht bei dem Signal 31 der Laseremission geschwächt um die Absoprtion des Lichtstrahles auf der Eichstrecke 8, in der sich eine Küvette mit einem Gas befindet, für das die Lichtwellenlänge des zugeordneten Lichtpulses ebenfalls charakteristisch ist. Die Amplitude des Signalpulses 702 entspricht bei dem Signal 41 der Laseremission. Die Amplitude des Signalpulses 703 entspricht bei dem Signal 21 der Laseremission. Die Amplitude des Signalpulses 703 entspricht bei dem Signal 31 der Laseremission. Die Amplitude des Signalpulses 703 entspricht bei dem Signal 41 der Laseremission geschwächt um die Absorption des Lichtstrahles auf der Eichstrecke 8, in der sich eine Küvette mit einem Gas befindet, für das sie Lichtwellenlänge des zugeordneten Lichtpulses charakteristisch ist.

Die Amplitude des Signalpulses 701 bei dem Signal 11 entspricht der Laseremission eventuell geschwächt um die konstante Absorption des Lichtstrahles 203 auf der Meßstrecke 5. Die Amplitude des Signalpulses 702 bei dem Signal 11 entspricht der Laseremission eventuell geschwächt um die konstante Absorption des Lichtstrahles 203 auf der Meßstrecke 5 und geschwächt um die Absorption durch das Gas, welches sich auch auf der Eichstrecke 7 befindet und um die Absorption durch das Gas, welche sich auch auf der Eichstrecke 8 befindet. Die Absorption des Lichtstrahles 203 auf der Meßstrecke 5 durch das Gas, das sich auch auf der Eichstrecke 7 befindet, ist proportional zur Konzentration dieses Gases auf der Meßstrecke 5 und proportional zur Konzentration des Gases, welches sich auch auf der Eichstrecke 8 befindet, auf der Meßstrecke 5. Die Amplitude des Signalpulses 703 bei dem Signal 11 entspricht der Laseremission eventuell geschwächt um die konstante Absorption des Lichtstrahles 23 auf der Meßstrecke 5 und geschwächt um die Absorption des Lichtstrahles 203 auf der Meßstrecke 5 durch das Gas, das sich auch auf der Eichstrecke 8 befindet. Die Absorption des Lichtstrahles 203 auf der Meßstrecke 5 durch das Gas, welches sich auch auf der Eichstrecke 8 befindet, ist proportional zur Konzentration dieses Gases auf der Meßstrecke.

Die Lichtwellenlänge des dem Signalpuls 702 zugeordnetem Lichtpuls ist charakteristisch für die beiden Gase, die sich in den Küvetten der beiden Eichstrecken 7 und 8 befinden. Da auf der Meßstrecke 5 nicht unterschieden werden kann, ob aufgrund der Absorption durch den Stoff, der sich auf der Eichstrecke 7 oder ob aufgrund der Absorption durch den Stoff, der sich auf der Eichstrecke 8 befindet der Lichtstrahl 203 bei der ersten charakteristischen Lichtwellenlänge absorbiert wird, spricht man allgemein von einer Querempfindlichkeit.

Der mittlere Kurvenzug 710 entspricht dem idealisierten Kurvenzug der aufgeteilten Signale 13 und 23.

Der Kurvenzug 710 beginnt zum Zeitpunkt 740 bei einem relativen Minimum. Zwischen den Zeitpunkten 740 und 741 steigt der Signalpegel auf ein relatives Maximum an. Zwischen den Zeitpunkten 741 und 742 fällt der Signalpegel auf ein relatives Minimum ab. Zwischen den Zeitpunkten 740 und 742 liegt der Signalpuls 711. Zwischen den Zeitpunkten 742 und 743 steigt der Signalpegel auf ein relatives Maximum an. Zwischen den Zeitpunkten 743 und 744 fällt der Signalpegel auf ein relatives Minimum ab. Zwischen den Zeitpunkten 742 und 744 liegt der Signalpuls 712.

Der untere Kurvenzug 720 entspricht dem idealisierten Kurvenzug der aufgeteilten Signale 14 und 24.

Der Kurvenzug 720 beginnt zum Zeitpunkt 750 bei einem relativen Minimum. Zwischen den Zeitpunkten 750 und 751 steigt der Signalpegel auf ein relatives Maximum an. Zwischen den Zeitpunkten 751 und 752 fällt der Signalpegel auf ein relatives Minimum ab. Zwischen den Zeitpunkten 750 und 752 liegt der Signalpuls 721. Zwischen den Zeitpunkten 752 und 753 steigt der Signalpegel auf ein relatives Maximum an. Zwischen den Zeitpunkten 753 und 754 fällt der Signalpegel auf ein relatives Minimum ab. Zwischen den Zeitpunkten 752 und 754 liegt der Signalpuls 722.

Die Kurvenzüge 710 und 720 werden aus dem Kurvenzug 700 gewonnen. Die Signalpulse 711 und 721 werden aus dem Signalpuls 701 abgeleitet. Der Signalpuls 712 wird aus dem Signalpuls 702 abgeleitet. Der Signalpuls 722 wird asu dem Signalpuls 703 abgeleitet.

Die Signalperiode der Kurvenzüge 700, 710 und 720 ist gleich. Die Amplitude des Signalpulses 711 zum Zeitpunkt 741 und die Amplitude des Signalpulses 721 zum Zeitpunkt 751 entspricht der Amplitude des Signalpulses 701 zum Zeitpunkt 731. Die Amplitude des Signalpulses 712 entspricht der Amplitude des Signalpulses 702 zum Zeitpunkt 733. Die Amplitude des Sifgnalpulses 722 entspricht der Amplitude des Signalpulses 703 zum Zeitpunkt 735. Die Amplitude des Signalpulses 711 zum Zeitpunkt 740 und die Amplitude des Signalpulses 721 zum Zeitpunkt 750 entspricht der Amplitude des Signalpulses 701 zum Zeitpunkt 730. Die Amplitude des Signalpulses 711 zum Zeitpunkt 742 und die Amplitude des Signalpulses 721 zum Zeitpunkt 752 entspricht der Amplitude des Signalpulses zum Zeitpunkt 732. Die Amplitude des Signalpulses 721 zum Zeitpunkt 742 entspricht der Amplitude des Signalpulses 733 zum Zeitpunkt 732. Die Amplitude des Signalpulses 712 zum Zeitpunkt 744 entspricht der Amplitude des Signalpulses 702 zum Zeitpunkt 734. Die Amplitude des Signalpulses 722 zum Zeitpunkt 752 entspricht der Amplitude des Signalpulses 703 zum Zeitpunkt 734. Die Amplitude des Signalpulses 722 zum Zeitpunkt 754 entspricht der Amplitude des Signalpulses 735 zum Zeitpunkt 736.

Der zeitliche Ablauf des Signalpulses 701 wird zur Umwandlung in die Signalpulse 711 bzw. 721 so gedehnt, daß der Zeitpunkt 740 und der Zeitpunkt 750 wie der Zeitpunkt 730 zu Beginn der Signalperiode liegen und der Zeitpunkt 732 wird so verschoben, daß er als Zeitpunkt 742 bzw. 752 genau in der Mitte der Signalperiode zum Liegen kommt. Um den selben Faktor werden die anderen Zeitpunkten zwischen 740 und 742 bzw. zwischen 750 und 752 gedehnt. Der zeitliche Ablauf des Signalpulses 702 wird zur Umwandlung in den Signalpuls 712 so verschoben und gedehnt, daß der Zeitpunkt 732 so verschoben wird, daß er als Zeitpunkt 742 genau in der Mitte der Signalperiode zum Liegen kommt.Der Zeitpunkt 734 wird zur Umwandlung in den Zeitpunkt 744 zuerst um den selben Wert verschoben, um den auch der Zeitpunkt 732 bei der Umwandlung in den Zeitpunkt 742 verschiben wurde, und anschließend wird der zeitliche Ablauf zwischen den Zeitpunkten 732 und 734 so gedehnt, daß der Signalpuls genau eine halbe Signalperiode dauert. Alle Zeitpunkte zwischen 732 und 734 werden ebenso verschoben und gedehnt, um in die Zeitpunkte zwischen 742 und 744 umgewandelt zu werden. Der zeitliche Ablauf des Signalpulses 703 wird zur Umwandlung in den Signalpuls 722 so verschoben und gedehnt, daß der Zeitpunkt 734 so verschoben wird, daß er als Zeitpunkt 752 genau in der Mitte der Signalperiode zum Liegen kommt. Der Zeitpunkt 736 bleibt bei der Umwandlung in den Zeitpunkt 754 am Ende der Signalperiode. Anschließend wird der zeitliche Ablauf zwischen den Zeitpunkten 734 und 736 so gedehnt, daß der Signalpuls genau eine halbe Signalperiode dauert. Alle Zeitpunkte zwischen 734 und 736 werden ebenso verschoben und gedehnt, um in die Zeitpunkte zwischen 752 und 754 umgewandelt zu werden.

Die Aufteilung des Kurvenzuges 700 in die Kurvenzüge 710 und 720 erfolgt mit einer Phasenverschiebung von ca. 360°. Zuerst wird der Kurvenzug 700 vollständig in einem Zwischenspeicher abgelegt, um in der darauf folgenden Signalperiode in die beiden Kurvenzüge 710 und 720 aufgeteilt zu werden.

### Meßwertbildungstakt:

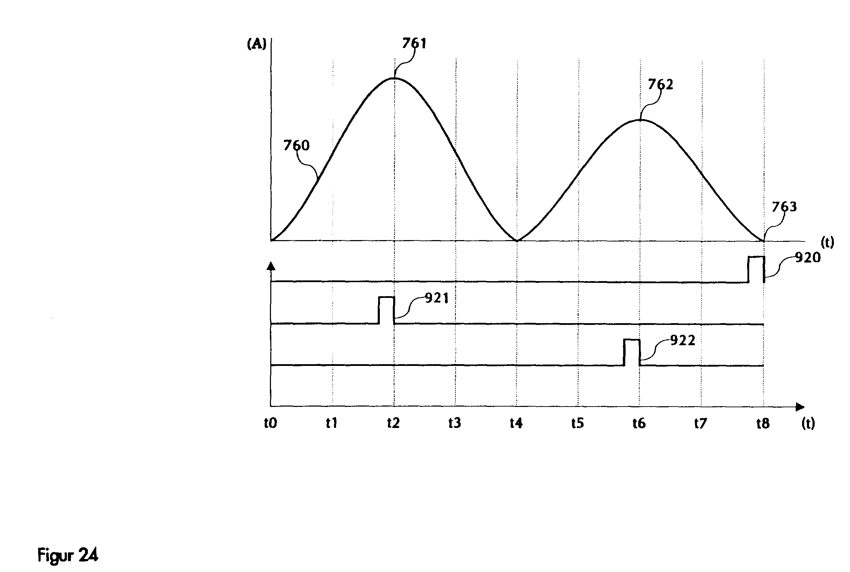

Die Figur 24 zeigt die zeitlichen Zusammenhänge zwischen den Signalen 13, 23, 14 und 24 und den Taktsignalen 920, 921 und 922.

Der Kurvenzug 760 stellt einen idealisierten Kurvenzug der Signale 13, 23, 14 und 24 dar. Die Kurvenzüge 710 und 720 der Figur 23 stellen ähnliche dar.

Das Taktsignal 921 signalisiert mit seiner fallenden Signalflanke die Mitte 761 des ersten Pusles des Kurvenzuges 760. Das Taktsignal 922 signalisiert mit seiner fallenden Flanke die Mitte 762 des zweiten Pulses des Kurvenzuges 760. Das Taktsignal 920 signalisiert mit seiner fallenden Flanke das Ende der Signalperiode des Kurvenzuges 763.

### Signalbewertung:

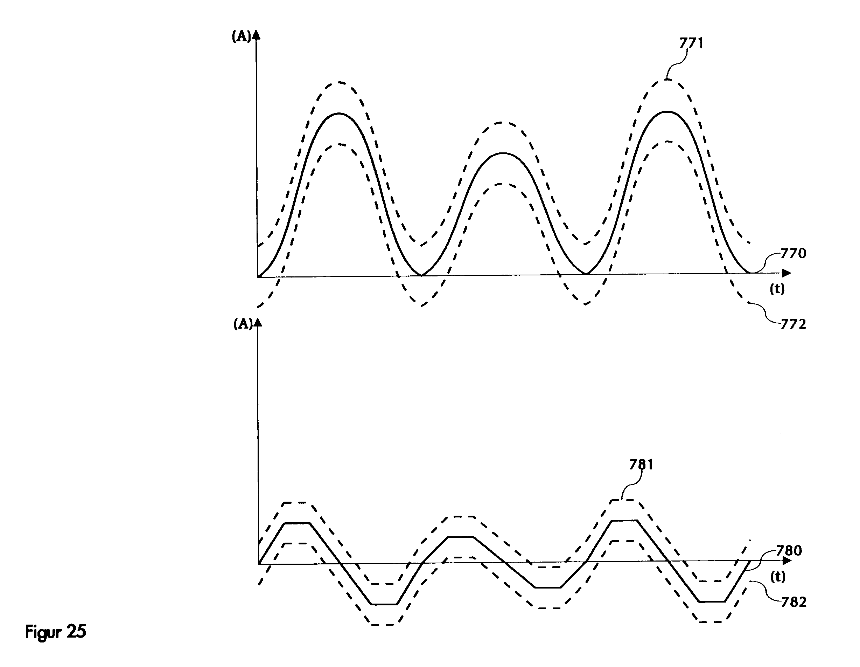

Die Figur 25 zeigt den idealisierten Kurvenzug der Signale 11, 21, 31, 41, 12, 22, 32 und 42, seine Tolerenzgrenzen und die erste Ableitung mit Tolerenzgrenzen. Zur besseren Darstellung wurden die Tolerenzgrenzen bewußt groß gewählt.

Der Kurvenzug 770 stellt den idealisierten Kurvenzug innerhalb einer Signalperiode der Signale 11, 21, 31, 41, 12, 22, 32 und 42 dar. Die Kurvenzüge 771 und 772 stellen den Toleranzbereich dar, innerhalb welcher sich die genannten Signale bewegen müssen.

Der Kurvenzug 780 stellt den idealisierten Kurvenzug innerhalb einer Signalperiode der ersten Ableitung der Signale 11, 21, 31, 41, 12, 22, 32 und 42 dar. Die Kurvenzüge 781 und 782 stellen den Toleranzbereich dar, innerhalb welcher sich die erste Ableitung der genannten Signal bewegen müssen.

### Meßwertbildung:

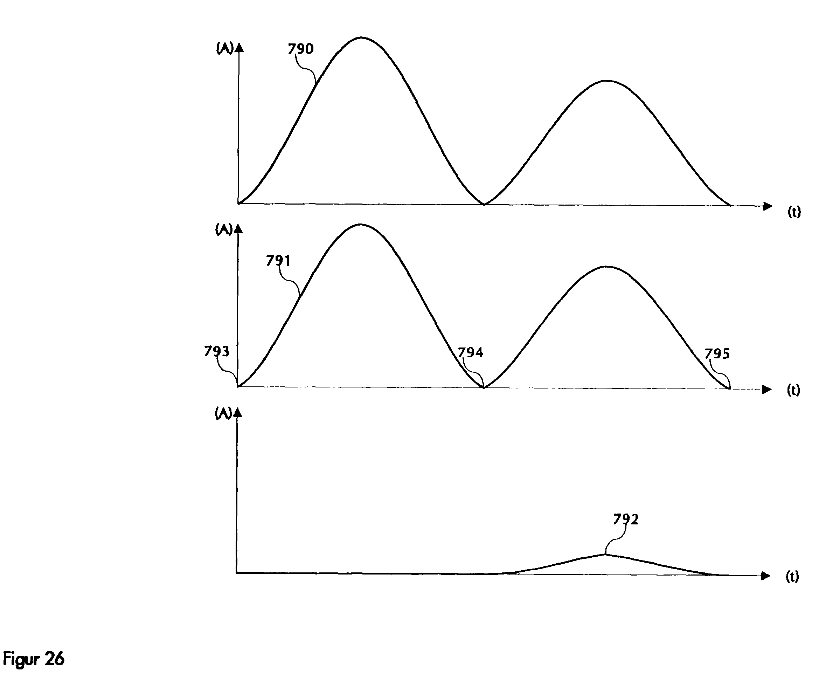

Die Figur 26 zeigt die idealisierten Kurvenformen für die Meßwertbildung. Der Kurvenzug 790 entspricht den Signalen 23 und 24. Der Kurvenzug 791 entspricht den Signalen 13 und 14. Der Kurvenzug 792 entspricht dem Signalen 160 und 260.

In der ersten Hälfte der Signalperiode zwischen den Zeitpunkten 793 und 794 sind beide Signale identisch. Das Differenzsignal, der Kurvenzug 792, ist folglich null. Zwischen den Zeitpunkten 794 und 795 wird der Kurvenzug 791 aufgrund der charakteristischen Absorption auf der Meßstrecke 5 bedämpft. Es entsteht eine kleine Differenz. Die Frequenz des Differenzsignales entspricht genau der halben Pulswiederholungsfrequenz in den Kurvenzügen 790 und 791.

Schließlich seien noch folgende bevorzugte Alternativen erwähnt: Anstelle des automatischen Pegelangleichs zwischen den Signalen 12 und 22 in der Verstärker- und Filterschaltung 501 kann auch die Pegeldifferenz in zwischen den Signalen 12 und 22 während des uncharakteristischen Signalpulses bestimmt werden und der Meßwert anschließend damit korrigiert werden.

### Alternative Strahlungsquellenstabilisierung am Beispiel einer Laserstabilisierung:

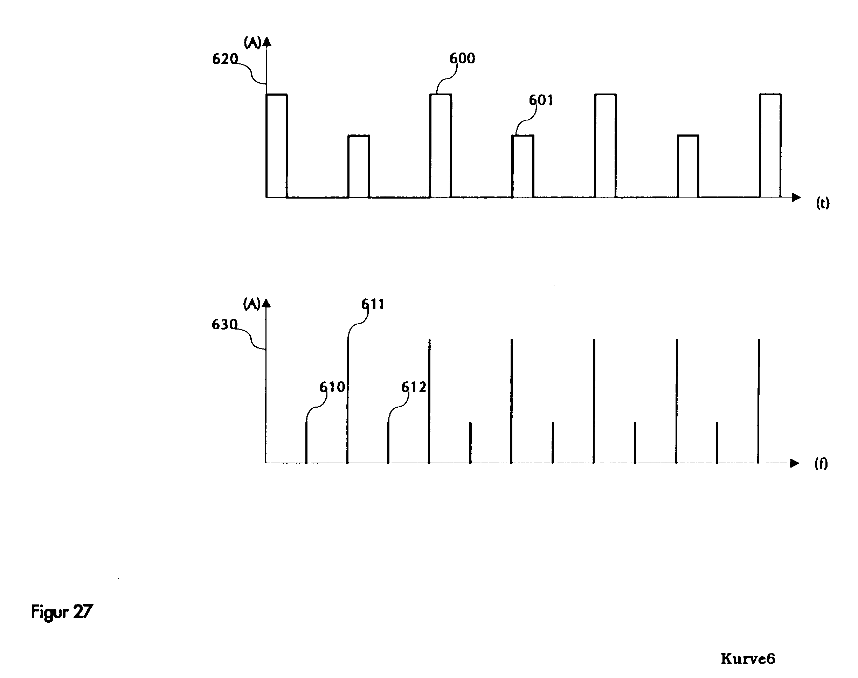

Die Figur 27 zeigt das idealisierte Ausgangssignal 11, 21, 31 bzw. 41 eines Detektors 10, 20, 30 bzw. 40 im Zeitbereich 620 und das Spektrum 630 dieses Signals. Der Signalpuls 600 wird durch den uncharakteristischen Lichtpuls hervorgerufen. Der Signalpuls 601 wird durch den charakteristischen Lichtpuls hervorgerufen. Der Abstand zwischen den Signalpulsen ist konstant.

Wird das Signal 620 einer Fourier-Analyse unterzogen, ergibt sich das in Figur 27 gezeigte Spektrum 630. Die Spektrallinie 611 entspricht der Pulswiederholungsfrequenz der Lichtpulse. Der Abstand der Spektrallinien 610 und 611 entspricht der halben Pulswiederholungsfrequenz. Somit entspricht die Spektrallinie 610 der halben Pulswiederholungsfrequenz. Der Abstand der Spektrallinien 611 und 612 entspricht der halben Pulswiederholungsfrequenz. Somit entspricht die Spektrallinie 612 der eineinhalbfachen Pulswiederholungsfrequenz.

Die Höhe der Spektrallinie 610 bzw. 612 ist abhängig von der Dämpfung des charakteristischen Lichtpulses auf der Meßstrecke 5. Wird der Lichtstrahl nicht gedämpft und emittiert der Laser ein ideales Lichtsignal, verschwinden die Spektrallinien 610 und 612 und alle anderen ungeraden Spektrallinien. Wird der charakteristische Lichtpuls vollständig auf der Meßstrecke 5 absorbiert, so besteht das Signal 620 nur noch aus den charakteristischen Signalpulse 601. Damit verschwindet im Spektrum auch die Spektrallinie 611.

Abhängig von der aktuellen Kurvenform des Detektorsignales im Zeitbereich und des Übertragungsverhaltens des Detektors wiederholen sich die Spektrallinien. Der Informationsgehalt des Spektrums bleibt dabei unverändert. Zur Auswertung kann das Verhältnis eines beliebigen Spektrallinienpaares herangezogen werden.

Die erfindungsgemäßen Verfahren sind grundsätzlich nicht auf den Einsatz von Lasern als Strahlungsquelle beschränkt. Jede Strahlungsquelle, die eine Strahlung emittieren kann, die charakteristisch für einen Stoff ist, kann benutzt werden. Entscheident ist nur, daß es für die eingesetzte Strahlung Detektoren gibt, die ein elektrisches Signal erzeugen, das proportional der auftreffenden Strahlungsenergie ist.

## Patentansprüche

1. Verfahren zur Auswertung einer charakteristischen Absorption von einem oder mehreren Stoffen in einem Stoffgemisch, wobei Strahlungspulse, insbesondere Laserpulse, alternierend mit wenigstens einer für einen zu messenden Stoff charakteristischen und einer hierfür uncharakteristischen Wellenlänge einen Meßweg (5), auf dem sich das Stoffgemisch befindet, und einen Referenzweg (6) ohne Stoffgemisch und ohne Eichküvette durchlaufen, und anschließend in elektrische Signale (12, 22, 13, 23, 14, 24) umgewandelt werden, dadurch gekennzeichnet, daß
- aus dem Meßwegsignal (13; 14) und dem Referenzwegsignal (23; 24) ein Differenzsignal (160; 260) gebildet wird; und
- der Meßwert aus der Pegeldifferenz (792) des Differenzsignals (160; 260) zum Zeitpunkt (922) des Maximums des charakteristischen Signalpulses (762) und zum Zeitpunkt (921) des Maximums des uncharakteristischen Signalpulses (761) gebildet wird.

2. Verfahren nach Anspruch 1, dadurch gekennzeichnet, daß das Differenzsignal (160; 260) vor der Meßwertausgabe zeitselektiert (133, 134; 233, 234) und/oder frequenzselektiert (132; 232), sowie bewertet (135) und bei Bedarf korrigiert wird.

3. Verfahren nach Anspruch 1 oder 2, dadurch gekennzeichnet, daß die elektrischen Signale (12, 22) vor der Weiterverarbeitung zum Meßwert bewertet und bei Abweichung von vorgegebenen Sollwerten korrigiert werden.

4. Verfahren nach einem der vorstehenden Ansprüche, dadurch gekennzeichnet, daß das Referenz- und Meßwegsignalpaar (12, 22) in eine - der Anzahl der verwendeten charakteristischen Wellenlängen entsprechende - Anzahl von Signalpaaren (13, 23; 14, 24) bestehend aus jeweils zwei Signalpulsen, welche ihre Ursache in den Lichtpulsen mit der jeweils charakteristischen und der uncharakteristischen Wellenlänge (charakteristischer und uncharakteristischer Signalpuls) haben, aufgeteilt wird.

5. Verfahren nach einem der vorstehenden Ansprüche, gekennzeichnet durch eine Signalteilung, derart, daß wenigstens ein Eichwegsignal (32; 42) und das Referenzsignal (22) einer Strahlungsquellenstabilisierung, insbesondere Laserstabilisierung zugeführt und ein Signalpaar aus Referenz- und Meßwegsignalen (12, 22) der Bewertung und ggf. Korrektur unterzogen wird.

6. Verfahren nach einem der vorstehenden Ansprüche, dadurch gekennzeichnet, daß die Konzentration eines Stoffes, der Querempfindlichkeiten verursacht, mit Strahlungspulsen einer für diesen Stoff charakteristischen Wellenlänge bestimmt und hiermit der Meßwert korrigiert wird.

7. Verfahren nach einem der vorstehenden Ansprüche, wobei die Strahlungspulse, insbesondere Laserpulse, auch wenigstens einen Eichweg (7; 8) durchlaufen, und anschließend in elektrische Eichwegsignale umgewandelt werden, wobei zur Strahlungsquellenstabilisierung Referenz- und Eichwegsignale (22, 32, 42) zeitselektiv abgetastet werden, um den Signalverlauf, die Phasenlage, den Maximalwert und den Durchschnittswert dieser beiden Signale pro Signalperiode zu bestimmen.

8. Verfahren nach Anspruch 7, dadurch gekennzeichnet, daß die Strahlungsquelle (1) zunächst mit einem beliebigen Signal (52) angesteuert wird, das so lange verändert wird, bis sich im Referenzweg ein angepaßter Signalpegel einstellt und die mittels Sample & Hold-Schaltungen ermittelte Kurvenform und Phasenlage des Referenzwegsignals dem gewünschten Strahlungssignal entspricht.

9. Verfahren nach Anspruch 7 oder 8, dadurch gekennzeichnet, daß die Emissionswellenlänge der Strahlungsquelle (1) wiederholt durch Abtasten der Eichwegsignale (32, 42) mittels Sample & Hold-Schaltungen ermittelt und bei Bedarf neu korrigiert wird.

10. Verfahren nach einem der Ansprüche 1 bis 6, wobei die Strahlungspulse auch wenigstens einen Eichweg (7; 8) durchlaufen, und anschließend in elektrische Eichwegsignale umgewandelt werden und die eletrischen Referenzweg- und Eichwegsignale mittels Fourier-Analyse in ihre spektralen Signalbestandteile zerlegt werden, wobei zur Strahlungsquellenstabilisierung eine Regelschleife vorgesehen ist, die durch Verstimmung des Lasers (1) das Spektrum des Referenzwegsignals so einstellt, daß die ungeraden Fourierkomponenten ein Minimum und die geraden Fourierkomponenten ein Maximum annehmen, und daß im Spektrum des Eichwegsignals die ungeraden Fourierkomponeneten ein Maximum und die geraden Fourierkomponenten ein Minimum annehmen.

11. Vorrichtung zur Auswertung der charakteristischen Absorption von einem oder mehreren Stoffen in einem Stoffgemisch, wobei Strahlungspulse, insbesondere Laserpulse, alternierend mit einer für einen zu messenden Stoff charakteristischen und einer hierfür uncharakteristischen Wellenlänge einen Meßweg (5), auf dem sich das Stoffgemisch befindet, und einen Referenzweg (6) ohne Stoffgemisch und ohne Eichküvette durchlaufen und mittels Detektoren (10, 20, 30, 40) in elektrische Signale (12, 22, 13, 23, 14, 24) umgewandelt werden, gekennzeichnet durch
- einen Subtrahierer (130; 230) zur Bildung eines Differenzsignals (160; 260) aus dem Meßwegsignal (13; 14) und dem Referenzwegsignal (23; 24); und
- eine Auswertungseinrichtung mit einer Meßwertbildungsvorrichtung (505; 506) zur Bildung des Meßwertes aus der Pegeldifferenz (792) des Differenzsignals (160; 260) zum Zeitpunkt (922) des Maximums des charakteristischen Signalpulses (762) und zum Zeitpunkt (921) des Maximums des uncharakteristischen Signalpulses (761).

12. Vorrichtung nach Anspruch 11, gekennzeichnet durch eine der Meßwertbildungsvorrichtung (505; 506) vorgeschaltete Bewertungs- und Korrekturvorrichtung (504) zum Vergleich der elektrischen Signale, insbesondere Meßweg- und Referenzwegsignale (12, 22), mit Sollwerten und ggf. zur Korrektur der elektrischen Signale.

13. Vorrichtung nach Anspruch 11 oder 12, dadurch gekennzeichnet, daß dem Subtrahierer (130; 230) wenigstens zwei Sample & Holdschaltungen (133, 134; 233, 234) zum Abtasten des Differenzsignales (160; 260) in der Mitte des charakteristischen und in der Mitte des uncharakteristischen Signalpulses nachgeschaltet sind, und ein weiterer Subtrahierer (138; 238) zur Bildung der Pegeldifferenz im Differenzsignal (160; 260) zum Zeitpunkt des Maximums des charakteristischen und zum Zeitpunkt des Maximums des uncharakteristischen Signalpulses vorgesehen ist.

14. Vorrichtung nach einem der Ansprüche 11 bis 13, dadurch gekennzeichnet, daß die Strahlungspulse auch einen Eichweg (7; 8) durchlaufen und anschließend in Eichwegsignale (32; 42) umgewandelt werden, wobei eine Vorrichtung (502) zur Signalaufbereitung für eine Strahlungsquellenstabilisierung mit Gleichrichter- und Sample & Holdschaltungen vorgesehen ist, welche die Referenz- und Eichwegsignale (22, 32, 42) zu einem vorgegebenen Zeitpunkt abtasten, um die Kurvenform, die Phasenlage, sowie den Maximalwert und den Durchschnittswert pro Signalperiode zu bestimmen.

## Claims

1. A method for determining a characteristic absorption of one or more substances in a mixture of substances, whereby radiation pulses, in particular laser pulses, alternately with at least one wavelength which is characteristic for a substance to be measured and one wavelength which is uncharacteristic for said substance, pass through a measuring path (5), on which the substance mixture is located, and a reference path (6) without the substance mixture and without a calibration trough, and are then converted into electrical signals (12, 22, 13, 23, 14, 24),
**characterised in that**
- a differential signal (160; 260) is formed from the measuring path signal (13; 14) and the reference path signal (23; 24); and
- the measurement result is formed from the level difference (792) of the differential signal (160; 260) at the instant (922) of the maximum of the characteristic signal pulse (762) and at the instant (921) of the maximum of the uncharacteristic signal pulse (761).

2. A method according to Claim 1,
**characterised in that** the differential signal (160; 260) is time-selected (133, 134; 233, 234) and/or frequency-selected (132; 232) before the output of the measurement result, and also evaluated (135) and corrected if necessary.

3. A method according to Claim 1 or 2,
**characterised in that** the electrical signals (12, 22) are evaluated before the further processing to the measurement result and are corrected if they differ from predetermined set values.

4. A method according to one of the preceding Claims,
**characterised in that** the reference path and measuring path pair of signals (12, 22) is divided into a number of signal pairs (13, 23; 14, 24) - corresponding to the number of the characteristic wavelengths used - each consisting of two signal pulses, which originate in the light pulses with the respective characteristic and uncharacteristic wavelength (characteristic and uncharacteristic signal pulse).

5. A method according to one of the preceding Claims,
**characterised by** a signal division in such a manner that at least one calibration path signal (32; 42) and the reference signal (22) is supplied to a radiation source stabilisation unit, in particular a laser stabilisation unit, and a pair of signals from reference and measuring path signals (12, 22) is subject to evaluation and, where appropriate, correction.

6. A method according to one of the preceding Claims,
**characterised in that** the concentration of a substance which causes transverse sensitivity is determined with radiation pulses of a wavelength which is characteristic for this substance and the measurement result is corrected herewith.

7. A method according to one of the preceding Claims, whereby the radiation pulses, in particular laser pulses, also pass through at least one calibration path (7; 8), and then are converted into electrical calibration path signals, whereby, for the radiation source stabilisation, reference and calibration path signals (22, 32, 42) are time-selectively sampled, in order to determine the signal form, the phase relationship, the maximum value and the average of these two signals for each signal period.

8. A method according to Claim 7,
**characterised in that** the radiation source (1) is firstly triggered with a random signal (52) which is changed until an adapted signal level is established in the reference path, and the curve shape and phase relationship of the reference path signal detected by means of sample and hold circuits corresponds to the desired radiation signal.

9. A method according to Claim 7 or 8,
**characterised in that** the emission wavelength of the radiation source (1) is determined repeatedly by sampling the calibration path signals (32, 42) by means of sample and hold circuits and corrected again if necessary.

10. A method according to one of Claims 1 to 6, whereby the radiation pulses also pass through at least one calibration path (7; 8), and then are converted into electrical calibration path signals and the electrical reference path and calibration path signals are decomposed by means of Fourier analysis into their spectral signal components, whereby for the radiation source stabilisation a closed-loop control circuit is provided, which by staggering the laser (1) sets the spectrum of the reference path signal so that the uneven Fourier components assume a minimum and the even Fourier components assume a maximum, and so that in the spectrum of the calibration path signal the uneven Fourier components assume a maximum and the even Fourier components assume a minimum.

11. An apparatus for determining the characteristic absorption of one or more substances in a mixture of substances, whereby radiation pulses, in particular laser pulses, alternately with a wavelength which is characteristic for a substance to be measured and a wavelength which is uncharacteristic for said substance pass through a measuring path (5), on which the mixture of substances is located, and a reference path (6) without the mixture of substances and without a calibration trough and are converted by means of detectors (10, 20, 30, 40) into electrical signals (12, 22, 13, 23, 14, 24),
**characterised by**
- a subtracter circuit (130; 230) for the formation of a differential signal (160; 260) from the measuring path signal (13; 14) and the reference path signal (23 ; 24); and
- an evaluation device having a measurement result formation device (505; 506) for the formation of the measurement result from the level difference (792) of the differential signal (160; 260) at the instant (922) of the maximum of the characteristic signal pulse (762) and at the instant (921) of the maximum of the uncharacteristic signal pulse (761).

12. An apparatus according to Claim 11,
**characterised by** an evaluation and correction device (504), connected in front ofthe measurement result formation device (505; 506), for the comparison of the electrical signals, in particular measuring path and reference path signals (12, 22), with set values and, where appropriate, for the correction of the electrical signals.

13. An apparatus according to Claim 11 or 12,
**characterised in that** connected after the subtracter circuit (130; 230) are at least two sample and hold circuits (133, 134; 233, 234) for sampling the differential signal (160; 260) in the middle of the characteristic signal pulse and in the middle of the uncharacteristic signal pulse, and a further subtracter circuit (138; 238) is provided for forming the level difference in the differential signal (160; 260) at the instant of the maximum of the characteristic signal pulse and at the instant of the maximum of the uncharacteristic signal pulse.

14. An apparatus according to one of Claims 11 to 13,
**characterised in that** the radiation pulses also pass through a calibration path (7; 8) and then are converted into calibration path signals (32; 42), wherein a device (502) for the signal conditioning for a radiation source stabilisation unit is provided with rectifier and sample and hold circuits, which sample the reference and calibration path signals (22, 32, 42) at a predetermined instant in order to determine the curve shape, the phase relationship and also the maximum value and the average for each signal period.

## Revendications

1. Procédé d'évaluation d'une absorbance caractéristique d'une ou plusieurs substances dans un mélange de substances, dans lequel des impulsions de rayonnement, notamment des impulsions laser, alternant avec au moins une longueur d'onde caractéristique d'une substance à mesurer et avec une longueur d'onde non caractéristique de cette dernière, parcourent un trajet de mesure (5) dans lequel se trouve le mélange de substances et un trajet de référence (6) sans mélange de substances et sans cuvette d'étalonnage et sont ensuite converties en signaux électriques (12, 22, 13, 23, 14, 24), caractérisé en ce que
◆ un signal différentiel (160 ; 260) est formé à partir du signal de trajet de mesure (13 ; 14) et du signal de trajet de référence (23 ; 24) ; et
◆ la valeur mesurée est formée à partir de la différence de niveau (792) du signal différentiel (160 ; 260) au moment (922) du maximum de l'impulsion de signal caractéristique (762) et au moment (921) du maximum de l'impulsion de signal non caractéristique (761).

2. Procédé selon la revendication 1, caractérisé en ce que le signal différentiel (160 ; 260) est soumis avant l'extraction de la valeur mesurée à une discrimination temporelle (133, 134 ; 233, 234) et/ou fréquentielle (132 ; 232) ainsi qu'à une estimation (135) et si nécessaire à une correction.

3. Procédé selon la revendication 1 ou la revendication 2, caractérisé en ce que les signaux électriques (12, 22) sont estimés avant la poursuite de l'élaboration de la valeur mesurée et corrigés s'ils s'écartent de valeurs théoriques prédéterminées.

4. Procédé selon l'une quelconque des revendications précédentes, caractérisé en ce que la paire de signaux de trajet de référence et de trajet de mesure (12, 22) est divisée en un nombre de paires de signaux (13, 23 ; 14, 24) correspondant au nombre de longueurs d'ondes caractéristiques utilisées et composées à chaque fois de deux impulsions de signal tirant respectivement leur origine des impulsions lumineuses aux longueurs d'ondes caractéristique et non caractéristique (impulsion de signal caractéristique et non caractéristique).

5. Procédé selon l'une quelconque des revendications précédentes, caractérisé en ce que le signal est divisé de telle sorte qu'au moins un signal de trajet d'étalonnage (32 ; 42) et le signal de référence (22) sont envoyés à une stabilisation de la source de rayonnement, notamment une stabilisation de laser, et une paire de signaux composée de signaux de trajet de référence et de trajet de mesure (12, 22) est soumise à une estimation et le cas échéant à une correction.

6. Procédé selon l'une quelconque des revendications précédentes, caractérisé en ce que la concentration d'une substance provoquant des sensibilités transversales est déterminée au moyen d'impulsions de rayonnement d'une longueur d'onde caractéristique de cette substance et utilisée pour corriger la valeur de mesure.

7. Procédé selon l'une quelconque des revendications précédentes, dans lequel les impulsions de rayonnement, notamment des impulsions laser, parcourent également au moins un trajet d'étalonnage (7 ; 8) et sont ensuite converties en signaux électriques de trajet d'étalonnage et, afin de stabiliser la source de rayonnement, les signaux de trajet de référence et de trajet d'étalonnage (22, 32, 42) sont échantillonnés de manière sélective dans le temps pour déterminer la loi de signal, la relation de phase, la valeur maximale et la valeur moyenne de ces deux signaux par période de signal.

8. Procédé selon la revendication 7, caractérisé en ce que la source de rayonnement (1) est d'abord excitée par un signal quelconque (52) qui est modifié jusqu'à ce qu'un niveau de signal approprié s'établisse dans le trajet de référence et que la forme d'onde et la relation de phase du signal de trajet de référence obtenues au moyen de circuits échantillonneurs bloqueurs correspondent au signal de rayonnement souhaité.

9. Procédé selon la revendication 7 ou la revendication 8, caractérisé en ce que la longueur d'onde d'émission de la source de rayonnement (1) est déterminée de manière répétitive par échantillonnage des signaux de trajet d'étalonnage (32, 42) au moyen de circuits échantillonneurs bloqueurs et si nécessaire de nouveau corrigée.

10. Procédé selon l'une quelconque des revendications 1 à 6, dans lequel les impulsions de rayonnement parcourent également au moins un trajet d'étalonnage (7 ; 8) et sont ensuite converties en signaux électriques de trajet d'étalonnage et les signaux électriques de trajet de référence et de trajet d'étalonnage sont décomposés par analyse de Fourier en leurs composantes de signal spectrales et dans lequel, pour stabiliser la source de rayonnement, il est prévu une boucle de régulation qui ajuste le spectre du signal de référence en désaccordant le laser (1) de telle sorte que les composantes de Fourier impaires atteignent un minimum et les composantes de Fourier paires atteignent un maximum et que, dans le spectre du signal de trajet d'étalonnage, les composantes de Fourier impaires atteignent un maximum et les composantes de Fourier paires atteignent un minimum.

11. Dispositif d'évaluation d'une absorbance caractéristique d'une ou plusieurs substances dans un mélange de substances, dans lequel des impulsions de rayonnement, notamment des impulsions laser, alternant avec une longueur d'onde caractéristique d'une substance à mesurer et avec une longueur d'onde non caractéristique de cette dernière, parcourent un trajet de mesure (5) dans lequel se trouve le mélange de substances et un trajet de référence (6) sans mélange de substances et sans cuvette d'étalonnage et sont ensuite converties en signaux électriques (12, 22, 13, 23, 14, 24) au moyen de détecteurs (10, 20, 30, 40), caractérisé en ce qu'il comprend :
◆ un soustracteur (130 ; 230) pour former un signal différentiel (160 ; 260) à partir du signal de trajet de mesure (13 ; 14) et du signal du trajet de référence (23 ; 24) ; et
◆ un dispositif d'évaluation avec un dispositif de formation de la valeur mesurée (505 ; 506) pour former la valeur mesurée à partir de la différence de niveau (792) du signal différentiel (160 ; 260) au moment (922) du maximum de l'impulsion de signal caractéristique (762) et au moment (921) du maximum d'un signal d'impulsion non caractéristique (761).

12. Dispositif selon la revendication 11, caractérisé en ce qu'il comprend, placé en amont du dispositif de formation de la valeur mesurée (505 ; 506), un dispositif d'estimation et de correction (504) pour comparer les signaux électriques, notamment les signaux de trajet de mesure et de trajet de référence (12, 22) à des valeurs théoriques et le cas échéant corriger les signaux électriques.

13. Dispositif selon la revendication 11 ou la revendication 12, caractérisé en ce qu'au moins deux circuits échantillonneurs bloqueurs (133, 134 ; 233, 234) sont placés en aval du soustracteur (130 ; 230) afin d'échantillonner le signal différentiel (160 ; 260) au milieu de l'impulsion de signal caractéristique et au milieu de l'impulsion de signal non caractéristique et en ce qu'il est prévu un autre soustracteur (138 ; 238) pour former la différence de niveau du signal différentiel (160 ; 260) au moment du maximum de l'impulsion de signal caractéristique et au moment du maximum de l'impulsion de signal non caractéristique.

14. Dispositif selon l'une quelconque des revendications 11 à 13, caractérisé en ce que les impulsions de rayonnement parcourent également un trajet d'étalonnage (7 ; 8) et sont ensuite converties en signaux d'étalonnage (32 ; 42) et, pour stabiliser la source de rayonnement, il est prévu un dispositif de traitement du signal (502) avec des circuits redresseurs et échantillonneurs bloqueurs qui échantillonnent les signaux de trajet de référence et de trajet d'étalonnage (22, 32, 42) à un moment prédéfini afin de déterminer la forme d'onde, la relation de phase, la valeur maximum et la valeur moyenne par période de signal.
